# EUROPEAN PATENT APPLICATION

(11) **EP 4 801 139 A1**
(43) Date of publication of application: **02.09.2026**
(21) Application number: 24890111.8
(22) Date of filing: 26.06.2024
(51) Int. Cl.: H04W 72/04, H04J 13/00

(54) **COMMUNICATION METHOD AND COMMUNICATION APPARATUS**

(30) Priority: 13.11.2023 CN 202311515203
(71) Applicant: Huawei Technologies Co., Ltd., Shenzhen, Guangdong 518129 (CN)
(72) Inventor: FENG, Qi, Shenzhen, Guangdong 518129 (CN); WANG, Fan, Shenzhen, Guangdong 518129 (CN)
(74) Representative: Goddar, Heinz J.
(86) International application number: PCT/CN2024/101474
(87) International publication number: WO 2025/102742

(57) **Abstract**

A communication method and a communication apparatus are provided. The method includes: determining a first physical sequence number based on a first logical sequence number and a first mapping relationship (S310); and sending a first sequence, where the first sequence is determined based on the first physical sequence number (S320). The first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to a plurality of consecutive physical sequence numbers is less than or equal to a first threshold, and the logical sequence number indicates a position index of the physical sequence number. In this way, a sequence capacity can be increased, sequence resource configuration efficiency can be improved, and transmission requirements of a terminal device can be met.

## Description

This application claims priority to Chinese Patent Application No. 202311515203.X, filed with the China National Intellectual Property Administration on November 13, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In communication systems, Alltop sequences, Zadoff-Chu sequences (ZC sequence for short), and Zadoff-Chu Cover Alltop sequences are commonly used communication sequences. The ZC sequences are used as an example. In an uplink random access procedure, a base station configures a start sequence number via a broadcast signal, and a terminal device sequentially determines 64 ZC sequences according to a principle of "exhausting cyclic shifts first and then traversing sequence numbers", and selects one ZC sequence from the 64 ZC sequences for random access. To enhance robustness against Doppler frequency shifts, cyclic shifts applied to the ZC sequence may be restricted. However, a capacity of the ZC sequence may be limited. Particularly, when the terminal device is located in a cell with a large radius and/or is moving at a high speed, the efficiency of sequence resource configuration is low, and transmission requirements of the terminal device may not be met.

### SUMMARY

Embodiments of this application provide a communication method and a communication apparatus, which can increase a sequence capacity and improve sequence resource configuration efficiency.

According to a first aspect, a communication method is provided. The method may be performed by a first apparatus, or may be performed by a chip or a circuit of the first apparatus. This is not limited in this application. For ease of description, the following uses an example in which the method is performed by the first apparatus for description. The first apparatus may be a terminal device, may be a chip, a chip system, a circuit, or the like in a terminal device, or may be a functional module or the like that is in a terminal device and that can invoke and execute a program.

The method includes: determining a first physical sequence number based on a first logical sequence number and a first mapping relationship, where the first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to *M* consecutive physical sequence numbers is less than or equal to a first threshold, the logical sequence number indicates a position index of the physical sequence number, and *M* is greater than or equal to 1; and sending a first sequence, where the first sequence is determined based on the first physical sequence number.

In an implementation, sending the first sequence may be: The first apparatus sends the first sequence to a second apparatus. For example, the first apparatus and the second apparatus may both be included in a terminal device, or both be included in a network device. In this case, it indicates that the first apparatus sending the first sequence to the second apparatus is an internal operation. For another example, the first apparatus may be a terminal device or an apparatus in a terminal device (for example, a chip, a chip system, or a circuit of the terminal device), and the second apparatus may be a network device or an apparatus in a network device (for example, a chip, a chip system, or a circuit of the network device). In this case, it indicates that the first apparatus sending the first sequence to the second apparatus is an external operation.

According to the solution provided in this application, the first apparatus may determine, based on the first mapping relationship, the correspondence between the logical sequence number and the physical sequence number of the cubic polynomial exponential sequence, that is, may uniquely determine the corresponding first physical sequence number based on the first logical sequence number, and may determine a plurality of cubic polynomial exponential sequences based on the first physical sequence number. The first sequence (namely, the cubic polynomial exponential sequence) is an exponential sequence randomly determined from the plurality of cubic polynomial exponential sequences, and uplink random access is completed by sending the first sequence, to implement synchronous communication. Compared with an existing communication sequence, a sequence capacity of the cubic polynomial exponential sequence is increased, so that resistance to a Doppler frequency shift of more subcarrier spacings can be supported, sequence resource configuration efficiency can be improved, and transmission requirements of more first apparatuses (for example, terminal devices) can be met.

In this application, that the cubic term coefficient of the cubic polynomial exponential sequence corresponding to each physical sequence number is the same may be understood as: Each physical sequence number corresponds to one cubic term coefficient, and the cubic term coefficient may correspond to one or more cubic polynomial exponential sequences. That is, cubic term coefficients of a plurality of cubic polynomial exponential sequences may be the same, and quadratic term coefficients and/or linear term coefficients of the plurality of cubic polynomial exponential sequences may be the same or different.

It should be understood that the cross-ambiguity function (cross-ambiguity function, CAF) is a function obtained by performing ambiguity processing on two signals and then performing a correlation operation on processed signals. That the maximum value of the cross-ambiguity function is less than or equal to the first threshold indicates that a value of a cross-ambiguity function of any two cubic polynomial exponential sequences is less than or equal to the first threshold, that is, an estimated deviation value between any two cubic polynomial exponential sequences is less than or equal to the first threshold. That the maximum value of the cross-ambiguity function of the cubic polynomial exponential sequences corresponding to the *M* consecutive physical sequence numbers is less than or equal to the first threshold may be understood as: When *M* is equal to 1, it indicates that a maximum value of a cross-ambiguity function of any two of a plurality of cubic polynomial exponential sequences corresponding to one physical sequence number is less than or equal to the first threshold; or when *M* is greater than 1, for example, *M* is equal to 2, it indicates that a maximum value of a cross-ambiguity function of any two of cubic polynomial exponential sequences corresponding to two consecutive physical sequence numbers is less than or equal to the first threshold.

Optionally, the first threshold may be configured or preconfigured. For example, the first threshold *δ* may satisfy: $\sqrt{N} \leq δ \leq 2 \sqrt{N}$

*N* is a sequence length of the cubic polynomial exponential sequence, and *N* is a prime number.

In this application, a configuration may be a signaling configuration, or may be described as configuration signaling. For example, the signaling configuration may be configured by the second apparatus (for example, the network device) by sending signaling. The signaling may be a radio resource control (radio resource control, RRC) message, downlink control information (downlink control information, DCI), or a system information block (system information block, SIB). For another example, the signaling configuration may be sent to the first apparatus (for example, the terminal device) through preconfigured signaling, or configured for the first apparatus (for example, the terminal device) in a preconfiguration manner. Herein, the preconfiguration is defining or configuring a value of a corresponding parameter in advance in a protocol manner, where the value of the corresponding parameter may be stored in the first apparatus (for example, the terminal device) during communication with the first apparatus (for example, the terminal device). This is not limited in this application.

In this application, that the logical sequence number indicates the position index of the physical sequence number may be understood as: A logical sequence number #a is a position index of a physical sequence number #a in all physical sequence numbers, where the logical sequence number #a corresponds to the physical sequence number #a. It should be noted that, in this application, there may be two or more same physical sequence numbers, and logical sequence numbers that are in one-to-one correspondence with the two or more same physical sequence numbers are different from each other. In other words, each physical sequence number corresponds to one logical sequence number, that is, a corresponding physical sequence number may be uniquely determined based on a logical sequence number.

Optionally, the first mapping relationship may be predefined. Predefinition may include advance definition, for example, definition in a protocol. Alternatively, the first mapping relationship is configured or preconfigured. Preconfiguration may be implemented by pre-storing corresponding code or a corresponding table in the first apparatus (for example, the terminal device) or the second apparatus (for example, the network device), or may be implemented in another manner that may indicate related information. A specific implementation of the first mapping relationship is not limited in this application.

Optionally, the first mapping relationship may exist, for example, is stored or transmitted, in a form of a table, a function, text, a character string, or the like.

Optionally, the method further includes: The second apparatus indicates the first logical sequence number to the first apparatus. For example, the first logical sequence number may be sent by the second apparatus (for example, the network device) through broadcast information, or may be sent by the second apparatus to the first apparatus through specific signaling (for example, the RRC, the DCI, or the SIB). Correspondingly, the first apparatus determines the first physical sequence number based on the first logical sequence number and the first mapping relationship.

It should be understood that, that the first sequence is determined based on the first physical sequence number may be understood as: The first apparatus (for example, the terminal device) sequentially determines 64 cubic polynomial exponential sequences based on the first physical sequence number, and randomly selects one cubic polynomial exponential sequence from the 64 cubic polynomial exponential sequences for access. The randomly selected cubic polynomial exponential sequence is the first sequence. Then, the first apparatus (for example, the terminal device) sends the first sequence to the second apparatus (for example, the network device). Correspondingly, the second apparatus (for example, the network device) performs blind detection on the 64 cubic polynomial exponential sequences, determines the first sequence, and determines a round-trip time and/or a Doppler frequency shift.

Optionally, the first sequence may be further used in a sensing process of the first apparatus (for example, the terminal device) and/or the second apparatus (for example, the network device). Optionally, the first apparatus sends a cubic polynomial exponential sequence, and receives an echo of the cubic polynomial exponential sequence. The first apparatus determines a round-trip time and a Doppler frequency shift of a sensing target, to obtain a distance and a moving speed of the sensing target. For another example, the first apparatus sends a cubic polynomial exponential sequence, and the second apparatus receives the cubic polynomial exponential sequence. Then, the second apparatus determines a delay and a Doppler frequency shift of a sensing target, to obtain a distance and a moving speed of the sensing target.

It should be understood that embodiments of this application are applicable to any communication scenario in which a transmitter device communicates with a receiver device. In other words, embodiments of this application are applicable to uplink communication scenarios, downlink communication scenarios, relay link communication scenarios, or sidelink communication scenarios. For example, uplink communication is communication between a terminal device and a network device, downlink communication is communication between a network device and a terminal device, and sidelink communication is communication between terminal devices. Therefore, the first apparatus or the second apparatus may be a network device or a terminal device, or may be a chip, a chip system, or a circuit in a network device or a terminal device. This is not limited in this application.

In embodiments of this application, sending the first sequence may be: The first apparatus sends the first sequence to the second apparatus. For example, the first apparatus and the second apparatus may both be included in a terminal device, or both be included in a network device. In this case, it indicates that the first apparatus sending the first sequence to the second apparatus is an internal operation. For another example, the first apparatus may be a terminal device or an apparatus in a terminal device (for example, a chip, a chip system, or a circuit of the terminal device), and the second apparatus may be a network device or an apparatus in a network device (for example, a chip, a chip system, or a circuit of the network device). In this case, it indicates that the first apparatus sending the first sequence to the second apparatus is an external operation.

In some implementations of the first aspect, a cubic polynomial exponential sequence belongs to a first cubic metric group or a second cubic metric group, a cubic metric of each cubic polynomial exponential sequence in the first cubic metric group is less than or equal to a first cubic metric, and a cubic metric of each cubic polynomial exponential sequence in the second cubic metric group is greater than the first cubic metric. The first cubic metric group includes one or more first subgroups, where the plurality of first subgroups are determined based on a maximum value of a cross-ambiguity function of cubic polynomial exponential sequences in the first cubic metric group, the plurality of first subgroups are arranged in ascending order of cubic metrics of corresponding cubic polynomial exponential sequences, each first subgroup corresponds to one or more cubic term coefficients, and a plurality of cubic term coefficients corresponding to a last first subgroup through a 1^{st} first subgroup are alternately arranged in ascending or descending order of the cubic metrics of the cubic polynomial exponential sequences. The second cubic metric group includes one or more second subgroups, where the plurality of second subgroups are determined based on a maximum value of a cross-ambiguity function of cubic polynomial exponential sequences in the second cubic metric group, the plurality of second subgroups are arranged in ascending order of cubic metrics of corresponding cubic polynomial exponential sequences, each second subgroup corresponds to one or more cubic term coefficients, and a plurality of cubic term coefficients corresponding to a 1^{st} second subgroup through a last second subgroup are alternately arranged in ascending or descending order of the cubic metrics of the cubic polynomial exponential sequences.

Optionally, the first cubic metric may be configured or preconfigured. For example, the first cubic metric CM = 1.2 dB, or may be another value. The first cubic metric group may be referred to as a low cubic metric group, and the second cubic metric group may be referred to as a high cubic metric group. It should be understood that the low cubic metric group and the high cubic metric group are relative. This is not limited in this application.

Optionally, the first subgroup may be referred to as a first set, which represents one or more first sets to which all cubic polynomial exponential sequences in the first cubic metric group belong after division. Similarly, the second subgroup may be referred to as a second set, which represents one or more second sets to which all cubic polynomial exponential sequences in the second cubic metric group belong after division. For ease of description, the first subgroup and the second subgroup are used as examples for description in this application.

In some implementations of the first aspect, one or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

Based on this implementation, a general division method for cubic polynomial exponential sequences is provided, so that a maximum value of a cross-ambiguity function of adjacent cubic polynomial exponential sequences is less than or equal to the first threshold, and cubic metrics of the adjacent cubic polynomial exponential sequences do not jump, to ensure a detection probability of a random access signal and efficiency of a power amplifier.

In some implementations of the first aspect, cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$. Cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

For example, the first cubic metric group includes Ω_{L} first subgroups, the Ω_{L} first subgroups are in one-to-one correspondence with Ω_{L} cubic term coefficients, the Ω_{L} cubic term coefficients are arranged in ascending order of cubic metrics of corresponding cubic polynomial exponential sequences, a maximum value of a cross-ambiguity function of cubic polynomial exponential sequences in each first subgroup is less than or equal to $\sqrt{N}$, a maximum value of a cross-ambiguity function of cubic polynomial exponential sequences from any two adjacent first subgroups is less than or equal to $2 \sqrt{N}$, and Ω_{L} is an integer greater than or equal to 1. The second cubic metric group includes Ω_{H} second subgroups, the Ω_{H} second subgroups are in one-to-one correspondence with Ω_{H} cubic term coefficients, the Ω_{H} cubic term coefficients are arranged in ascending order of cubic metrics of corresponding cubic polynomial exponential sequences, a maximum value of a cross-ambiguity function of cubic polynomial exponential sequences in each second subgroup is less than or equal to $\sqrt{N}$, a maximum value of a cross-ambiguity function of cubic polynomial exponential sequences from any two adjacent second subgroups is less than or equal to $2 \sqrt{N}$, and Ω_{H} is an integer greater than or equal to 1.

Based on this implementation, all cubic polynomial exponential sequences in each first subgroup or each second subgroup correspond to a same cubic term coefficient, so that the implementation is simple, and configuration efficiency is high.

In some implementations of the first aspect, each first subgroup includes one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$. Each second subgroup includes one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

For example, the first cubic metric group includes *P* first subgroups, each of the *P* first subgroups corresponds to Θ cubic term coefficients, Θ cubic term coefficients corresponding to a *P*^{th} first subgroup are arranged in ascending order of cubic metrics of cubic polynomial exponential sequences, Θ cubic term coefficients corresponding to each of the *P*^{th} first subgroup to a 1^{st} first subgroup are alternately arranged in ascending or descending order of cubic metrics of cubic polynomial exponential sequences, a maximum value of a cross-ambiguity function of cubic polynomial exponential sequences in each first subgroup is less than or equal to *δ*, and a maximum value of a cross-ambiguity function of cubic polynomial exponential sequences from any two adjacent first subgroups is less than or equal to $2 \sqrt{N}$, where *P* is an integer greater than or equal to 1. The second cubic metric group includes *Q* second subgroups, each of the *Q* second subgroups corresponds to Φ cubic term coefficients, Φ cubic term coefficients corresponding to a 1^{st} second subgroup are arranged in ascending order of cubic metrics of cubic polynomial exponential sequences, Φ cubic term coefficients corresponding to each of the 1^{st} first subgroup to a *Q*^{th} second subgroup are alternately arranged in ascending or descending order of cubic metrics of cubic polynomial exponential sequences, a maximum value of a cross-ambiguity function of cubic polynomial exponential sequences in each second subgroup is less than or equal to *δ*, and a maximum value of a cross-ambiguity function of cubic polynomial exponential sequences from any two adjacent second subgroups is less than or equal to $2 \sqrt{N}$, where *Q* is an integer greater than or equal to 1, and *δ* is the first threshold.

Based on this implementation, each first subgroup or each second subgroup includes cubic polynomial exponential sequences corresponding to one or more cubic term coefficients, a cross-ambiguity function of the cubic polynomial exponential sequences is small, and fluctuation of a cubic metric is small, thereby improving a detection probability of a random access signal and efficiency of a power amplifier. That is, *x* cubic polynomial exponential sequences in each subgroup may correspond to *y* different cubic term coefficients, where *x* is less than or equal to *y*, and *x* and *y* are positive integers.

In some implementations of the first aspect, all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$. All cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$*.*

For example, one first subgroup corresponds to Ω_{L} cubic term coefficients, the Ω_{L} cubic term coefficients are arranged in ascending order of cubic metrics of cubic polynomial exponential sequences, and a maximum value of a cross-ambiguity function of cubic polynomial exponential sequences from any two adjacent first subgroups is less than or equal to $2 \sqrt{N}$, where Ω_{L} is an integer greater than 1. One second subgroup corresponds to Ω_{H} cubic term coefficients, the Ω_{H} cubic term coefficients are arranged in ascending order of cubic metrics of cubic polynomial exponential sequences, and a maximum value of a cross-ambiguity function of cubic polynomial exponential sequences from any two adjacent second subgroups is less than or equal to $2 \sqrt{N}$, where Ω_{H} is an integer greater than 1.

Based on this implementation, all cubic polynomial exponential sequences in the first cubic metric group or the second cubic metric group correspond to a same subgroup, and cubic term coefficients in each subgroup monotonically increase based on cubic metrics of corresponding cubic polynomial exponential sequences, so that the implementation is simple, and efficiency of a power amplifier of a terminal is high.

In some implementations of the first aspect, the cubic polynomial exponential sequence is expressed as: ${s}_{a , b , c , d} \left(n\right) = {e}^{- j 2 π \left({an}^{3}+{bn}^{2}+cn+d\right) / N}$

*a* is a cubic term coefficient of the cubic polynomial exponential sequence, *b* is a quadratic term coefficient of the cubic polynomial exponential sequence, *c* is a linear term coefficient of the cubic polynomial exponential sequence, *d* is a constant term of the cubic polynomial exponential sequence, *N* is a sequence length of the cubic polynomial exponential sequence, *N* is a prime number, and *n* E {0, 1, ... , *N* - 1}.

In some implementations of the first aspect, the cubic term coefficient *a* of the cubic polynomial exponential sequence is associated with the quadratic term coefficient *b* of the cubic polynomial exponential sequence, specifically including: For the cubic term coefficient *a* of the cubic polynomial exponential sequence, if *a* E {1, 2, ... , *N* - 1}, the quadratic term coefficient *b* of the cubic polynomial exponential sequence is equal to 3*ak*Δ_{T}, and the linear term coefficient *c* of the cubic polynomial exponential sequence is equal to *l*Δ_{F}, where $k ∈ \left\{0,1,…,\left⌊N/{Δ}_{T}\right⌋-1\right\}$, $l ∈ \left\{0,1,…,\left⌊N/{Δ}_{F}\right⌋-1\right\}$, Δ_{T} is a maximum round-trip time, and Δ_{F} is a maximum Doppler frequency shift.

In some implementations of the first aspect, when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N}$

*a = λ*, *b =* 3*λk*Δ_{T}, *c = l*Δ_{F}, *d* = 0, *λ* E {1, 2, ... , *N* - 1}, $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

In some implementations of the first aspect, when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N}$

*a = λ, b =* 3*λk*Δ_{F}, *c = l*Δ_{T}, *d* = 0, *λ* ∈ {1, 2, *... , N* - 1}, $k ∈ \left\{0,1,…,\left⌊N/{Δ}_{F}\right⌋-1\right\} , l ∈ \left\{0,1,…,\left⌊N/{Δ}_{T}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

According to the foregoing solution, the first apparatus may map the first sequence (namely, the cubic polynomial exponential sequence) to a time domain resource or a frequency domain resource, and then send the first sequence to the second apparatus. In other words, a specific implementation in which the first apparatus sends the first sequence is not limited in this application.

In some implementations of the first aspect, a sequence capacity of the cubic polynomial exponential sequence is positively correlated with a cube of the sequence length *N* of the cubic polynomial exponential sequence. The sequence capacity of the cubic polynomial exponential sequence is $\left(N-1\right) ⋅ \left⌊N/{Δ}_{T}\right⌋ ⋅ \left⌊N/{Δ}_{F}\right⌋$, where *N* is a prime number, Δ_{T} is a maximum round-trip time, Δ_{F} is a maximum Doppler frequency shift, and └ ┘ represents rounding down.

Based on this implementation, the sequence capacity of the cubic polynomial exponential sequence is positively correlated with the cube of the sequence length *N* of the cubic polynomial exponential sequence. This indicates that a larger sequence length of the cubic polynomial exponential sequence indicates a larger sequence capacity of the cubic polynomial exponential sequence, so that resistance to a Doppler frequency shift of more subcarrier spacings can be supported, sequence resource configuration efficiency can be improved, and transmission requirements of more terminal devices can be met.

In some implementations of the first aspect, for ∀*τ* ∈ [0, Δ_{T} - 1], ∀*ν* ∈ [0, Δ_{F} - 1], a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all zero, where *τ* is a round-trip time, *ν* is a Doppler frequency shift, Δ_{T} is a maximum round-trip time, and Δ_{F} is a maximum Doppler frequency shift.

According to the foregoing solution, when the cubic term coefficient of the ambiguity function of the cubic polynomial exponential sequence, the quadratic term coefficient of the ambiguity function of the cubic polynomial exponential sequence, and the linear term coefficient of the ambiguity function of the cubic polynomial exponential sequence are not all zero, it may be determined that the ambiguity function of the cubic polynomial exponential sequence does not exhibit a peak value of *N* in an ambiguity zone, that is, a maximum value of the ambiguity function of the cubic polynomial exponential sequence in the ambiguity zone does not exceed $2 \sqrt{N}$. When the sequence length of the cubic polynomial exponential sequence is long enough (for example, *N* = 839), *N* is much greater than $2 \sqrt{N}$. That is, it may be ensured that the maximum value of the ambiguity function in the ambiguity zone is small, provided that the peak value of the ambiguity function is excluded from the ambiguity zone.

In some implementations of the first aspect, a radius of a cell in which a terminal device is located is 0 to *c*(Δ_{T} - 1)*Tₛ*/2, where *c* represents the speed of light, *T*ₛ represents a symbol time interval, and Δ_{T} is a maximum round-trip time.

In some implementations of the first aspect, a moving speed range of the terminal device is from - *c*(Δ_{F} - 1)Δ*f*/4*f_{c}* to *c*(Δ_{F} - 1)Δ*f*/4*f_{c}*, where *c* represents the speed of light, *f_{c}* represents a carrier frequency, Δ*f* represents a subcarrier spacing, and Δ_{F} is a maximum Doppler frequency shift.

According to a second aspect, a communication method is provided. The method may be performed by a second apparatus, or may be performed by a chip or a circuit of the second apparatus. This is not limited in this application. For ease of description, the following uses an example in which the method is performed by the second apparatus for description. The second apparatus may be a network device, may be a chip, a chip system, a circuit, or the like in a network device, or may be a functional module or the like that is in a network device and that can invoke and execute a program.

The method includes: determining a first physical sequence number based on a first logical sequence number and a first mapping relationship, where the first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to *M* consecutive physical sequence numbers is less than or equal to a first threshold, the logical sequence number indicates a position index of the physical sequence number, and *M* is greater than or equal to 1; and receiving a first sequence, where the first sequence is determined based on the first physical sequence number.

In an implementation, receiving the first sequence may be: The second apparatus receives the first sequence from a first apparatus. For example, the first apparatus and the second apparatus may both be included in a terminal device, or both be included in a network device. In this case, it indicates that the second apparatus receiving the first sequence from the first apparatus is an internal operation. For another example, the first apparatus may be a terminal device or an apparatus in a terminal device (for example, a chip, a chip system, or a circuit of the terminal device), and the second apparatus may be a network device or an apparatus in a network device (for example, a chip, a chip system, or a circuit of the network device). In this case, it indicates that the second apparatus receiving the first sequence from the first apparatus is an external operation.

According to the solution provided in this application, the second apparatus may determine, based on the first mapping relationship, the correspondence between the logical sequence number and the physical sequence number of the cubic polynomial exponential sequence, that is, may uniquely determine the corresponding first physical sequence number based on the first logical sequence number, and may determine a plurality of cubic polynomial exponential sequences based on the first physical sequence number. The first sequence (namely, the cubic polynomial exponential sequence) is an exponential sequence randomly determined from the plurality of cubic polynomial exponential sequences, and synchronous communication with the first apparatus is implemented by receiving the first sequence. Compared with an existing communication sequence, a sequence capacity of the cubic polynomial exponential sequence is increased, so that resistance to a Doppler frequency shift of more subcarrier spacings can be supported, sequence resource configuration efficiency can be improved, and transmission requirements of more first apparatuses (for example, terminal devices) can be met.

In some implementations of the second aspect, a cubic polynomial exponential sequence belongs to a first cubic metric group or a second cubic metric group, a cubic metric of each cubic polynomial exponential sequence in the first cubic metric group is less than or equal to a first cubic metric, and a cubic metric of each cubic polynomial exponential sequence in the second cubic metric group is greater than the first cubic metric. The first cubic metric group includes one or more first subgroups, where the plurality of first subgroups are determined based on a maximum value of a cross-ambiguity function of cubic polynomial exponential sequences in the first cubic metric group, the plurality of first subgroups are arranged in ascending order of cubic metrics of corresponding cubic polynomial exponential sequences, each first subgroup corresponds to one or more cubic term coefficients, and a plurality of cubic term coefficients corresponding to a last first subgroup through a 1^{st} first subgroup are alternately arranged in ascending or descending order of the cubic metrics of the cubic polynomial exponential sequences. The second cubic metric group includes one or more second subgroups, where the plurality of second subgroups are determined based on a maximum value of a cross-ambiguity function of cubic polynomial exponential sequences in the second cubic metric group, the plurality of second subgroups are arranged in ascending order of cubic metrics of corresponding cubic polynomial exponential sequences, each second subgroup corresponds to one or more cubic term coefficients, and a plurality of cubic term coefficients corresponding to a 1^{st} second subgroup through a last second subgroup are alternately arranged in ascending or descending order of the cubic metrics of the cubic polynomial exponential sequences.

In some implementations of the second aspect, one or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

In some implementations of the second aspect, cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$. Cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

For example, the first cubic metric group includes Ω_{L} first subgroups, the Ω_{L} first subgroups are in one-to-one correspondence with Ω_{L} cubic term coefficients, the Ω_{L} cubic term coefficients are arranged in ascending order of cubic metrics of corresponding cubic polynomial exponential sequences, a maximum value of a cross-ambiguity function of cubic polynomial exponential sequences in each first subgroup is less than or equal to $\sqrt{N}$, a maximum value of a cross-ambiguity function of cubic polynomial exponential sequences from any two adjacent first subgroups is less than or equal to $2 \sqrt{N}$, and Ω_{L} is an integer greater than or equal to 1. The second cubic metric group includes Ω_{H} second subgroups, the Ω_{H} second subgroups are in one-to-one correspondence with Ω_{H} cubic term coefficients, the Ω_{H} cubic term coefficients are arranged in ascending order of cubic metrics of corresponding cubic polynomial exponential sequences, a maximum value of a cross-ambiguity function of cubic polynomial exponential sequences in each second subgroup is less than or equal to $\sqrt{N}$, a maximum value of a cross-ambiguity function of cubic polynomial exponential sequences from any two adjacent second subgroups is less than or equal to $2 \sqrt{N}$, and Ω_{H} is an integer greater than or equal to 1.

In some implementations of the second aspect, each first subgroup includes one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$. Each second subgroup includes one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

For example, the first cubic metric group includes *P* first subgroups, each of the *P* first subgroups corresponds to Θ cubic term coefficients, Θ cubic term coefficients corresponding to a *P*^{th} first subgroup are arranged in ascending order of cubic metrics of cubic polynomial exponential sequences, Θ cubic term coefficients corresponding to each of the *P*^{th} first subgroup to a 1^{st} first subgroup are alternately arranged in ascending or descending order of cubic metrics of cubic polynomial exponential sequences, a maximum value of a cross-ambiguity function of cubic polynomial exponential sequences in each first subgroup is less than or equal to *δ*, and a maximum value of a cross-ambiguity function of cubic polynomial exponential sequences from any two adjacent first subgroups is less than or equal to $2 \sqrt{N}$, where *P* is an integer greater than or equal to 1. The second cubic metric group includes *Q* second subgroups, each of the *Q* second subgroups corresponds to Φ cubic term coefficients, Φ cubic term coefficients corresponding to a 1^{st} second subgroup are arranged in ascending order of cubic metrics of cubic polynomial exponential sequences, Φ cubic term coefficients corresponding to each of the 1^{st} first subgroup to a *Q*^{th} second subgroup are alternately arranged in ascending or descending order of cubic metrics of cubic polynomial exponential sequences, a maximum value of a cross-ambiguity function of cubic polynomial exponential sequences in each second subgroup is less than or equal to *δ*, and a maximum value of a cross-ambiguity function of cubic polynomial exponential sequences from any two adjacent second subgroups is less than or equal to $2 \sqrt{N}$, where *Q* is an integer greater than or equal to 1, and *δ* is the first threshold.

In some implementations of the second aspect, all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$. All cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

For example, one first subgroup corresponds to Ω_{L} cubic term coefficients, the Ω_{L} cubic term coefficients are arranged in ascending order of cubic metrics of cubic polynomial exponential sequences, and a maximum value of a cross-ambiguity function of cubic polynomial exponential sequences from any two adjacent first subgroups is less than or equal to $2 \sqrt{N}$, where Ω_{L} is an integer greater than 1. One second subgroup corresponds to Ω_{H} cubic term coefficients, the Ω_{H} cubic term coefficients are arranged in ascending order of cubic metrics of cubic polynomial exponential sequences, and a maximum value of a cross-ambiguity function of cubic polynomial exponential sequences from any two adjacent second subgroups is less than or equal to $2 \sqrt{N}$, where Ω_{H} is an integer greater than 1.

In some implementations of the second aspect, the cubic polynomial exponential sequence is expressed as: ${s}_{a , b , c , d} \left(n\right) = {e}^{- j 2 π \left({an}^{3}+{bn}^{2}+cn+d\right) / N}$

*a* is a cubic term coefficient of the cubic polynomial exponential sequence, *b* is a quadratic term coefficient of the cubic polynomial exponential sequence, *c* is a linear term coefficient of the cubic polynomial exponential sequence, *d* is a constant term of the cubic polynomial exponential sequence, *N* is a sequence length of the cubic polynomial exponential sequence, *N* is a prime number, and *n* ∈ {0, 1, ... , *N* - 1}.

In some implementations of the second aspect, the cubic term coefficient *a* of the cubic polynomial exponential sequence is associated with the quadratic term coefficient *b* of the cubic polynomial exponential sequence, specifically including: For the cubic term coefficient *a* of the cubic polynomial exponential sequence, if *a* E {1, 2, *... , N -* 1} , the quadratic term coefficient b of the cubic polynomial exponential sequence is equal to 3*ak*Δ_{T}, and the linear term coefficient *c* of the cubic polynomial exponential sequence is equal to *l*Δ_{F} , where $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} is a maximum round-trip time, and Δ_{F} is a maximum Doppler frequency shift.

In some implementations of the second aspect, when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N}$

*a = λ, b =* 3*λk*Δ_{T}*, c = l*Δ_{F}, *d* = 0, *λ* E {1, 2, ... , *N* - 1}, $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

In some implementations of the second aspect, when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N}$

*a = λ*, *b =* 3*λk*Δ_{F}, *c = l*Δ_{T}*, d* = 0, *λ* E {1, 2, ... , *N* - 1}, $k ∈ \left\{0,1,…,\left⌊N/{Δ}_{F}\right⌋-1\right\} , l ∈ \left\{0,1,…,\left⌊N/{Δ}_{T}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

In some implementations of the second aspect, a sequence capacity of the cubic polynomial exponential sequence is positively correlated with a cube of the sequence length *N* of the cubic polynomial exponential sequence. The sequence capacity of the cubic polynomial exponential sequence is $\left(N-1\right) ⋅ \left⌊N/{Δ}_{T}\right⌋ ⋅ \left⌊N/{Δ}_{F}\right⌋$, where *N* is a prime number, Δ_{T} is a maximum round-trip time, Δ_{F} is a maximum Doppler frequency shift, and $\left⌊⋅\right⌋$ represents rounding down.

In some implementations of the second aspect, for ∀*τ* ∈ [0, Δ_{T} - 1], ∀*ν* E [0, Δ_{F} - 1], a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all zero, where *τ* is a round-trip time, *ν* is a Doppler frequency shift, Δ_{T} is a maximum round-trip time, and Δ_{F} is a maximum Doppler frequency shift.

In some implementations of the second aspect, a radius of a cell in which a terminal device is located is 0 to *c*(Δ_{T} - 1)*Tₛ*/2, where *c* represents the speed of light, *T*ₛ represents a symbol time interval, and Δ_{T} is a maximum round-trip time.

In some implementations of the second aspect, a moving speed range of the terminal device is from - *c*(Δ_{F} - 1)Δ*f*/4*f_{c}* to *c*(Δ_{F} - 1)Δ*f*/4*f_{c}*, where *c* represents the speed of light, *f_{c}* represents a carrier frequency, Δ*f* represents a subcarrier spacing, and Δ_{F} is a maximum Doppler frequency shift.

For beneficial effect of the second aspect and some implementations of the second aspect, correspondingly refer to the related descriptions of the first aspect. Details are not described herein again.

According to a third aspect, a communication method is provided. The method may be performed by a third apparatus, or may be performed by a chip or a circuit used in the third apparatus. This is not limited in this application. For ease of description, the following uses an example in which the method is performed by the third apparatus for description. The third apparatus may be a terminal device, may be a chip, a chip system, a circuit, or the like in a terminal device, or may be a functional module or the like that is in a terminal device and that can invoke and execute a program. Alternatively, the third apparatus may be a network device, may be a chip, a chip system, a circuit, or the like in a network device, or may be a functional module or the like that is in a network device and that can invoke and execute a program.

The method includes: classifying, based on a first cubic metric, a cubic polynomial exponential sequence into a first cubic metric group or a second cubic metric group, where a cubic metric of a cubic polynomial exponential sequence in the first cubic metric group is less than or equal to the first cubic metric, and a cubic metric of a cubic polynomial exponential sequence in the second cubic metric group is greater than the first cubic metric; based on a maximum value of a cross-ambiguity function of cubic polynomial exponential sequences, classifying the cubic polynomial exponential sequence in the first cubic metric group into one or more first subgroups, and classifying the cubic polynomial exponential sequence in the second cubic metric group into one or more second subgroups; and alternately arranging, in ascending or descending order of cubic metrics of cubic polynomial exponential sequences, a plurality of cubic term coefficients corresponding to a last first subgroup through a 1^{st} first subgroup, and alternately arranging, in ascending or descending order of cubic metrics of cubic polynomial exponential sequences, a plurality of cubic term coefficients corresponding to a 1^{st} second subgroup through a last second subgroup.

The plurality of first subgroups or the plurality of second subgroups are arranged in ascending order of cubic metrics of corresponding cubic polynomial exponential sequences, each first subgroup or each second subgroup corresponds to one or more cubic term coefficients, and a maximum value of a cross-ambiguity function of any two cubic polynomial exponential sequences in each first subgroup or each second subgroup is less than or equal to a first threshold. One or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

According to the solution provided in this application, a grouping method for cubic polynomial exponential sequences is provided. All cubic polynomial exponential sequences are divided, based on a first cubic metric, into a first cubic metric group and a second cubic metric group, and then the first cubic metric group and the second cubic metric group are separately divided into a plurality of subgroups based on a maximum value of a cross-ambiguity function of cubic polynomial exponential sequences in each cubic metric group, where cubic term coefficients in each subgroup are arranged in ascending or descending order, to ensure that cubic metrics of adjacent cubic polynomial exponential sequences do not jump, thereby improving sequence resource configuration efficiency and signal synchronization efficiency.

Optionally, the first threshold may be configured or preconfigured. For example, the first threshold *δ* may satisfy: $\sqrt{N} \leq δ \leq 2 \sqrt{N}$

*N* is a sequence length of the cubic polynomial exponential sequence, and *N* is a prime number.

Optionally, the first cubic metric may be configured or preconfigured. For example, the first cubic metric CM = 1.2 dB, or may be another value. The first cubic metric group may be referred to as a low cubic metric group, and the second cubic metric group may be referred to as a high cubic metric group. It should be understood that the low cubic metric group and the high cubic metric group are relative. This is not limited in this application.

Optionally, the first subgroup may be referred to as a first set, which represents one or more first sets to which all cubic polynomial exponential sequences in the first cubic metric group belong after division. Similarly, the second subgroup may be referred to as a second set, which represents one or more second sets to which all cubic polynomial exponential sequences in the second cubic metric group belong after division. For ease of description, the first subgroup and the second subgroup are used as examples for description in this application.

In some implementations of the third aspect, cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$. Cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

In some implementations of the third aspect, each first subgroup includes one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$. Each second subgroup includes one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

In some implementations of the third aspect, all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$. All cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

In some implementations of the third aspect, the cubic polynomial exponential sequence is expressed as: ${s}_{a , b , c , d} \left(n\right) = {e}^{- j 2 π \left({an}^{3}+{bn}^{2}+cn+d\right) / N}$

*a* is a cubic term coefficient of the cubic polynomial exponential sequence, *b* is a quadratic term coefficient of the cubic polynomial exponential sequence, *c* is a linear term coefficient of the cubic polynomial exponential sequence, *d* is a constant term of the cubic polynomial exponential sequence, *N* is a sequence length of the cubic polynomial exponential sequence, *N* is a prime number, and *n* ∈ {0, 1, ... , *N* - 1}.

In some implementations of the third aspect, the cubic term coefficient *a* of the cubic polynomial exponential sequence is associated with the quadratic term coefficient *b* of the cubic polynomial exponential sequence, specifically including: For the cubic term coefficient *a* of the cubic polynomial exponential sequence, if *a* E {1, 2, ... , *N -* 1}, the quadratic term coefficient *b* of the cubic polynomial exponential sequence is equal to 3*ak*Δ_{T}, and the linear term coefficient *c* of the cubic polynomial exponential sequence is equal to *l*Δ_{F}, where $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} is a maximum round-trip time, and Δ_{F} is a maximum Doppler frequency shift.

In some implementations of the third aspect, when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N}$

*a = λ*, *b =* 3*λk*Δ_{T}, *c = l*Δ_{F}, *d* = 0, *λ* E {1, 2, ... , *N* - 1}, $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

In some implementations of the third aspect, when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N}$

*a = λ*, *b =* 3*λk*Δ_{F}, *c = l*Δ_{T}, *d* = 0, *λ* E {1, 2, ... , *N* - 1}, $k ∈ \left\{0,1,…,\left⌊N/{Δ}_{F}\right⌋-1\right\} , l ∈ \left\{0,1,…,\left⌊N/{Δ}_{T}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

In some implementations of the third aspect, a sequence capacity of the cubic polynomial exponential sequence is positively correlated with a cube of the sequence length *N* of the cubic polynomial exponential sequence. The sequence capacity of the cubic polynomial exponential sequence is $\left(N-1\right) ⋅ \left⌊N/{Δ}_{T}\right⌋ ⋅ \left⌊N/{Δ}_{F}\right⌋$, where *N* is a prime number, Δ_{T} is a maximum round-trip time, Δ_{F} is a maximum Doppler frequency shift, and $\left⌊⋅\right⌋$ represents rounding down.

In some implementations of the third aspect, for ∀*_{τ}* E [0, Δ_{T} - 1], ∀*_{ν}* E [0, Δ_{F} - 1], a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all zero, where *τ* is a round-trip time, *ν* is a Doppler frequency shift, Δ_{T} is a maximum round-trip time, and Δ_{F} is a maximum Doppler frequency shift.

In some implementations of the third aspect, a radius of a cell in which a terminal device is located is 0 to *c*(Δ_{T} - 1)*Tₛ*/2, where *c* represents the speed of light, *T*ₛ represents a symbol time interval, and Δ_{T} is a maximum round-trip time.

In some implementations of the third aspect, a moving speed range of the terminal device is from - *c*(Δ_{F} - 1)Δ*f*/4*f*_{c} to *c*(Δ_{F} - 1)Δ*f*/4*f_{c}*, where *c* represents the speed of light, *f_{c}* represents a carrier frequency, Δ*f* represents a subcarrier spacing, and Δ_{F} is a maximum Doppler frequency shift.

For beneficial effect of the third aspect and some implementations of the third aspect, correspondingly refer to the related descriptions of the first aspect. Details are not described herein again.

According to a fourth aspect, a communication apparatus is provided. The communication apparatus may be a first apparatus, may be a module or a unit (for example, a chip, a chip system, or a circuit) that is in a first apparatus and that is configured to perform and one-to-one corresponds to the method, the operations, the steps, or the actions described in the first aspect, or may be an apparatus that can be used in conjunction with a first apparatus. The first apparatus may be a terminal device.

In a possible implementation, the communication apparatus includes a transceiver unit (or a communication module) and a processing unit (or a processing module) connected to the transceiver unit.

The processing unit is configured to determine a first physical sequence number based on a first logical sequence number and a first mapping relationship, where the first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to *M* consecutive physical sequence numbers is less than or equal to a first threshold, the logical sequence number indicates a position index of the physical sequence number, and *M* is greater than or equal to 1. The transceiver unit is configured to send a first sequence, where the first sequence is determined based on the first physical sequence number.

With reference to the fourth aspect, in some implementations of the fourth aspect, the first threshold *δ* satisfies: $\sqrt{N} \leq δ \leq 2 \sqrt{N}$

*N* is a sequence length of the cubic polynomial exponential sequence, and *N* is a prime number.

With reference to the fourth aspect, in some implementations of the fourth aspect, a cubic polynomial exponential sequence belongs to a first cubic metric group or a second cubic metric group, a cubic metric of each cubic polynomial exponential sequence in the first cubic metric group is less than or equal to a first cubic metric, and a cubic metric of each cubic polynomial exponential sequence in the second cubic metric group is greater than the first cubic metric. The first cubic metric group includes one or more first subgroups, where the plurality of first subgroups are determined based on a maximum value of a cross-ambiguity function of cubic polynomial exponential sequences in the first cubic metric group, the plurality of first subgroups are arranged in ascending order of cubic metrics of corresponding cubic polynomial exponential sequences, each first subgroup corresponds to one or more cubic term coefficients, and a plurality of cubic term coefficients corresponding to a last first subgroup through a 1^{st} first subgroup are arranged in alternating ascending or descending order of the cubic metrics of the cubic polynomial exponential sequences. The second cubic metric group includes one or more second subgroups, where the plurality of second subgroups are determined based on a maximum value of a cross-ambiguity function of cubic polynomial exponential sequences in the second cubic metric group, the plurality of second subgroups are arranged in ascending order of cubic metrics of corresponding cubic polynomial exponential sequences, each second subgroup corresponds to one or more cubic term coefficients, and a plurality of cubic term coefficients corresponding to a 1^{st} second subgroup through a last second subgroup are alternately arranged in ascending or descending order of the cubic metrics of the cubic polynomial exponential sequences.

With reference to the fourth aspect, in some implementations of the fourth aspect, one or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

With reference to the fourth aspect, in some implementations of the fourth aspect, cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$. Cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

With reference to the fourth aspect, in some implementations of the fourth aspect, each first subgroup includes one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$. Each second subgroup includes one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$*. N* is a sequence length of the cubic polynomial exponential sequence, and *N* is a prime number.

With reference to the fourth aspect, in some implementations of the fourth aspect, all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$*.* All cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

With reference to the fourth aspect, in some implementations of the fourth aspect, the cubic polynomial exponential sequence is expressed as: ${s}_{a , b , c , d} \left(n\right) = {e}^{- j 2 π \left({an}^{3}+{bn}^{2}+cn+d\right) / N}$

*a* is a cubic term coefficient of the cubic polynomial exponential sequence, *b* is a quadratic term coefficient of the cubic polynomial exponential sequence, *c* is a linear term coefficient of the cubic polynomial exponential sequence, *d* is a constant term of the cubic polynomial exponential sequence, *N* is a sequence length of the cubic polynomial exponential sequence, *N* is a prime number, and *n* ∈ {0, 1, ... , *N* - 1}.

With reference to the fourth aspect, in some implementations of the fourth aspect, the cubic term coefficient *a* of the cubic polynomial exponential sequence is associated with the quadratic term coefficient *b* of the cubic polynomial exponential sequence, specifically including: For the cubic term coefficient *a* of the cubic polynomial exponential sequence, if *a* ∈ {1, 2, ... , *N* - 1}, the quadratic term coefficient *b* of the cubic polynomial exponential sequence is equal to 3*ak*Δ_{T}, and the linear term coefficient *c* of the cubic polynomial exponential sequence is equal to *l*Δ_{F}, where $k ∈ \left\{0,1,…,\left⌊N/{Δ}_{T}\right⌋-1\right\} , l ∈ \left\{0,1,…,\left⌊N/{Δ}_{F}\right⌋-1\right\}$, Δ_{T} is a maximum round-trip time, and Δ_{F} is a maximum Doppler frequency shift.

With reference to the fourth aspect, in some implementations of the fourth aspect, when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N}$

*a* = *λ*, *b =* 3*λk*Δ_{T}, *c = l*Δ_{F}, *d* = 0, *λ* E {1, 2, ... , *N* - 1}, $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

With reference to the fourth aspect, in some implementations of the fourth aspect, when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N}$

*a = λ*, *b =* 3*λk*Δ_{F}, *c = l*Δ_{T}*, d* = 0, *λ* E {1, 2, *... , N* - 1}, $k ∈ \left\{0,1,…,\left⌊N/{Δ}_{F}\right⌋-1\right\} , l ∈ \left\{0,1,…,\left⌊N/{Δ}_{T}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

With reference to the fourth aspect, in some implementations of the fourth aspect, a sequence capacity of the cubic polynomial exponential sequence is positively correlated with a cube of the sequence length *N* of the cubic polynomial exponential sequence. The sequence capacity of the cubic polynomial exponential sequence is $\left(N-1\right) ⋅ \left⌊N/{Δ}_{T}\right⌋ ⋅ \left⌊N/{Δ}_{F}\right⌋$, where *N* is a prime number, Δ_{T} is a maximum round-trip time, Δ_{F} is a maximum Doppler frequency shift, and $\left⌊⋅\right⌋$ represents rounding down.

With reference to the fourth aspect, in some implementations of the fourth aspect, for ∀*τ* E [0, Δ_{T} - 1], ∀*ν* E [0, Δ_{F} - 1], a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all zero, where *τ* is a round-trip time, *ν* is a Doppler frequency shift, Δ_{T} is a maximum round-trip time, and Δ_{F} is a maximum Doppler frequency shift.

With reference to the fourth aspect, in some implementations of the fourth aspect, a radius of a cell in which a terminal device is located is 0 to *c*(Δ_{T} - 1)*Tₛ*/2, where *c* represents the speed of light, *T*ₛ represents a symbol time interval, and Δ_{T} is a maximum round-trip time.

With reference to the fourth aspect, in some implementations of the fourth aspect, a moving speed range of the terminal device is from - *c*(Δ_{F} - 1)Δ*f*/4*f_{c}* to *c*(Δ_{F} - 1)Δ*f*/4*f_{c}*, where *c* represents the speed of light, *f_{c}* represents a carrier frequency, Δ*f* represents a subcarrier spacing, and Δ_{F} is a maximum Doppler frequency shift.

According to a fifth aspect, a communication apparatus is provided. The communication apparatus may be a second apparatus, may be a module or a unit (for example, a chip, a chip system, or a circuit) that is in a second apparatus and that is configured to perform and one-to-one corresponds to the method, the operations, the steps, or the actions described in the second aspect, or may be an apparatus that can be used in conjunction with a second apparatus. The second apparatus may be a network device.

In a possible implementation, the communication apparatus includes a transceiver unit (or a communication module) and a processing unit (or a processing module) connected to the transceiver unit.

The processing unit is configured to determine a first physical sequence number based on a first logical sequence number and a first mapping relationship, where the first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to *M* consecutive physical sequence numbers is less than or equal to a first threshold, the logical sequence number indicates a position index of the physical sequence number, and *M* is greater than or equal to 1. The transceiver unit is configured to receive a first sequence, where the first sequence is determined based on the first physical sequence number.

With reference to the fifth aspect, in some implementations of the fifth aspect, the first threshold *δ* satisfies: $\sqrt{N} \leq δ \leq 2 \sqrt{N}$

*N* is a sequence length of the cubic polynomial exponential sequence, and *N* is a prime number.

With reference to the fifth aspect, in some implementations of the fifth aspect, a cubic polynomial exponential sequence belongs to a first cubic metric group or a second cubic metric group, a cubic metric of each cubic polynomial exponential sequence in the first cubic metric group is less than or equal to a first cubic metric, and a cubic metric of each cubic polynomial exponential sequence in the second cubic metric group is greater than the first cubic metric. The first cubic metric group includes one or more first subgroups, where the plurality of first subgroups are determined based on a maximum value of a cross-ambiguity function of cubic polynomial exponential sequences in the first cubic metric group, the plurality of first subgroups are arranged in ascending order of cubic metrics of corresponding cubic polynomial exponential sequences, each first subgroup corresponds to one or more cubic term coefficients, and a plurality of cubic term coefficients corresponding to a last first subgroup through a 1^{st} first subgroup are alternately arranged in ascending or descending order of the cubic metrics of the cubic polynomial exponential sequences. The second cubic metric group includes one or more second subgroups, where the plurality of second subgroups are determined based on a maximum value of a cross-ambiguity function of cubic polynomial exponential sequences in the second cubic metric group, the plurality of second subgroups are arranged in ascending order of cubic metrics of corresponding cubic polynomial exponential sequences, each second subgroup corresponds to one or more cubic term coefficients, and a plurality of cubic term coefficients corresponding to a 1^{st} second subgroup through a last second subgroup are alternately arranged in ascending or descending order of the cubic metrics of the cubic polynomial exponential sequences.

With reference to the fifth aspect, in some implementations of the fifth aspect, one or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

With reference to the fifth aspect, in some implementations of the fifth aspect, cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$. Cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

With reference to the fifth aspect, in some implementations of the fifth aspect, each first subgroup includes one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$. Each second subgroup includes one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$*. N* is a sequence length of the cubic polynomial exponential sequence, and *N* is a prime number.

With reference to the fifth aspect, in some implementations of the fifth aspect, all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$. All cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

With reference to the fifth aspect, in some implementations of the fifth aspect, the cubic polynomial exponential sequence is expressed as: ${s}_{a , b , c , d} \left(n\right) = {e}^{- j 2 π \left({an}^{3}+{bn}^{2}+cn+d\right) / N}$

*a* is a cubic term coefficient of the cubic polynomial exponential sequence, *b* is a quadratic term coefficient of the cubic polynomial exponential sequence, *c* is a linear term coefficient of the cubic polynomial exponential sequence, *d* is a constant term of the cubic polynomial exponential sequence, *N* is a sequence length of the cubic polynomial exponential sequence, *N* is a prime number, and *n* E {0, 1, ... , *N* - 1}.

With reference to the fifth aspect, in some implementations of the fifth aspect, the cubic term coefficient *a* of the cubic polynomial exponential sequence is associated with the quadratic term coefficient *b* of the cubic polynomial exponential sequence, specifically including: For the cubic term coefficient *a* of the cubic polynomial exponential sequence, if *a* ∈ {1, 2, ... , *N* - 1}, the quadratic term coefficient *b* of the cubic polynomial exponential sequence is equal to 3*ak*Δ_{T}, and the linear term coefficient *c* of the cubic polynomial exponential sequence is equal to *l*Δ_{F}, where $k ∈ \left\{0,1,…,\left⌊N/{Δ}_{T}\right⌋-1\right\} , l ∈ \left\{0,1,…,\left⌊N/{Δ}_{F}\right⌋-1\right\}$, Δ_{T} is a maximum round-trip time, and Δ_{F} is a maximum Doppler frequency shift.

With reference to the fifth aspect, in some implementations of the fifth aspect, when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N}$

*a = λ*, *b =* 3*λk*Δ_{T}, *c = l*Δ_{F}, *d* = 0, *λ* E {1, 2, ... , *N* - 1}, $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

With reference to the fifth aspect, in some implementations of the fifth aspect, when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N}$

*a = λ*, *b* = 3*λk*Δ_{F}, *c = l*Δ_{T}*, d* = 0, *λ* E {1, 2, ... , *N -* 1}, $k ∈ \left\{0,1,…,\left⌊N/{Δ}_{F}\right⌋-1\right\} , l ∈ \left\{0,1,…,\left⌊N/{Δ}_{T}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

With reference to the fifth aspect, in some implementations of the fifth aspect, a sequence capacity of the cubic polynomial exponential sequence is positively correlated with a cube of the sequence length *N* of the cubic polynomial exponential sequence. The sequence capacity of the cubic polynomial exponential sequence is $\left(N-1\right) ⋅ \left⌊N/{Δ}_{T}\right⌋ ⋅ \left⌊N/{Δ}_{F}\right⌋$, where *N* is a prime number, Δ_{T} is a maximum round-trip time, Δ_{F} is a maximum Doppler frequency shift, and $\left⌊⋅\right⌋$ represents rounding down.

With reference to the fifth aspect, in some implementations of the fifth aspect, for ∀*τ* E [0, Δ_{T} - 1], ∀*ν* E [0, Δ_{F} - 1], a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all zero, where *τ* is a round-trip time, *ν* is a Doppler frequency shift, Δ_{T} is a maximum round-trip time, and Δ_{F} is a maximum Doppler frequency shift.

With reference to the fifth aspect, in some implementations of the fifth aspect, a radius of a cell in which a terminal device is located is 0 to *c*(Δ_{T} - 1)*T*ₛ/2, where *c* represents the speed of light, *T*ₛ represents a symbol time interval, and Δ_{T} is a maximum round-trip time.

With reference to the fifth aspect, in some implementations of the fifth aspect, a moving speed range of the terminal device is from *- c*(Δ_{F} - 1)Δ*f*/4*f_{c}* to *c*(Δ_{F} - 1)Δ*f*/4*f_{c}*, where *c* represents the speed of light, *f_{c}* represents a carrier frequency, Δ*f* represents a subcarrier spacing, and Δ_{F} is a maximum Doppler frequency shift.

According to a sixth aspect, a communication apparatus is provided. The communication apparatus may be a third apparatus, may be a module or a unit (for example, a chip, a chip system, or a circuit) that is in a third apparatus and that is configured to perform and one-to-one corresponds to the method, the operations, the steps, or the actions described in the third aspect, or may be an apparatus that can be used in conjunction with a third apparatus. The third apparatus may be a terminal device or a network device.

In a possible implementation, the communication apparatus includes a transceiver unit (or a communication module) and a processing unit (or a processing module) connected to the transceiver unit.

The processing unit is configured to: classify, based on a first cubic metric, a cubic polynomial exponential sequence into a first cubic metric group or a second cubic metric group, where a cubic metric of a cubic polynomial exponential sequence in the first cubic metric group is less than or equal to the first cubic metric, and a cubic metric of a cubic polynomial exponential sequence in the second cubic metric group is greater than the first cubic metric; based on a maximum value of a cross-ambiguity function of cubic polynomial exponential sequences, classify the cubic polynomial exponential sequence in the first cubic metric group into one or more first subgroups, and classify the cubic polynomial exponential sequence in the second cubic metric group into one or more second subgroups; and arrange, in alternating ascending or descending order of cubic metrics of cubic polynomial exponential sequences, a plurality of cubic term coefficients corresponding to a last first subgroup through a 1^{st} first subgroup, and arrange, in alternating ascending or descending order of cubic metrics of cubic polynomial exponential sequences, a plurality of cubic term coefficients corresponding to a 1^{st} second subgroup through a last second subgroup. The plurality of first subgroups or the plurality of second subgroups are arranged in ascending order of cubic metrics of corresponding cubic polynomial exponential sequences, each first subgroup or each second subgroup corresponds to one or more cubic term coefficients, and a maximum value of a cross-ambiguity function of any two cubic polynomial exponential sequences in each first subgroup or each second subgroup is less than or equal to a first threshold. One or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

With reference to the sixth aspect, in some implementations of the sixth aspect, the first threshold *δ* satisfies: $\sqrt{N} \leq δ \leq 2 \sqrt{N}$

*N* is a sequence length of the cubic polynomial exponential sequence, and *N* is a prime number.

With reference to the sixth aspect, in some implementations of the sixth aspect, cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$. Cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

With reference to the sixth aspect, in some implementations of the sixth aspect, each first subgroup includes one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$. Each second subgroup includes one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

With reference to the sixth aspect, in some implementations of the sixth aspect, all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$. All cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

With reference to the sixth aspect, in some implementations of the sixth aspect, the cubic polynomial exponential sequence is expressed as: ${s}_{a , b , c , d} \left(n\right) = {e}^{- j 2 π \left({an}^{3}+{bn}^{2}+cn+d\right) / N}$

*a* is a cubic term coefficient of the cubic polynomial exponential sequence, *b* is a quadratic term coefficient of the cubic polynomial exponential sequence, *c* is a linear term coefficient of the cubic polynomial exponential sequence, *d* is a constant term of the cubic polynomial exponential sequence, *N* is a sequence length of the cubic polynomial exponential sequence, *N* is a prime number, and *n* E {0, 1, ... , *N* - 1}.

With reference to the sixth aspect, in some implementations of the sixth aspect, the cubic term coefficient *a* of the cubic polynomial exponential sequence is associated with the quadratic term coefficient *b* of the cubic polynomial exponential sequence, specifically including: For the cubic term coefficient *a* of the cubic polynomial exponential sequence, if *a* ∈ {1, 2, ... , *N* - 1}, the quadratic term coefficient *b* of the cubic polynomial exponential sequence is equal to 3*ak*Δ_{T}, and the linear term coefficient *c* of the cubic polynomial exponential sequence is equal to *l*Δ_{F}, where $k ∈ \left\{0,1,…,\left⌊N/{Δ}_{T}\right⌋-1\right\} , l ∈ \left\{0,1,…,\left⌊N/{Δ}_{F}\right⌋-1\right\}$, Δ_{T} is a maximum round-trip time, and Δ_{F} is a maximum Doppler frequency shift.

With reference to the sixth aspect, in some implementations of the sixth aspect, when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N}$

*a = λ, b =* 3*λk*Δ_{T}, *c = l*Δ_{F}, *d* = 0, *λ* ∈ {1, 2, ... , *N* - 1}, $k ∈ \left\{0,1,…,\left⌊N/{Δ}_{T}\right⌋-1\right\} , l ∈ \left\{0,1,…,\left⌊N/{Δ}_{F}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

With reference to the sixth aspect, in some implementations of the sixth aspect, when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N}$

*a = λ*, *b =* 3*λk*Δ_{F}, *c = l*Δ_{T}*, d* = 0, *λ* E {1, 2, ... , *N* - 1}, $k ∈ \left\{0,1,…,\left⌊N/{Δ}_{F}\right⌋-1\right\} , l ∈ \left\{0,1,…,\left⌊N/{Δ}_{T}\right⌋-1\right\}$ , Δ_{T} represents a maximum round-trip time, Δ_{F} represents a maximum Doppler frequency shift, *λ* is a parameter associated with a cell, and *k* and *l* are parameters associated with a terminal device in the cell.

With reference to the sixth aspect, in some implementations of the sixth aspect, a sequence capacity of the cubic polynomial exponential sequence is positively correlated with a cube of the sequence length *N* of the cubic polynomial exponential sequence. The sequence capacity of the cubic polynomial exponential sequence is $\left(N-1\right) ⋅ \left⌊N/{Δ}_{T}\right⌋ ⋅ \left⌊N/{Δ}_{F}\right⌋$, where *N* is a prime number, Δ_{T} is a maximum round-trip time, Δ_{F} is a maximum Doppler frequency shift, and $\left⌊⋅\right⌋$ represents rounding down.

With reference to the sixth aspect, in some implementations of the sixth aspect, for ∀*τ* ∈ [0, Δ_{T} - 1], ∀*ν* ∈ [0, Δ_{F} - 1], a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all zero, where *τ* is a round-trip time, *ν* is a Doppler frequency shift, Δ_{T} is a maximum round-trip time, and Δ_{F} is a maximum Doppler frequency shift.

With reference to the sixth aspect, in some implementations of the sixth aspect, a radius of a cell in which a terminal device is located is 0 to *c*(Δ_{T} - 1)*Tₛ*/2, where *c* represents the speed of light, *T*ₛ represents a symbol time interval, and Δ_{T} is a maximum round-trip time.

With reference to the sixth aspect, in some implementations of the sixth aspect, a moving speed range of the terminal device is from - *c*(Δ_{F} - 1)Δ*f*/4*f_{c}* to *c*(Δ_{F} - 1)Δ*f*/4*f_{c}*, where *c* represents the speed of light, *f_{c}* represents a carrier frequency, Δ*f* represents a subcarrier spacing, and Δ_{F} is a maximum Doppler frequency shift.

According to a seventh aspect, a communication apparatus is provided, including a transceiver, a processor, and a memory. The processor is configured to control the transceiver to send and receive signals. The memory is configured to store a computer program. The processor is configured to invoke the computer program from the memory and run the computer program, so that the communication apparatus performs the method according to any one of the possible implementations of the first aspect to the third aspect.

Optionally, there are one or more processors, and there are one or more memories.

Optionally, the memory may be included in the communication apparatus. In a manner, the memory and the processor may be disposed separately. In another manner, the memory may be located in the processor and integrated with the processor.

Optionally, the memory may alternatively be outside the communication apparatus and coupled to the processor.

Optionally, the communication apparatus further includes a transmitter (transmitter machine) and a receiver (receiver machine).

According to an eighth aspect, a communication apparatus is provided. The communication apparatus may be a first apparatus, may be a module or a unit (for example, a chip, a chip system, or a circuit) that is in a first apparatus and that performs and one-to-one corresponds to the method, the operations, the steps, or the actions described in the first aspect, or may be an apparatus that can be used in conjunction with a first apparatus.

According to a ninth aspect, a communication apparatus is provided. The communication apparatus may be a second apparatus, may be a module or a unit (for example, a chip, a chip system, or a circuit) that is in a second apparatus and that performs and one-to-one corresponds to the method, the operations, the steps, or the actions described in the second aspect, or may be an apparatus that can be used in conjunction with a second apparatus.

According to a tenth aspect, a communication apparatus is provided. The communication apparatus may be a third apparatus, may be a module or a unit (for example, a chip, a chip system, or a circuit) that is in a third apparatus and that performs and one-to-one corresponds to the method, the operations, the steps, or the actions described in the third aspect, or may be an apparatus that can be used in conjunction with a third apparatus.

According to an eleventh aspect, a communication system is provided, including a first apparatus and a second apparatus. The first apparatus is configured to perform the method according to any one of the possible implementations of the first aspect, and the second apparatus is configured to perform the method according to any one of the possible implementations of the second aspect. Optionally, the communication system may further include another device that is used in conjunction with the first apparatus and/or the second apparatus.

According to a twelfth aspect, a communication system is provided, including a third apparatus. The third apparatus is configured to perform the method according to any one of the possible implementations of the third aspect. Optionally, the communication system may further include another device that is used in conjunction with the third apparatus.

According to a thirteenth aspect, a computer-readable storage medium is provided. The computer-readable storage medium stores a computer program or code. When the computer program or code is run on a computer, the computer is caused to perform the method according to any one of the possible implementations of the first aspect to the third aspect.

According to a fourteenth aspect, a chip or a chip system is provided, including at least one processor. The at least one processor is coupled to a memory. The memory is configured to store a computer program. The processor is configured to invoke the computer program from the memory and run the computer program, so that an apparatus in which the chip or the chip system is installed performs the method according to any one of the possible implementations of the first aspect to the third aspect. The chip may include an input circuit or interface for sending information or data, and an output circuit or interface for receiving information or data.

According to a fifteenth aspect, a computer program product is provided. The computer program product includes computer program code. When the computer program code is run, a computer is caused to perform the method according to any one of the possible implementations of the first aspect to the third aspect.

### BRIEF DESCRIPTION OF DRAWINGS

FIG. 1 is a diagram of a structure of a communication system;
FIG. 2(a) and FIG. 2(b) are diagrams of an auto-ambiguity function and a cross-ambiguity function of Zadoff-Chu-type sequences;
FIG. 3 is a diagram of an interaction procedure of a communication method 300 according to an embodiment of this application;
FIG. 4 is a diagram of division of cubic polynomial exponential sequences according to an embodiment of this application;
FIG. 5 is another diagram of division of cubic polynomial exponential sequences according to an embodiment of this application;
FIG. 6 is still another diagram of division of cubic polynomial exponential sequences according to an embodiment of this application;
FIG. 7 is still another diagram of division of cubic polynomial exponential sequences according to an embodiment of this application;
FIG. 8 is a diagram of an interaction procedure of a communication method 800 according to an embodiment of this application;
FIG. 9 is a diagram of a structure of a communication apparatus 900 according to an embodiment of this application; and
FIG. 10 is a diagram of a structure of a communication apparatus 1000 according to an embodiment of this application.

### DESCRIPTION OF EMBODIMENTS

The following describes technical solutions of embodiments in this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V means communication between vehicles. V2P means communication between a vehicle and a person (including a pedestrian, a bicyclist, a driver, a passenger, or the like). V2I means communication between a vehicle and infrastructure. The infrastructure is, for example, a roadside unit (roadside unit, RSU) or a network device. The RSU includes two types: an RSU of a terminal type and an RSU of a base station type. The RSU of the terminal type is deployed on a road side, and therefore is in a non-mobile state, for which mobility does not need to be considered. The RSU of the base station type may provide timing synchronization and resource scheduling for a vehicle that communicates with the RSU of the base station type. V2N means communication between a vehicle and a network device. It may be understood that the foregoing descriptions are example descriptions, and constitute no limitation in embodiments of this application. For example, V2X may further include V2X communication based on an NR system in current 3GPP Rel-16 and later releases.

A terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device that has a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in 6G and a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as an intelligent wearable device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-sized devices that can implement all or some functions without relying on smartphones, for example, smart watches or smart glasses, and devices that focus only on a specific type of application function and need to be used together with other devices such as smartphones, for example, various smart bands or smart jewelry for monitoring physical signs.

In embodiments of this application, an apparatus configured to implement a function of the terminal device, namely, a terminal apparatus, may be a terminal device; or may be an apparatus that can support the terminal device in implementing the function, for example, a chip system or a chip. The apparatus may be installed in the terminal device. In embodiments of this application, the chip system may include a chip, or may include a chip and another discrete device.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that enables the terminal device to access a wireless network. The base station may cover or be replaced with the following names in a broad sense, for example, a NodeB (NodeB), an evolved NodeB (evolved NodeB, eNB), a next-generation NodeB (next-generation NodeB, gNB), a relay station, an access point, a transmitting and receiving point (transmitting and receiving point, TRP), a transmitting point (transmitting point, TP), a master base station, a secondary base station, a multi-standard radio (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that functions as a base station in D2D, V2X, or M2M communication, a network side device in a 6G network, a device that functions as a base station in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU, a DU, or both a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement functions of the network device may be a network device, or may be an apparatus, for example, a chip system or a chip, that can support the network device in implementing the function. The apparatus may be installed in the network device. In embodiments of this application, the chip system may include a chip, or may include a chip and another discrete device.

The network device and the terminal device may be deployed on land, including an indoor device, an outdoor device, a handheld device, or a vehicle-mounted device, may be deployed on water, or may be deployed on an airplane, a balloon, and a satellite in the air. A scenario in which the network device and the terminal device are located is not limited in embodiments of this application.

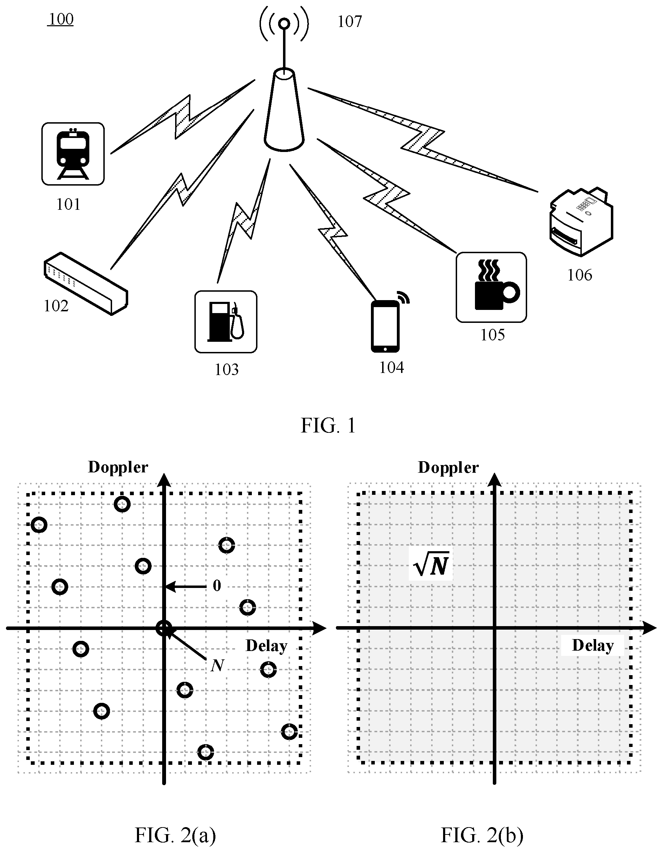

The following briefly describes, with reference to FIG. 1, a communication system to which an embodiment of this application is applicable.

FIG. 1 is a diagram of a structure of a communication system 100 to which an embodiment of this application is applicable. As shown in FIG. 1, the communication system may include a network device (for example, a gNB 107) and a terminal device (for example, UE 101 to UE 106). The network device may include one or more antennas. In addition, the network device may additionally include a transmitter chain and a receiver chain. A person of ordinary skill in the art may understand that the transmitter chain and the receiver chain each may include a plurality of components (for example, a processor, a modulator, a multiplexer, a demodulator, a demultiplexer, or an antenna) related to signal sending and receiving. FIG. 1 is merely a simplified diagram as an example. A quantity of terminal devices in the communication system in FIG. 1 is merely an example. The quantity of terminal devices in the communication system may be another quantity. In addition, the communication system may further include another communication device, which is not shown in FIG. 1. In the communication system, the terminal device (for example, the UE 101 to the UE 106) may determine a frequency resource from a frequency resource set, and send an uplink signal to the network device (for example, the gNB 107) on the frequency resource. Correspondingly, the network device (for example, the gNB 107) receives the uplink signal. Similarly, in the communication system, the network device (for example, the gNB 107) may send a downlink signal to the terminal device (for example, the UE 101 to the UE 106) on the determined frequency resource.

It should be noted that a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a first apparatus, may be a functional module that is in a first apparatus and that can invoke and execute the program, may be a module or a unit (for example, a chip, a chip system, or a circuit) that is in a first apparatus and that performs and one-to-one corresponds to the method, the operations, the steps, or the actions described in the first aspect, or may be another apparatus that can be used in conjunction with a first apparatus.

For ease of understanding embodiments of this application, terms and technical principles in this application are first briefly described.

### (1) Ambiguity function

The ambiguity function includes an auto-ambiguity function and a cross-ambiguity function.

The auto-ambiguity function is a correlation between a signal #1 and a signal #2, where the signal #2 is a signal obtained after the signal #1 is affected by a delay and a Doppler frequency shift.

The cross-ambiguity function is a correlation between a signal #A and a signal #B, where the signal #A is a signal obtained after a signal #C is affected by a delay and a Doppler frequency shift, and the signal #B and the signal #C are in a same sequence set.

### (2) Zero-ambiguity zone

The zero-ambiguity zone means that an ambiguity function is equal to zero in a specific delay and Doppler interval. In other words, the zero-ambiguity zone means that an ambiguity function is equal to zero in a range of a maximum round-trip time and a maximum Doppler frequency shift.

### (3) Low-ambiguity zone

The low-ambiguity zone means that an ambiguity function value is less than or equal to a preset threshold (or does not exceed a preset threshold) in a specific delay and Doppler interval. In other words, the low-ambiguity zone means that an ambiguity function is less than or equal to a preset threshold in a range of a maximum round-trip time and a maximum Doppler frequency shift.

### (4) Zero-correlation zone

The zero-correlation zone means that a correlation function is equal to zero in a specific delay interval. In other words, the zero-correlation zone means that a correlation function is equal to zero in a range of a maximum round-trip time (no Doppler frequency shift exists).

### (5) Low-correlation zone

The low-correlation zone means that a correlation function value is less than or equal to a preset threshold (or does not exceed a preset threshold) in a specific delay interval. In other words, the low-correlation zone means that a correlation function is less than or equal to a preset threshold in a range of a maximum round-trip time (no Doppler frequency shift exists).

### (6) Sequence capacity

The sequence capacity is a quantity of sequences included in a sequence set. For a Zadoff-Chu sequence, the sequence capacity is a quantity of sequences constructed by using different root indexes and cyclic shifts.

### (7) Cubic metric (cubic metric, CM)

The cubic metric is defined as: $CM = \frac{20 lg \left\{rms\left[{s}_{u , k}^{3}\left(t\right)\right]\right\} - 1.52}{1.56} dB$

rms(·) represents a root mean square.

### (8) Exponential sum theorem (Weil Bound on Exponential Sum)

If in a degree-d polynomial *p*(*n*) = *p_{d}n^{d}* + *p*_{*d*-1}*n*^{*d*-1} + ··· + *p*₁*n* + *p*₀, a coefficient of a highest-degree term satisfies ${p}_{d} ∈ {ℤ}_{N}^{∗}$, and coefficients of non-highest-degree terms satisfy ${p}_{0} , {p}_{1} , … , {p}_{d - 1} ∈ {ℤ}_{N}$, where *N* is a prime number, and *d* ≥ 1, an exponential sum of the polynomial *p*(*n*) satisfies: $\left|{\sum }_{n = 0}^{N - 1} {e}^{- j 2 πp \left(n\right) / N}\right| \leq \left(d-1\right) \sqrt{N}$

In particular, when *d* = 2, the exponential sum of the polynomial *p*(*n*) degenerates into a Gaussian sum $\left|{\sum }_{n = 0}^{N - 1} {e}^{- j 2 π \left({p}_{2}{n}^{2}+{p}_{1}n+{p}_{0}\right) / N}\right| = \sqrt{N}$*.*

In a communication system, common communication sequences include an Alltop sequence, a Zadoff-Chu sequence (ZC sequence for short), and a Zadoff-Chu Cover Alltop sequence. Downlink signal synchronization and uplink random access may be implemented by using a correlation of the sequence, and pilot multiplexing may be implemented by using orthogonality of the sequence. A common sequence evaluation indicator includes at least one of the following: autocorrelation, cross-correlation, a sequence capacity, frequency shift resistance, a peak-to-average power ratio (peak-to-average power ratio, PAPR), time domain constant modulus, frequency domain constant modulus, and the like.

FIG. 2(a) and FIG. 2(b) are diagrams of an auto-ambiguity function and a cross-ambiguity function of Zadoff-Chu-type sequences (namely, sequences similar to a ZC sequence, which may also be referred to as quadratic polynomial exponential sequences). FIG. 2(a) shows the auto-ambiguity function of the ZC-type sequences, and FIG. 2(b) shows the cross-ambiguity function of the ZC-type sequences. It can be learned from FIG. 2(a) that the auto-ambiguity function of the ZC-type sequences exhibits a plurality of peak values in a delay-Doppler plane, that is, the auto-ambiguity function of the ZC-type sequences has a multi-peak characteristic. It can be learned from FIG. 2(b) that the cross-ambiguity function of the ZC-type sequences has no peak value in a delay-Doppler plane, and a maximum value of the cross-ambiguity function of the ZC-type sequence is $\sqrt{N}$.

For example, on a physical random access channel (physical random access channel, PRACH), different cyclic shifts of ZC sequences are usually used to form a zero-correlation zone, to implement uplink user access and delay estimation, and further measure a distance between a user and a base station. For example, a discrete-time signal of the ZC sequence may be expressed as: ${s}_{u , k} \left(n\right) = {e}^{- jπu \left(n+k{Δ}_{T}\right) \left(n+k{Δ}_{T}+1\right) / N}$

Δ_{T} represents a zero-correlation zone, *k* represents a cyclic shift index, and $k = 0 , 1 , … , \left⌊N/{Δ}_{T}\right⌋ - 1$ . *N* is a sequence length of the sequence, and *N* is a prime number. *u* represents a sequence number (or a root sequence index), and *u* E {1, 2, ..., *N* - 1}. A cyclic prefix is added at a transmitting end, so that a receiving end can obtain an ideal impulse function by using periodic correlation. It can be learned from Formula (3) that $\left⌊N/{Δ}_{T}\right⌋$ ZC sequences ${s}_{u , 0} \left(n\right) , {s}_{u , 1} \left(n\right) , … , {s}_{u , \left⌊N/{Δ}_{T}\right⌋ - 1} \left(n\right)$ are multiplexed by shifting in a delay domain to form the zero-correlation zone.

When there is a Doppler frequency shift, an ambiguity function of *s_{u,k}*(*n*) exhibits a plurality of peaks. For example, an ambiguity function *A*(*τ, ν*) satisfies: $A \left(τ, ν\right) = {\sum }_{n = 0}^{N - 1} {s}_{u , k} \left(n\right) {s}_{u , k}^{∗} \left[\left(n-τ\right)mod N\right] {e}^{j 2 πnν / N}$

*τ* represents a round-trip time (or a propagation delay), and *ν* represents a Doppler frequency shift. To improve a capability of the ZC sequence to resist the Doppler frequency shift, a cyclic shift of the ZC sequence may be restricted, for example, a cyclic shift is selected from a restricted set of cyclic shifts of the ZC sequence, to resist the frequency shift.

For example, an ambiguity function of the ZC sequence is expressed as: $\left|{A}_{{s}_{u} , {s}_{v}}\left(τ, ν\right)\right| = \left\{\begin{matrix}N & u = v , ν = uτ mod N \\ 0 & u = v , ν \neq uτ mod N \\ \sqrt{N} & u \neq v\end{matrix}\right.$

It can be learned from Formula (5) that a sequence capacity of the ZC sequence is positively correlated with a square of a sequence length *N*, and the sequence capacity is limited.

It should be noted that generation of a cyclic shift of the ZC sequence includes three cases: a cyclic shift in an unrestricted set (unrestricted set), a cyclic shift of a restricted set type A (restricted set type A), and a cyclic shift of a restricted set type B (restricted set type B). In a scenario in which a terminal device moves at a high speed, to resist a Doppler frequency shift, a cyclic shift can be obtained for the ZC sequence based on the cyclic shift of the restricted set type A or the cyclic shift of the restricted set type B. Therefore, the sequence capacity is further reduced. A cyclic shift obtained for the ZC sequence based on the cyclic shift of the restricted set type A supports resistance to a Doppler frequency shift of up to one subcarrier spacing, and a quantity of available cyclic shifts does not exceed 1/3 of an unrestricted set. A cyclic shift obtained for the ZC sequence based on the cyclic shift of the restricted set type B supports resistance to a Doppler frequency shift of up to two subcarrier spacings, and a quantity of available cyclic shifts does not exceed 1/5 of an unrestricted set. Depending on the cyclic shift of the restricted set type A or the cyclic shift of the restricted set type B, a maximum Doppler frequency shift supported by the current ZC sequence is also limited.

Optionally, the ZC sequence with a restricted set of cyclic shifts may be expressed as: ${s}_{u , k} \left(n\right) = {e}^{- jπu \left(n+{C}_{k}\right) \left(n+{C}_{k}+1\right) / N}$

*n* = 0, 1, ... , *N* - 1, and *Cₖ* represents a cyclic shift of the ZC sequence.

In addition, for the ZC sequence, there is also a constraint on a maximum zero-ambiguity zone area (namely, a product of a maximum round-trip time Δ_{T} and a maximum Doppler frequency shift Δ_{F}). For example, the maximum zero-ambiguity zone area of the ZC sequence does not exceed a sequence length of the ZC sequence.

In an implementation, during uplink random access, a sequence set for a preamble is constructed by using a cyclic shift of one or more ZC sequences. For example, a base station configures a start sequence number (or a root sequence index, referring to the parameter *u* in Formula (3)) by using a SIB, and a terminal device sequentially determines 64 ZC sequences from the following Table 1 according to a principle of "traversing cyclic shifts first and then traversing sequence numbers", and sends a randomly selected ZC sequence to the base station, to implement random access and signal synchronization. It should be understood that a general principle of an arrangement order of ZC sequences is that cubic metrics and maximum cell radii of neighboring ZC sequences do not jump. The arrangement order of the ZC sequences meets the following rules:
(1) ZC sequences are divided into a cubic metric group #1 (which may also be referred to as a low cubic metric group) and a cubic metric group #2 (which may also be referred to as a high cubic metric group) by using CM = 1.2 dB as a boundary, that is, cubic metrics of all ZC sequences in the low cubic metric group are less than or equal to 1.2 dB, and cubic metrics of all ZC sequences in the high cubic metric group are greater than or equal to 1.2 dB, where the low cubic metric group includes 456 ZC sequences, the high cubic metric group includes 382 ZC sequences, and CM = 1.2 dB corresponds to a cubic metric of a quadrature phase shift keying (Quadrature Phase Shift Keying, QPSK) signal;
(2) for the low cubic metric group or the high cubic metric group, the ZC sequences in the group are divided into 16 subgroups by using a maximum cell radius ${Δ}_{T}^{max}$ supported to resist a frequency shift of ±1 subcarrier as a boundary, including: $0 \leq {Δ}_{T}^{max} < 15 , 15 \leq {Δ}_{T}^{max} <$ $18 , 18 \leq {Δ}_{T}^{max} < 22 , 22 \leq {Δ}_{T}^{max} < 26 , 26 \leq {Δ}_{T}^{max} < 32 , 32 \leq {Δ}_{T}^{max} < 38 , 38 \leq {Δ}_{T}^{max} < 46$, $46 \leq {Δ}_{T}^{max} < 55 , 55 \leq {Δ}_{T}^{max} < 68 , 68 \leq {Δ}_{T}^{max} < 82 , 82 \leq {Δ}_{T}^{max} < 100 , 100 \leq {Δ}_{T}^{max} < 128 ,$ $128 \leq {Δ}_{T}^{max} < 158 , 158 \leq {Δ}_{T}^{max} < 202 , 202 \leq {Δ}_{T}^{max} < 237$, and ${Δ}_{T}^{max} \geq 237$; and
(3) in each subgroup, sequences are arranged in order of cubic metrics; for the low cubic metric group, cubic metrics of an odd-numbered subgroup are arranged in descending order, and cubic metrics of an even-numbered subgroup are arranged in ascending order, which indicates that ZC sequences in a last subgroup of the low cubic metric group are arranged in ascending order; and for the high cubic metric group, cubic metrics of an odd-numbered subgroup are arranged in ascending order, and cubic metrics of an even-numbered subgroup are arranged in descending order, which indicates that ZC sequences in a 1st subgroup of the high cubic metric group are arranged in ascending order, thereby ensuring that cubic metrics and maximum cell radii of adjacent ZC sequences do not jump.

Table 1 shows a one-to-one mapping relationship between logical sequence numbers and physical sequence numbers of ZC sequences when a sequence length of the ZC sequence satisfies *N* = 839. It can be learned that, because conjugate root sequences support a same maximum cell radius and have a same cubic metric, conjugate physical sequence numbers consistently appear at adjacent locations. For example, if the base station indicates, by using a SIB, that a logical sequence number is 25, the terminal device may uniquely determine that a physical sequence number is 783, and further determine 64 ZC sequences. For example, the terminal device may select 64 ZC sequences from sequences corresponding to the physical sequence number 783. Alternatively, the terminal device may select 30 ZC sequences from sequences corresponding to the physical sequence number 783, and then sequentially select 34 ZC sequences from ZC sequences corresponding to a physical sequence number 112, to finally determine 64 ZC sequences. Then, one ZC sequence is randomly selected from the 64 ZC sequences and sent to implement uplink access. Correspondingly, the base station determines the ZC sequence from 64 ZC sequences through blind detection, and determines a round-trip time and/or a Doppler frequency shift.

**Table 1**

| Logical sequence number | Physical sequence number *u* |
|---|---|
| 0-23 | 129, 710, 140, 699, 120, 719, 210, 629, 168, 671, 84, 755, 105, 734, 93, 746, 70, 769, 60, 779, 2, 837, 1, 838 |
| 24-29 | 56, 783, 112, 727, 148, 691 |
| 30-35 | 80, 759, 42, 797, 40, 799 |
| 36-41 | 35, 804, 73, 766, 146, 693 |
| 42-51 | 31, 808, 28, 811, 30, 809, 27, 812, 29, 810 |
| 52-63 | 24, 815, 48, 791, 68, 771, 74, 765, 178, 661, 136, 703 |
| 64-75 | 86, 753, 78, 761, 43, 796, 39, 800, 20, 819, 21, 818 |
| 76-89 | 95, 744, 202, 637, 190, 649, 181, 658, 137, 702, 125, 714, 151, 688 |
| 90-115 | 217, 622, 128, 711, 142, 697, 122, 717, 203, 636, 118, 721, 110, 729, 89, 750, 103, 736, 61, 778, 55, 784, 15, 824, 14, 825 |
| 116-135 | 12, 827, 23, 816, 34, 805, 37, 802, 46, 793, 207, 632, 179, 660, 145, 694, 130, 709, 223, 616 |
| 136-167 | 228, 611, 227, 612, 132, 707, 133, 706, 143, 696, 135, 704, 161, 678, 201, 638, 173, 666, 106, 733, 83, 756, 91, 748, 66, 773, 53, 786, 10, 829, 9, 830 |
| 168-203 | 7, 832, 8, 831, 16, 823, 47, 792, 64, 775, 57, 782, 104, 735, 101, 738, 108, 731, 208, 631, 184, 655, 197, 642, 191, 648, 121, 718, 141, 698, 149, 690, 216, 623, 218, 621 |
| 204-263 | 152, 687, 144, 695, 134, 705, 138, 701, 199, 640, 162, 677, 176, 663, 119, 720, 158, 681, 164, 675, 174, 665, 171, 668, 170, 669, 87, 752, 169, 670, 88, 751, 107, 732, 81, 758, 82, 757, 100, 739, 98, 741, 71, 768, 59, 780, 65, 774, 50, 789, 49, 790, 26, 813, 17, 822, 13, 826, 6, 833 |
| 264-327 | 5, 834, 33, 806, 51, 788, 75, 764, 99, 740, 96, 743, 97, 742, 166, 673, 172, 667, 175, 664, 187, 652, 163, 676, 185, 654, 200, 639, 114, 725, 189, 650, 115, 724, 194, 645, 195, 644, 192, 647, 182, 657, 157, 682, 156, 683, 211, 628, 154, 685, 123, 716, 139, 700, 212, 627, 153, 686, 213, 626, 215, 624, 150, 689 |
| 328-383 | 225, 614, 224, 615, 221, 618, 220, 619, 127, 712, 147, 692, 124, 715, 193, 646, 205, 634, 206, 633, 116, 723, 160, 679, 186, 653, 167, 672, 79, 760, 85, 754, 77, 762, 92, 747, 58, 781, 62, 777, 69, 770, 54, 785, 36, 803, 32, 807, 25, 814, 18, 821, 11, 828, 4, 835 |
| 384-455 | 3, 836, 19, 820, 22, 817, 41, 798, 38, 801, 44, 795, 52, 787, 45, 794, 63, 776, 67, 772, 72, 767, 76, 763, 94, 745, 102, 737, 90, 749, 109, 730, 165, 674, 111, 728, 209, 630, 204, 635, 117, 722, 188, 651, 159, 680, 198, 641, 113, 726, 183, 656, 180, 659, 177, 662, 196, 643, 155, 684, 214, 625, 126, 713, 131, 708, 219, 620, 222, 617, 226, 613 |
| 456-513 | 230, 609, 232, 607, 262, 577, 252, 587, 418, 421, 416, 423, 413, 426, 411, 428, 376, 463, 395, 444, 283, 556, 285, 554, 379, 460, 390, 449, 363, 476, 384, 455, 388, 451, 386, 453, 361, 478, 387, 452, 360, 479, 310, 529, 354, 485, 328, 511, 315, 524, 337, 502, 349, 490, 335, 504, 324, 515 |
| 514-561 | 323, 516, 320, 519, 334, 505, 359, 480, 295, 544, 385, 454, 292, 547, 291, 548, 381, 458, 399, 440, 380, 459, 397, 442, 369, 470, 377, 462, 410, 429, 407, 432, 281, 558, 414, 425, 247, 592, 277, 562, 271, 568, 272, 567, 264, 575, 259, 580 |
| 562-629 | 237, 602, 239, 600, 244, 595, 243, 596, 275, 564, 278, 561, 250, 589, 246, 593, 417, 422, 248, 591, 394, 445, 393, 446, 370, 469, 365, 474, 300, 539, 299, 540, 364, 475, 362, 477, 298, 541, 312, 527, 313, 526, 314, 525, 353, 486, 352, 487, 343, 496, 327, 512, 350, 489, 326, 513, 319, 520, 332, 507, 333, 506, 348, 491, 347, 492, 322, 517 |
| 630-659 | 330, 509, 338, 501, 341, 498, 340, 499, 342, 497, 301, 538, 366, 473, 401, 438, 371, 468, 408, 431, 375, 464, 249, 590, 269, 570, 238, 601, 234, 605 |
| 660-707 | 257, 582, 273, 566, 255, 584, 254, 585, 245, 594, 251, 588, 412, 427, 372, 467, 282, 557, 403, 436, 396, 443, 392, 447, 391, 448, 382, 457, 389, 450, 294, 545, 297, 542, 311, 528, 344, 495, 345, 494, 318, 521, 331, 508, 325, 514, 321, 518 |
| 708-729 | 346, 493, 339, 500, 351, 488, 306, 533, 289, 550, 400, 439, 378, 461, 374, 465, 415, 424, 270, 569, 241, 598 |
| 730-751 | 231, 608, 260, 579, 268, 571, 276, 563, 409, 430, 398, 441, 290, 549, 304, 535, 308, 531, 358, 481, 316, 523 |
| 752-765 | 293, 546, 288, 551, 284, 555, 368, 471, 253, 586, 256, 583, 263, 576 |
| 766-777 | 242, 597, 274, 565, 402, 437, 383, 456, 357, 482, 329, 510 |
| 778-789 | 317, 522, 307, 532, 286, 553, 287, 552, 266, 573, 261, 578 |
| 790-795 | 236, 603, 303, 536, 356, 483 |
| 796-803 | 355, 484, 405, 434, 404, 435, 406, 433 |
| 804-809 | 235, 604, 267, 572, 302, 537 |
| 810-815 | 309, 530, 265, 574, 233, 606 |
| 816-819 | 367, 472, 296, 543 |
| 820-837 | 336, 503, 305, 534, 373, 466, 280, 559, 279, 560, 419, 420, 240, 599, 258, 581, 229, 610 |

In conclusion, considering that the sequence capacity of the ZC sequence is positively correlated with the square of the sequence length, the capacity of the ZC sequence is limited. Particularly, when a radius of a cell in which the terminal device is located is large and/or a moving speed of the terminal device is high, sequence resource configuration efficiency is low, and a transmission requirement of the terminal device may not be met.

For the foregoing problem, this application provides a communication method and apparatus. To be specific, a first apparatus may determine a first physical sequence number based on a first logical sequence number and a first mapping relationship, and then may determine a first sequence (namely, a cubic polynomial exponential sequence) based on the first physical sequence number, and complete uplink random access by sending the first sequence. In this implementation, a sequence capacity of the cubic polynomial exponential sequence is increased, so that resistance to a Doppler frequency shift of more subcarrier spacings can be supported, sequence resource configuration efficiency can be improved, and transmission requirements of more terminal devices can be met.

The following describes, in detail with reference to the accompanying drawings, the communication method provided in embodiments of this application. Embodiments provided in this application are applicable to any communication scenario in which a transmitter device communicates with a receiver device, for example, are applicable to the communication system shown in FIG. 1.

It should be understood that embodiments of this application are applicable to any communication scenario in which a transmitter device communicates with a receiver device. In other words, embodiments of this application are applicable to an uplink communication scenario or a downlink communication scenario. For example, uplink communication is communication between a terminal device and a network device, and in this case, a first apparatus is a terminal device, and a second apparatus is a network device. Downlink communication is communication between a network device and a terminal device, and in this case, a first apparatus is a network device, and a second apparatus is a terminal device. Therefore, the first apparatus or the second apparatus may be a network device or a terminal device, or may be a chip, a chip system, or a circuit in a network device or a terminal device. This is not limited in this application.

Without loss of generality, for ease of understanding and description, in the following embodiments of this application, an uplink communication scenario in a grant-free system is used as an example to describe the solutions of this application. For example, the first apparatus may be a terminal device (for example, the UE 101 to the UE 106 shown in FIG. 1) or a network device (for example, the gNB 107 shown in FIG. 1), and the second apparatus may be a terminal device or a network device. It should be understood that, for implementations in a downlink communication scenario and a sidelink communication scenario, refer to related descriptions of the uplink communication scenario. Details are not described in this application.

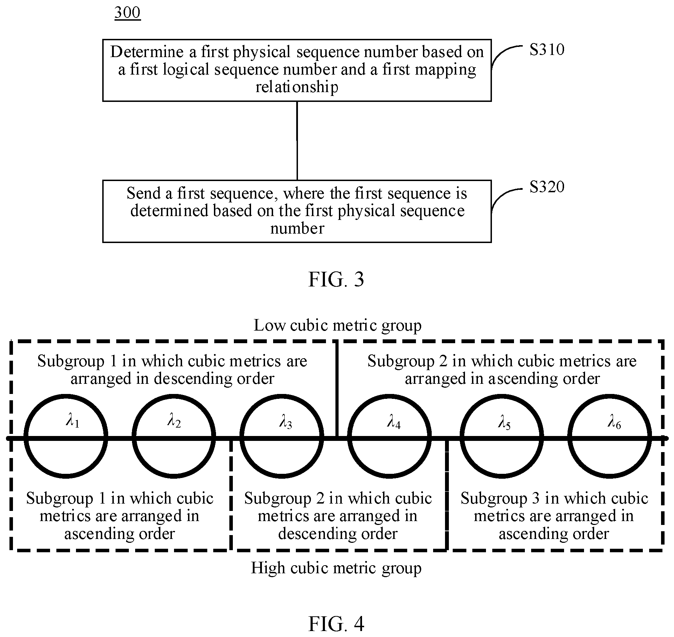

FIG. 3 is a schematic flowchart of a communication method 300 according to an embodiment of this application. As shown in FIG. 3, the method procedure may be performed by a first apparatus and a second apparatus, or may be performed by a module and/or a component (for example, a chip or an integrated circuit) that is installed in a first apparatus and a second apparatus and that has a corresponding function. This is not limited in this application. The following uses an example in which the first apparatus (for example, a terminal device) and the second apparatus (for example, a network device) are execution bodies for description. The communication method includes the following steps.

S310: The first apparatus determines a first physical sequence number based on a first logical sequence number and a first mapping relationship.

The first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to *M* consecutive physical sequence numbers is less than or equal to a first threshold, and the logical sequence number indicates a position index of the physical sequence number, where *M* is greater than or equal to 1.

It should be understood that the cubic polynomial exponential sequence may have a plurality of purposes, for example, may be used in a random access procedure of the terminal device.

The following first specifically describes the cubic polynomial exponential sequence in this embodiment of this application.

In an example, the cubic polynomial exponential sequence may be expressed as: ${s}_{a , b , c , d} \left(n\right) = {e}^{- j 2 π \left({an}^{3}+{bn}^{2}+cn+d\right) / N}$

*a* is a cubic term coefficient of the cubic polynomial exponential sequence, *b* is a quadratic term coefficient of the cubic polynomial exponential sequence, *c* is a linear term coefficient of the cubic polynomial exponential sequence, *d* is a constant term of the cubic polynomial exponential sequence, *N* is a sequence length of the cubic polynomial exponential sequence, *N* is a prime number, and *n* E {0, 1, ..., *N* - 1}.

For example, the cubic term coefficient *a* of the cubic polynomial exponential sequence is associated with the quadratic term coefficient *b* of the cubic polynomial exponential sequence. For example, it is assumed that *a* ∈ {1, 2, ... , *N* - 1}. *b* = 3*ak*Δ_{T}, *c = l*Δ_{F}*.* $k ∈ \left\{0,1,…,\left⌊N/{Δ}_{T}\right⌋-1\right\} , l ∈ \left\{0,1,…,\left⌊N/{Δ}_{F}\right⌋-1\right\}$ , and └ ┘ represents rounding down. For example, $\left⌊3.8\right⌋ = 3$ or $\left⌊2.1\right⌋ = 2$.

For example, the constant term *d* of the cubic polynomial exponential sequence may be considered as rotating all symbols in the sequence *s_{a,b,c,d}*(*n*) by a common phase *e*^{*-j*2*πd*/}*^{N}.* Phase rotation does not change a correlation and ambiguity of sequences. Therefore, without loss of generality, when *d* = 0, the cubic polynomial exponential sequence degenerates into *s_{a,b,c}*(*n*) *= e*^{*-j*2*π*(*an*3*+bn*²*+cn*)/*N*}.

It should be noted that, for ∀*τ* ∈ [0, Δ_{T} - 1], ∀*ν* E [0, Δ_{F} - 1], a cubic term coefficient *a*, a quadratic term coefficient *b*, and a linear term coefficient *c* of an ambiguity function of the cubic polynomial exponential sequence are not all zero. *τ* is a round-trip time (or a propagation delay), and *ν* is a Doppler frequency shift.

In this application, a sequence capacity of the cubic polynomial exponential sequence is $\left(N-1\right) ⋅ \left⌊N/{Δ}_{T}\right⌋ ⋅ \left⌊N/{Δ}_{F}\right⌋$, that is, the sequence capacity of the cubic polynomial exponential sequence is positively correlated with a cube of the sequence length *N*. Δ_{T} is a maximum round-trip time, and Δ_{F} is a maximum Doppler frequency shift.

For example, a product (namely, Δ_{T} × Δ_{F}) of the maximum round-trip time Δ_{T} and the maximum Doppler frequency shift Δ_{F} may be represented as a maximum zero-ambiguity zone area, where Δ_{T} × Δ_{F}*> N*. That is, the maximum zero-ambiguity zone area of the cubic polynomial exponential sequence may be greater than the sequence length, which means the maximum zero-ambiguity zone area of the cubic polynomial exponential sequence is not limited by the sequence length.

Optionally, the cubic polynomial exponential sequence may include a base sequence and an auxiliary sequence, where the base sequence *nₐ*(*n*) = *e*^{*- j*2*πan*^{3/*N*}}, and the auxiliary sequence *v_{b,c}*(*n*) *= e*^{*-j*2*π*(*bn*²*+cn*)/}*^{N}.* That is, the cubic polynomial exponential sequence in Formula (7) may be expressed as *s_{a,b,c}*(*n*) = *uₐ*(*n*) *· v_{b,c}*(*n*)*.* In other words, the cubic polynomial exponential sequence may be represented as a form of element-wise multiplication of the base sequence and the auxiliary sequence. Sequence lengths of the base sequence and the auxiliary sequence are both *N.* For example, if the base sequence is [*uₐ*(0), *u*ₐ(1), ..., *uₐ*(*N -* 1)], and the auxiliary sequence is [*v_{b,c}*(0), *v_{b,c}*(1), ... , *v_{b,c}*(*N -* 1)], a result of element-wise multiplication of the base sequence and the auxiliary sequence is [*u*ₐ(0) *· v_{b,c}*(0), *uₐ*(1)*· v_{b,c}*(1), ..., *uₐ*(*N -* 1) · *v_{b,c}*(*N* - 1)].

It should be understood that the base sequence *uₐ*(*n*) may be considered as a sequence associated with a cell, and different cells correspond to different base sequences. The auxiliary sequence *v_{b,c}*(*n*) may be considered as a sequence associated with a terminal device in a cell. Optionally, a maximum value of an ambiguity function of the base sequence *uₐ*(*n*) does not exceed $2 \sqrt{N}$, and a quantity of sequences (*N* - 1) of the base sequence is positively correlated with the sequence length *N*. A maximum value of an ambiguity function of the auxiliary sequence *v_{b,c}*(*n*) is $\sqrt{N}$, and a quantity of sequences $\left⌊N/{Δ}_{T}\right⌋ ⋅ \left⌊N/{Δ}_{F}\right⌋$ of the auxiliary sequence is positively correlated with a square of the sequence length *N*.

In this application, the first mapping relationship may be predefined. Predefinition may include advance definition, for example, definition in a protocol. Alternatively, the first mapping relationship is configured or preconfigured. Preconfiguration may be implemented by pre-storing corresponding code or a corresponding table in the first apparatus (for example, the terminal device) and the second apparatus (for example, the network device), or may be implemented in another manner that may indicate related information. A specific implementation of the first mapping relationship is not limited in this application.

For example, the first mapping relationship may exist, for example, is stored or transmitted, in a form of a table, a function, text, a character string, or the like.

In this application, that the cubic term coefficient of the cubic polynomial exponential sequence corresponding to each physical sequence number is the same may be understood as: Each physical sequence number corresponds to one cubic term coefficient, and the cubic term coefficient may correspond to one or more cubic polynomial exponential sequences. That is, cubic term coefficients of a plurality of cubic polynomial exponential sequences may be the same, and quadratic term coefficients and/or linear term coefficients of the plurality of cubic polynomial exponential sequences may be the same or different.

It should be understood that the cross-ambiguity function CAF is a function obtained by performing an ambiguity operation on two signals. That the maximum value of the cross-ambiguity function is less than or equal to the first threshold indicates that cross-ambiguity function values of any two different cubic polynomial exponential sequences in a range of a maximum round-trip time and a maximum Doppler frequency shift are all less than or equal to the first threshold, that is, interference between any two different cubic polynomial exponential sequences is less than or equal to the first threshold.

In this application, that the maximum value of the cross-ambiguity function of the cubic polynomial exponential sequences corresponding to the *M* consecutive physical sequence numbers is less than or equal to the first threshold may be understood as: When *M* is equal to 1, it indicates that a maximum value of a cross-ambiguity function of any two of a plurality of cubic polynomial exponential sequences corresponding to one physical sequence number is less than or equal to the first threshold; or when *M* is greater than 1, for example, *M* is equal to 2, it indicates that a maximum value of a cross-ambiguity function of any two of cubic polynomial exponential sequences corresponding to two consecutive physical sequence numbers is less than or equal to the first threshold.

Optionally, the first threshold may be configured or preconfigured. For example, the first threshold *δ* may satisfy: $\sqrt{N} \leq δ \leq 2 \sqrt{N}$

*N* is a sequence length of the cubic polynomial exponential sequence, and *N* is a prime number.

In this application, a configuration may be a signaling configuration, or may be described as configuration signaling. For example, the signaling configuration may be configured by the second apparatus (for example, the network device) by sending signaling. The signaling may be RRC, DCI, a SIB, or the like. For another example, the signaling configuration may be sent to the first apparatus (for example, the terminal device) through preconfigured signaling, or configured for the first apparatus (for example, the terminal device) in a preconfiguration manner. Herein, the preconfiguration is defining or configuring a value of a corresponding parameter in advance in a protocol manner, where the value of the corresponding parameter may be stored in the first apparatus (for example, the terminal device) during communication with the first apparatus (for example, the terminal device). This is not limited in this application.

In this application, that the logical sequence number indicates the position index of the physical sequence number may be understood as: A logical sequence number #a is a position index of a physical sequence number #a in all physical sequence numbers, where the logical sequence number #a corresponds to the physical sequence number #a. It should be noted that, in this application, there may be two or more same physical sequence numbers, and logical sequence numbers that are in one-to-one correspondence with the two or more same physical sequence numbers are different from each other. In other words, each physical sequence number corresponds to one logical sequence number, that is, a corresponding physical sequence number may be uniquely determined based on a logical sequence number.

The following uses examples to describe a specific representation form of the first mapping relationship or a grouping and ordering method for cubic polynomial exponential sequences in this embodiment of this application. It should be understood that a correspondence between a physical sequence number and a logical sequence number of a cubic polynomial exponential sequence may be determined based on the first mapping relationship, and then the cubic polynomial exponential sequence corresponding to the physical sequence number or the logical sequence number may be determined for use in random access of the terminal device. It should be noted that grouping and ordering in the following manner 2, manner 3, and manner 4 is based on manner 1.

### Manner 1

For example, a plurality of cubic polynomial exponential sequences separately belong to a first cubic metric group or a second cubic metric group, where a cubic metric of each cubic polynomial exponential sequence in the first cubic metric group is less than or equal to a first cubic metric, and a cubic metric of each cubic polynomial exponential sequence in the second cubic metric group is greater than the first cubic metric.

Further, the first cubic metric group includes one or more first subgroups. Optionally, the plurality of first subgroups are determined based on a maximum value of a cross-ambiguity function of a plurality of cubic polynomial exponential sequences in the first cubic metric group, the plurality of first subgroups are arranged in ascending order of cubic metrics of corresponding cubic polynomial exponential sequences, each first subgroup corresponds to one or more cubic term coefficients, a plurality of cubic term coefficients corresponding to a last first subgroup through a 1^{st} first subgroup are alternately arranged in ascending or descending order of the cubic metrics of the cubic polynomial exponential sequences, and one or more cubic term coefficients in the last first subgroup are arranged in ascending order of cubic metrics of corresponding cubic polynomial exponential sequences.

Similarly, the second cubic metric group includes one or more second subgroups. Optionally, the plurality of second subgroups are determined based on a maximum value of a cross-ambiguity function of a plurality of cubic polynomial exponential sequences in the second cubic metric group, the plurality of second subgroups are arranged in ascending order of cubic metrics of corresponding cubic polynomial exponential sequences, each second subgroup corresponds to one or more cubic term coefficients, a plurality of cubic term coefficients corresponding to a 1^{st} second subgroup through a last second subgroup are alternately arranged in ascending or descending order of the cubic metrics of the cubic polynomial exponential sequences, and one or more cubic term coefficients in the 1^{st} second subgroup are arranged in ascending order of cubic metrics of corresponding cubic polynomial exponential sequences.

It should be understood that a maximum value of a cross-ambiguity function of any two cubic polynomial exponential sequences in each first subgroup or second subgroup is less than or equal to a first threshold *δ*.

Optionally, the first cubic metric may be configured or preconfigured. For example, a value of the first cubic metric may be determined according to Formula (1). In this embodiment of this application, the first cubic metric group may be referred to as a low cubic metric group, and the second cubic metric group may be referred to as a high cubic metric group. It should be understood that the low cubic metric group and the high cubic metric group are relative. This is not limited in this application. For example, it is assumed that the first cubic metric CM = 1.2 dB. A plurality of cubic polynomial exponential sequences are divided into a low cubic metric group and a high cubic metric group by using the cubic metric CM = 1.2 dB as a boundary. For example, when a cubic metric CM of a cubic polynomial exponential sequence is greater than 1.2 dB, the cubic polynomial exponential sequence belongs to the high cubic metric group; or when a cubic metric CM of a cubic polynomial exponential sequence is less than or equal to 1.2 dB, the cubic polynomial exponential sequence belongs to the low cubic metric group.

Optionally, the first subgroup may be referred to as a first set, which represents one or more first sets to which all cubic polynomial exponential sequences in the first cubic metric group belong after division. Similarly, the second subgroup may be referred to as a second set, which represents one or more second sets to which all cubic polynomial exponential sequences in the second cubic metric group belong after division. For ease of description, the first subgroup and the second subgroup are used as examples for description in this application.

FIG. 4 is a diagram of division of cubic polynomial exponential sequences according to an embodiment of this application. As shown in FIG. 4, cubic polynomial exponential sequences corresponding to a same cubic term coefficient may be classified into a low cubic metric group or a high cubic metric group. In the low cubic metric group or the high cubic metric group, cubic polynomial exponential sequences corresponding to a same cubic term coefficient may be classified into a same subgroup. Each subgroup may correspond to a plurality of cubic term coefficients, a mean value of cubic metrics may be determined based on cubic polynomial exponential sequences corresponding to a same cubic term coefficient, and different cubic term coefficients may be arranged in ascending or descending order of corresponding mean values of cubic metrics. In the low cubic metric group and the high cubic metric group, cubic term coefficients of cubic polynomial exponential sequences may be the same.

For example, it is assumed that there are a plurality of cubic polynomial exponential sequences. The plurality of cubic polynomial exponential sequences separately belong to a low cubic metric group and a high cubic metric group by using a first cubic metric (for example, CM = 1.2 dB) as a boundary. The low cubic metric group includes a subgroup 1 and a subgroup 2. A cubic metric of a cubic polynomial exponential sequence in the subgroup 1 is less than a cubic metric of a cubic polynomial exponential sequence in the subgroup 2. The subgroup 1 corresponds to three cubic term coefficients *λ*₁ , *λ*₂, and *λ*₃, and mean values of cubic metrics of cubic polynomial exponential sequences corresponding to the three cubic term coefficients *λ*₁, *λ*₂, and *λ*₃ are arranged in descending order. The subgroup 2 corresponds to three cubic term coefficients *λ*₄, *λ*₅, and *λ*₆, and mean values of cubic metrics of cubic polynomial exponential sequences corresponding to the three cubic term coefficients *λ*₄, *λ*₅, and *λ*₆ are arranged in ascending order. The high cubic metric group includes a subgroup 1, a subgroup 2, and a subgroup 3, and cubic metrics of cubic polynomial exponential sequences corresponding to the subgroup 1, the subgroup 2, and the subgroup 3 are arranged in ascending order. The subgroup 1 corresponds to two cubic term coefficients *λ*₁ and *λ*₂, and a mean value of cubic metrics of cubic polynomial exponential sequences corresponding to *λ*₁ is less than a mean value of cubic metrics of cubic polynomial exponential sequences corresponding to *λ*₂. The subgroup 2 corresponds to two cubic term coefficients *λ*₃ and *λ*₄, and a mean value of cubic metrics of cubic polynomial exponential sequences corresponding to *λ*₃ is greater than a mean value of cubic metrics of cubic polynomial exponential sequences corresponding to *λ*₄. The subgroup 3 corresponds to two cubic term coefficients *λ*₅ and *λ*₆, and a mean value of cubic metrics of cubic polynomial exponential sequences corresponding to *λ*₅ is less than a mean value of cubic metrics of cubic polynomial exponential sequences corresponding to *λ*₆.

Based on this implementation, a general division method for cubic polynomial exponential sequences is provided, so that a maximum value of a cross-ambiguity function of adjacent cubic polynomial exponential sequences is less than or equal to the first threshold, and cubic metrics of the adjacent cubic polynomial exponential sequences do not jump, to improve efficiency of a power amplifier of the terminal device.

### Manner 2

For example, in a low cubic metric group, cubic term coefficients of all cubic polynomial exponential sequences in each first subgroup are the same, and a plurality of first subgroups are arranged in ascending order of cubic metrics of cubic polynomial exponential sequences in the subgroups. A maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$.

Similarly, in a high cubic metric group, cubic term coefficients of all cubic polynomial exponential sequences in each second subgroup are the same, and a plurality of second subgroups are arranged in ascending order of cubic metrics of cubic polynomial exponential sequences in the subgroups. A maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$.

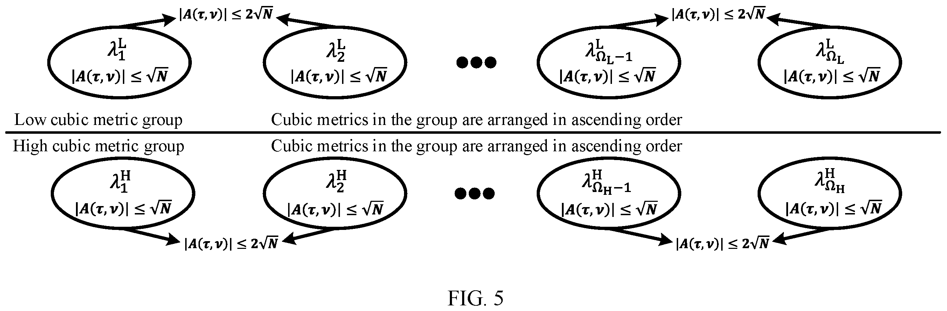

FIG. 5 is a diagram of division of cubic polynomial exponential sequences according to an embodiment of this application.

For example, it is assumed that there are a plurality of cubic polynomial exponential sequences. The plurality of cubic polynomial exponential sequences separately belong to a low cubic metric group and a high cubic metric group by using a first cubic metric (for example, CM = 1.2 dB) as a boundary. The low cubic metric group includes Ω_{L} first subgroups, the Ω_{L} first subgroups one-to-one correspond to Ω_{L} cubic term coefficients, namely, ${λ}_{1}^{L} , {λ}_{2}^{L} , … , {λ}_{{Ω}_{L} - 1}^{L} , {λ}_{{Ω}_{L}}^{L}$, and mean values of cubic metrics of cubic polynomial exponential sequences corresponding to the Ω_{L} cubic term coefficients are arranged in ascending order, that is, ${CM}_{1}^{L} \leq {CM}_{2}^{L} \leq ⋯ \leq {CM}_{{Ω}_{L} - 1}^{L} \leq {CM}_{{Ω}_{L}}^{L}$ . A maximum value of a cross-ambiguity function of cubic polynomial exponential sequences in any first subgroup is less than or equal to $\sqrt{N}$*,* and a maximum value of a cross-ambiguity function of cubic polynomial exponential sequences from two adjacent first subgroups is less than or equal to $2 \sqrt{N}$. Ω_{L} is an integer.

Similarly, the high cubic metric group includes Ω_{H} second subgroups, the Ω_{H} second subgroups one-to-one correspond to Ω_{H} cubic term coefficients, namely, ${λ}_{1}^{H} , {λ}_{2}^{H} , … , {λ}_{{Ω}_{H} - 1}^{H} , {λ}_{{Ω}_{H}}^{H}$, and mean values of cubic metrics of cubic polynomial exponential sequences corresponding to the Ω_{H} cubic term coefficients are arranged in ascending order, that is, ${CM}_{1}^{H} \leq {CM}_{2}^{H} \leq ⋯ \leq {CM}_{{Ω}_{H} - 1}^{H} \leq {CM}_{{Ω}_{H}}^{H}$ . A maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. Ω_{H} is an integer.

Based on the foregoing manner 2, the following presents, in a form of table, an example of the first mapping relationship in this application. For example, Table 2 shows a mapping relationship between a logical sequence number, a cubic term coefficient, a group, a subgroup number, and a physical sequence number of a cubic polynomial exponential sequence under the condition that a maximum value of a cross-ambiguity function of cubic polynomial exponential sequences in a first subgroup or a second subgroup is less than or equal to $\sqrt{N}$*.* That is, the cubic term coefficient, the group, the subgroup number, and the physical sequence number may be correspondingly determined based on the logical sequence number, thereby determining the cubic polynomial exponential sequence, namely, a first sequence in step S320.

**Table 2**

| Logical sequence number | Cubic term coefficient a | Cubic polynomial exponential sequence | Group | Subgroup number | Sequence number in subgroup | Physical sequence number |
|---|---|---|---|---|---|---|
| 0 | ${λ}_{1}^{L}$ | | Low cubic metric group | 1 | 1 | ${λ}_{1}^{L}$ |
| 1 | ${λ}_{2}^{L}$ | ${s}_{{λ}_{2}^{L} , k , l} \left(n\right)$ $= {e}^{- j 2 π \left({λ}_{2}^{L}{n}^{3}+3{λ}_{2}^{L}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$ | Low cubic metric group | 2 | 1 | ${λ}_{2}^{L}$ |
| ⋮ | ⋮ | ⋮ | ⋮ | ⋮ | ⋮ | ⋮ |
| Ω_{L} - 2 | ${λ}_{{Ω}_{L} - 1}^{L}$ | ${s}_{{λ}_{{Ω}_{L} - 1}^{L} , k , l} \left(n\right)$$= {e}^{- j 2 π \left({λ}_{{Ω}_{L} - 1}^{L}{n}^{3}+3{λ}_{{Ω}_{L} - 1}^{L}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$ | Low cubic metric group | Ω_{L} - 1 | 1 | ${λ}_{{Ω}_{L} - 1}^{L}$ |
| Ω_{L} - 1 | ${λ}_{{Ω}_{L}}^{L}$ | ${s}_{{λ}_{{Ω}_{L}}^{L} , k , l} \left(n\right)$ $= {e}^{- j 2 π \left({λ}_{{Ω}_{L}}^{L}{n}^{3}+3{λ}_{{Ω}_{L}}^{L}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$ | Low cubic metric group | Ω_{L} | 1 | ${λ}_{{Ω}_{L}}^{L}$ |
| Ω_{L} | 1${λ}_{1}^{H}$ | ${s}_{{λ}_{1}^{H} , k , l} \left(n\right)$ $= {e}^{- j 2 π \left({λ}_{1}^{H}{n}^{3}+3{λ}_{1}^{H}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$ | High cubic metric group | 1 | 1 | ${λ}_{1}^{H}$ |
| Ω_{L} + 1 | ${λ}_{2}^{H}$ | ${s}_{{λ}_{2}^{H} , k , l} \left(n\right)$ $= {e}^{- j 2 π \left({λ}_{2}^{H}{n}^{3}+3{λ}_{2}^{H}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$ | High cubic metric group | 2 | 1 | ${λ}_{2}^{H}$ |
| ⋮ | ⋮ | ⋮ | ⋮ | ⋮ | ⋮ | ⋮ |
| Ω_{L} + Ω_{H} -2 | ${λ}_{{Ω}_{H} - 1}^{H}$ | ${s}_{{λ}_{{Ω}_{H} - 1}^{H} , k , l} \left(n\right)$$= {e}^{- j 2 π \left({λ}_{{Ω}_{H} - 1}^{H}{n}^{3}+3{λ}_{{Ω}_{H} - 1}^{H}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$ | High cubic metric group | Ω_{H} - 1 | 1 | ${λ}_{{Ω}_{H} - 1}^{H}$ |
| Ω_{L} + Ω_{H} - 1 | ${λ}_{{Ω}_{H}}^{H}$ | ${s}_{{λ}_{{Ω}_{H}}^{H} , k , l} \left(n\right)$ $= {e}^{- j 2 π \left({λ}_{{Ω}_{H}}^{H}{n}^{3}+3{λ}_{{Ω}_{H}}^{H}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$ | High cubic metric group | Ω_{H} | 1 | ${λ}_{{Ω}_{H}}^{H}$ |

In this embodiment of this application, Ω_{L} and Ω_{H} are integers. A value corresponding to each logical sequence number in Table 2 is an integer greater than or equal to 0. For example, for the logical sequence number Ω_{L} - 2, Ω_{L} is an integer greater than or equal to 2, and similarly for other logical sequence numbers. Values corresponding to each subgroup number and sequence number in a subgroup in Table 2 are all integers greater than or equal to 1. For example, for the subgroup number Ω_{H} - 1, Ω_{H} is an integer greater than 1, and similarly for other subgroup numbers. It should be understood that values of the foregoing logical sequence numbers are 0, 1, 2, ...; optionally, the values of the foregoing logical sequence numbers may alternatively be 1, 2, 3, ... Similarly, values of the foregoing subgroup numbers are 1, 2, ...; optionally, the values of the foregoing subgroup numbers may alternatively be 0, 1, 2, ... This is not limited in this application, provided that the first apparatus and/or the second apparatus may uniquely determine the corresponding physical sequence number based on the logical sequence number.

It should be understood that Table 2 is merely an example provided for ease of understanding, and does not constitute any limitation on the technical solutions of this application. Optionally, a quantity of correspondences between the logical sequence number and the physical sequence number in Table 2 (for example, a row in the table) is not limited in this application. For example, the low cubic metric group and the high cubic metric group in Table 2 may be presented as separate new tables. In other words, Table 2 may be split into a plurality of other tables as examples. A splitting manner is not limited in this application. Optionally, a quantity of columns in Table 2 is not limited in this application either. For example, the subgroup number, the sequence number in a subgroup, or the like may be omitted from Table 2. This is not limited in this application.

It can be learned from Table 2 that, in the high cubic metric group or the low cubic metric group, each subgroup corresponds to one cubic term coefficient, each cubic term coefficient corresponds to one or more cubic polynomial exponential sequences, and for the plurality of cubic polynomial exponential sequences, at least one of a quadratic term coefficient and a linear term coefficient is different. The logical sequence numbers are 0, 1, ..., and Ω_{L} + Ω_{H} - 1 . Each physical sequence number corresponds to a cubic term coefficient, and each physical sequence number is the same as the corresponding cubic term coefficient. Optionally, in the high cubic metric group and the low cubic metric group, there are same cubic term coefficients, for example, ${λ}_{1}^{L} = {λ}_{2}^{H}$. Correspondingly, the physical sequence numbers satisfy ${λ}_{1}^{L} = {λ}_{2}^{H}$, but the logical sequence numbers corresponding to the physical sequence numbers are different, that is, 0 ≠ Ω_{L} - 1. In other words, a logical sequence number is in one-to-one correspondence with a physical sequence number, and a cubic term coefficient and a group to which the cubic term coefficient belongs may be uniquely determined based on the logical sequence number.

Based on this implementation, all cubic polynomial exponential sequences in each first subgroup or each second subgroup correspond to a same cubic term coefficient, so that the implementation is simple, and configuration efficiency is high.

### Manner 3

For example, in a low cubic metric group, each first subgroup includes one or more cubic polynomial exponential sequences with different cubic term coefficients, a maximum value of a cross-ambiguity function of cubic polynomial exponential sequences in any first subgroup is less than or equal to a first threshold *δ*, and a maximum value of a cross-ambiguity function of cubic polynomial exponential sequences from two adjacent first subgroups is less than or equal to $2 \sqrt{N}$*.*

Similarly, in a high cubic metric group, each second subgroup includes one or more cubic polynomial exponential sequences with different cubic term coefficients, a maximum value of a cross-ambiguity function of cubic polynomial exponential sequences in any second subgroup is less than or equal to a first threshold *δ*, and a maximum value of a cross-ambiguity function of cubic polynomial exponential sequences from two adjacent second subgroups is less than or equal to $2 \sqrt{N}$.

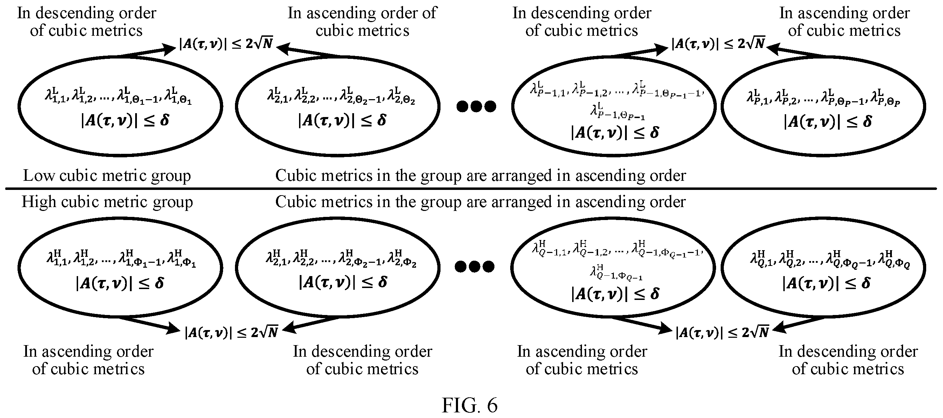

FIG. 6 is a diagram of division of cubic polynomial exponential sequences according to an embodiment of this application.

For example, it is assumed that there are a plurality of cubic polynomial exponential sequences. The plurality of cubic polynomial exponential sequences separately belong to a low cubic metric group and a high cubic metric group by using a first cubic metric (for example, CM = 1.2 dB) as a boundary. The low cubic metric group includes *P* first subgroups, namely, ${λ}_{1}^{L} , {λ}_{2}^{L} , … , {λ}_{P - 1}^{L} , {λ}_{P}^{L}$, and each first subgroup corresponds to Θ cubic term coefficients. That is, the low cubic metric group includes ${Ω}_{L} = {\sum }_{p = 1}^{P} {Θ}_{p}$ cubic term coefficients, as shown below: ${λ}_{1,1}^{L} , {λ}_{1,2}^{L} , … , {λ}_{1 , {Θ}_{1} - 1}^{L} , {λ}_{1 , {Θ}_{1}}^{L} ,$ ${λ}_{2,1}^{L} , {λ}_{2,2}^{L} , … , {λ}_{2 , {Θ}_{2} - 1}^{L} , {λ}_{2 , {Θ}_{2}}^{L} ,$ , ..., ${λ}_{P - 1,1}^{L} , {λ}_{P - 1,2}^{L} , … , {λ}_{P - 1 , {Θ}_{P - 1} - 1}^{L} , {λ}_{P - 1 , {Θ}_{P - 1}}^{L} ,$ ${λ}_{P , 1}^{L} , {λ}_{P , 2}^{L} , … , {λ}_{P , {Θ}_{P} - 1}^{L} , {λ}_{P , {Θ}_{P}}^{L}$

The *P* subgroups are arranged in ascending order of cubic metrics of cubic polynomial exponential sequences in the subgroups, that is, ${CM}_{1}^{L} \leq {CM}_{2}^{L} \leq ⋯ \leq {CM}_{P - 1}^{L} \leq {CM}_{P}^{L}$. Cubic term coefficients in a *p*^{th} first subgroup (1 ≤ *p* ≤ *P*) to a 1^{st} first subgroup are alternately arranged in ascending or descending order of cubic metrics of cubic polynomial exponential sequences. Cubic term coefficients in the *p*^{th} first subgroup are arranged in ascending order of cubic metrics of cubic polynomial exponential sequences. A maximum value of a cross-ambiguity function of cubic polynomial exponential sequences in each first subgroup is less than or equal to *δ*, and a maximum value of a cross-ambiguity function of cubic polynomial exponential sequences from any two adjacent first subgroups is less than or equal to $2 \sqrt{N}$. *P* is an integer greater than or equal to 1.

Similarly, the high cubic metric group includes *Q* second subgroups, namely, ${λ}_{1}^{H} , {λ}_{2}^{H} , … , {λ}_{Q - 1}^{H} , {λ}_{Q}^{H}$*,* and each second subgroup corresponds to Φ cubic term coefficients. That is, the high cubic metric group includes ${Ω}_{H} = {\sum }_{q = 1}^{Q} {Φ}_{q}$ cubic term coefficients, as shown below: ${λ}_{1,1}^{H} , {λ}_{1,2}^{H} , … , {λ}_{1 , {Φ}_{1} - 1}^{H} , {λ}_{1 , {Φ}_{1}}^{H} ,$ ${λ}_{2,1}^{H} , {λ}_{2,2}^{H} , … , {λ}_{2 , {Φ}_{2} - 1}^{H} , {λ}_{2 , {Φ}_{2}}^{H} ,$ , ..., ${λ}_{Q - 1,1}^{H} , {λ}_{Q - 1,2}^{H} , … , {λ}_{Q - 1 , {Φ}_{Q - 1} - 1}^{H} ,$ ${λ}_{Q - 1 , {Φ}_{Q - 1}}^{H} , {λ}_{Q , 1}^{H} , {λ}_{Q , 2}^{H} , … , {λ}_{Q , {Φ}_{Q} - 1}^{H} , {λ}_{Q , {Φ}_{Q}}^{H}$

The *Q* subgroups are arranged in ascending order of cubic metrics of cubic polynomial exponential sequences in the subgroups, that is, ${CM}_{1}^{H} \leq {CM}_{2}^{H} \leq ⋯ \leq {CM}_{Q - 1}^{H} \leq {CM}_{Q}^{H}$. Cubic term coefficients in a 1^{st} second subgroup to a *q*^{th} second subgroup (1 ≤ *q* ≤ *Q*) are alternately arranged in ascending or descending order of cubic metrics of cubic polynomial exponential sequences. Cubic term coefficients in the 1^{st} second subgroup are arranged in ascending order of cubic metrics of cubic polynomial exponential sequences. A maximum value of a cross-ambiguity function of cubic polynomial exponential sequences in each second subgroup is less than or equal to *δ*, and a maximum value of a cross-ambiguity function of cubic polynomial exponential sequences from any two adjacent second subgroups is less than or equal to $2 \sqrt{N}$. Q is an integer greater than or equal to 1.

Based on the foregoing manner 3, the following presents, in a form of table, an example of the first mapping relationship in this application. For example, Table 3 shows a mapping relationship between a logical sequence number, a cubic term coefficient, a group, a subgroup number, and a physical sequence number of a cubic polynomial exponential sequence under the condition that a maximum value of a cross-ambiguity function of cubic polynomial exponential sequences in a first subgroup or a second subgroup is less than or equal to δ ( $\sqrt{N} < δ < 2 \sqrt{N}$). That is, the cubic term coefficient, the group, the subgroup number, and the physical sequence number may be correspondingly determined based on the logical sequence number, thereby determining the cubic polynomial exponential sequence, namely, a first sequence in step S320.

**Table 3**

| Logical sequence number | Cubic term coefficient | Group | Subgroup number | Sequence number | Physical sequence number |
|---|---|---|---|---|---|
| 0 | ${λ}_{1,1}^{L}$ | Low cubic metric group | 1 | 1 | ${λ}_{1 , 1}^{L}$ |
| 1 | ${λ}_{1 , 2}^{L}$ | Low cubic metric group | 1 | 2 | ${λ}_{1 , 2}^{L}$ |
| ⋮ | ⋮ | ⋮ | ⋮ | ⋮ | ⋮ |
| Θ₁ - 2 | ${λ}_{1 , {Θ}_{1} - 1}^{L}$ | Low cubic metric group | 1 | Θ₁ -- 1 | ${λ}_{1 , {Θ}_{1} - 1}^{L}$ |
| Θ₁ - 1 ${λ}_{1 , {Θ}_{1}}^{L}$ | ${λ}_{1 , {Θ}_{1}}^{L}$ | Low cubic metric group | 1 | Θ₁ | |
| Θ₁ | ${λ}_{2 , 1}^{L}$ | Low cubic metric group | 2 | 1 | ${λ}_{2 , 1}^{L}$ |
| Θ₁ + 1 | ${λ}_{2 , 2}^{L}$ | Low cubic metric group | 2 | 2 | ${λ}_{2 , 2}^{L}$ |
| ⋮ | ⋮ | ⋮ | ⋮ | ⋮ | ⋮ |
| Θ₁ + Θ₂ - 2 | ${λ}_{2 , {Θ}_{2} - 1}^{L}$ | Low cubic metric group | 2 | Θ₂ - 1 | ${λ}_{2 , {Θ}_{2} - 1}^{L}$ |
| Θ₁ + Θ₂ - 1 | ${λ}_{2 , {Θ}_{2}}^{L}$ | Low cubic metric group | 2 | Θ₂ | ${λ}_{2 , {Θ}_{2}}^{L}$ |
| ⋮ | ⋮ | ⋮ | ⋮ | ⋮ | ⋮ |
| Θ₁ + Θ₂ + ··· + Θ_{*P*-2} | ${λ}_{P - 1 , 1}^{L}$ | Low cubic metric group | *P*-1 | 1 | ${λ}_{P - 1 , 1}^{L}$ |
| Θ₁ + Θ₂ + ··· + Θ_{*P*-2} + 1 | ${λ}_{P - 1 , 2}^{L}$ | Low cubic metric group | *P*-1 | 2 | ${λ}_{P - 1 , 2}^{L}$ |
| ⋮ | ⋮ | ⋮ | ⋮ | ⋮ | ⋮ |
| Θ₁ + Θ₂ + ··· *+* Θ*_{P-1}* - 2 | ${λ}_{P - 1 , {Θ}_{P - 1} - 1}^{L}$ | Low cubic metric group | *P*-1 | Θ_{*P*-1} - 1 | ${λ}_{P - 1 , {Θ}_{P - 1} - 1}^{L}$ |
| Θ₁ + Θ₂ + ··· + Θ_{*P*-1} - 1 | ${λ}_{P - 1 , {Θ}_{P - 1}}^{L}$ | Low cubic metric group | *P*-1 | Θ_{*P*-1} | ${λ}_{P - 1 , {Θ}_{P - 1}}^{L}$ |
| Θ₁ + Θ₂ + ··· + Θ_{*P*-1} | ${λ}_{P , 1}^{L}$ | Low cubic metric group | *P* | 1 | ${λ}_{P , 1}^{L}$ |
| Θ₁ + Θ₂ + ··· *+* Θ_{*P*-1} + 1 | ${λ}_{P , 2}^{L}$ | Low cubic metric group | *P* | 2 | ${λ}_{P , 2}^{L}$ |
| ⋮ | ⋮ | ⋮ | ⋮ | ⋮ | ⋮ |
| Θ₁ + Θ₂ + ··· + Θ*_{P}* - 2 | ${λ}_{P , {Θ}_{P} - 1}^{L}$ | Low cubic metric group | *P* | Θ*_{P}* - 1 | ${λ}_{P , {Θ}_{P} - 1}^{L}$ |
| Θ₁ + Θ₂ + ··· + Θ*_{P}* - 1 | ${λ}_{P , {Θ}_{P}}^{L}$ | Low cubic metric group | *P* | Θ*_{P}* | ${λ}_{P , {Θ}_{P}}^{L}$ |
| Θ₁ + Θ₂ + ··· + Θ*_{P}* | ${λ}_{1 , 1}^{H}$ | High cubic metric group | 1 | 1 | ${λ}_{1,1}^{H}$ |
| Θ₁ + Θ₂ + ··· + Θ*_{P}* + 1 | ${λ}_{1,2}^{H}$ | High cubic metric group | 1 | 2 | ${λ}_{1,2}^{H}$ |
| ⋮ | ⋮ | ⋮ | ⋮ | ⋮ | ⋮ |
| Θ₁ + Θ₂ + ··· + Θ*_{P}* + Φ₁ - 2 | ${λ}_{1 , {Φ}_{1} - 1}^{H}$ | High cubic metric group | 1 | Φ₁ - 1 | ${λ}_{1 , {Φ}_{1} - 1}^{H}$ |
| Θ₁ + Θ₂ + ··· + Θ*_{P}* + Φ₁ - 1 | ${λ}_{1 , {Φ}_{1}}^{H}$ | High cubic metric group | 1 | Φ₁ | ${λ}_{1 , {Φ}_{1}}^{H}$ |
| Θ₁ + Θ₂ + ··· + Θ*_{P}* + Φ₁ | ${λ}_{2 , 1}^{H}$ | High cubic metric group | 2 | 1 | ${λ}_{2,1}^{H}$ |
| Θ₁ + Θ₂ + ··· + Θ*_{P}* + Φ₁ + 1 | ${λ}_{2 , 2}^{H}$ | High cubic metric group | 2 | 2 | ${λ}_{2 , 2}^{H}$ |
| ⋮ | ⋮ | ⋮ | ⋮ | ⋮ | ⋮ |
| Θ₁ + Θ₂ + ··· + Θ*_{P}* + Φ₁ + Φ₂ - 2 | ${λ}_{2 , {Φ}_{2} - 1}^{H}$ | High cubic metric group | 2 | Φ₂ - 1 | ${λ}_{2 , {Φ}_{2} - 1}^{H}$ |
| Θ₁ + Θ₂ + ··· + Θ*_{P}* + Φ₁ + Φ₂ - 1 | ${λ}_{2 , {Φ}_{2}}^{H}$ | High cubic metric group | 2 | Φ₂ | ${λ}_{2 , {Φ}_{2}}^{H}$ |
| ⋮ | ⋮ | ⋮ | ⋮ | ⋮ | ⋮ |
| Θ₁ + Θ₂ + ··· + Θ*_{P}* + Φ₁ + Φ₂ + ··· + Φ_{*Q*-2} | ${λ}_{Q - 1 , 1}^{H}$ | High cubic metric group | *Q-1* | 1 | ${λ}_{Q - 1 , 1}^{H}$ |
| Θ₁ + Θ₂ + ··· + Θ*_{P}* + Φ₁ + Φ₂ + ··· + Φ_{*Q*-2} + 1 | ${λ}_{Q - 1 , 2}^{H}$ | High cubic metric group | *Q-1* | 2 | ${λ}_{Q - 1 , 2}^{H}$ |
| ⋮ | ⋮ | ⋮ | ⋮ | ⋮ | ⋮ |
| Θ₁ + Θ₂ + ··· + Θ*_{P}* + Φ₁ + Φ₂ + ··· + Φ_{*Q*-1} - 2 | ${λ}_{Q - 1 , {Φ}_{Q - 1} - 1}^{H}$ | High cubic metric group | *Q-*1 | Φ_{*Q*-1} - 1 | ${λ}_{Q - 1 , {Φ}_{Q - 1} - 1}^{H}$ |
| Θ₁ + Θ₂ + ··· *+ Θ_{P}* + Φ₁ + Φ₂ + ··· + Φ_{Q-1} - 1 | ${λ}_{Q - 1 , {Φ}_{Q - 1}}^{H}$ | High cubic metric group | *Q-*1 | Φ_{*Q*-1} | ${λ}_{Q - 1 , {Φ}_{Q - 1}}^{H}$ |
| Θ₁ + Θ₂ + ··· + Θ*_{P}* + Φ₁ + Φ₂ + ··· + Φ_{*Q*-1} | ${λ}_{Q , 1}^{H}$ | High cubic metric group | *Q* | 1 | ${λ}_{Q , 1}^{H}$ |
| Θ₁ + Θ₂ + ··· + Θ*_{P}* + Φ₁ + Φ₂ + ··· + Φ_{Q-1} + 1 | ${λ}_{Q , 2}^{H}$ | High cubic metric group | *Q* | 2 | ${λ}_{Q , 2}^{H}$ |
| ⋮ | ⋮ | ⋮ | ⋮ | ⋮ | ⋮ |
| Θ₁ + Θ₂ + ··· + Θ_{P} + Φ₁ + Φ₂ + ··· + Φ*_{Q}* - 2 | ${λ}_{Q , {Φ}_{Q} - 1}^{H}$ | High cubic metric group | *Q* | Φ_{Q}-1 | ${λ}_{Q , {Φ}_{Q} - 1}^{H}$ |
| Θ₁ + Θ₂ + ... + Θ*_{P}* + Φ₁ + Φ₂ + ... + Φ*_{Q}* - 1 | ${λ}_{Q , {Φ}_{Q}}^{H}$ | Hight cubic metric group | *Q* | Φ*_{Q}* | ${λ}_{Q , {Φ}_{Q}}^{H}$ |

In this embodiment of this application, Θ₁, Θ₂, ..., Θ*_{P}*, P, Q, Φ₁, Φ₂, ..., and Φ*_{Q}* are integers. A value corresponding to each logical sequence number in Table 3 is an integer greater than or equal to 0. For example, for the logical sequence number Θ₁ - 1, Θ₁ is an integer greater than or equal to 1, and similarly for other logical sequence numbers. Similarly, values corresponding to each subgroup number and sequence number in a subgroup in Table 3 are all integers greater than or equal to 1. For example, for the subgroup number P - 1, P is an integer greater than 1. It should be understood that values of the foregoing logical sequence numbers are 0, 1, 2, ...; optionally, the values of the foregoing logical sequence numbers may alternatively be 1, 2, 3, ... Similarly, values of the foregoing subgroup numbers and sequence numbers in a subgroup are 1, 2, ...; optionally, the values of the foregoing subgroup numbers and sequence numbers in a subgroup may alternatively be 0, 1, 2, ... This is not limited in this application, provided that the first apparatus and/or the second apparatus may uniquely determine the corresponding physical sequence number based on the logical sequence number.

It should be understood that Table 3 is merely an example provided for ease of understanding, and does not constitute any limitation on the technical solutions of this application. Optionally, a quantity of correspondences between the logical sequence number and the physical sequence number in Table 3 (for example, a row in the table) is not limited in this application. For example, the low cubic metric group and the high cubic metric group in Table 3 may be presented as separate new tables. In other words, Table 3 may be split into a plurality of other tables as examples. A splitting manner is not limited in this application. Optionally, a quantity of columns in Table 3 is not limited in this application either. For example, the subgroup number, the sequence number in a subgroup, or the like may be omitted from Table 3. This is not limited in this application.

It can be learned from Table 3 that, in the low cubic metric group, each first subgroup corresponds to Θ cubic term coefficients, and in the high cubic metric group, each second subgroup corresponds to Φ cubic term coefficients, where each cubic term coefficient corresponds to one or more cubic polynomial exponential sequences, and for the plurality of cubic polynomial exponential sequences, at least one of a quadratic term coefficient, a linear term coefficient, and a constant term coefficient is different. The logical sequence numbers are 0, 1, ..., and Θ₁ + Θ₂ + ... + *Θ_{P}* + Φ₁ + Φ₂ + ··· + Φ*_{Q}* - 1. Each physical sequence number corresponds to a cubic term coefficient, and each physical sequence number is the same as the corresponding cubic term coefficient. Optionally, in the high cubic metric group and the low cubic metric group, there are same cubic term coefficients, for example, ${λ}_{1 , 2}^{L} = {λ}_{1 , 1}^{H}$. Correspondingly, the physical sequence numbers satisfy ${λ}_{1 , 2}^{L} = {λ}_{1 , 1}^{H}$, but the logical sequence numbers corresponding to the physical sequence numbers are different, that is, 1 ≠ Θ₁ + Θ₂ + ··· + Θ*_{P}*. In other words, the logical sequence number is in one-to-one correspondence with the physical sequence number, and the cubic term coefficient and the group to which the cubic term coefficient belongs may be uniquely determined based on the logical sequence number.

Based on this implementation, each first subgroup or each second subgroup includes cubic polynomial exponential sequences corresponding to one or more cubic term coefficients, a cross-ambiguity function of the cubic polynomial exponential sequences is small, and fluctuation of a cubic metric is small, thereby effectively improving efficiency of a power amplifier of the terminal device. That is, x cubic polynomial exponential sequences in each subgroup may correspond to *y* different cubic term coefficients, where *x* is less than or equal to *y*, and *x* and *y* are positive integers.

### Manner 4

For example, in a low cubic metric group, all cubic polynomial exponential sequences in a first cubic metric group belong to a first subgroup, and a maximum value of a cross-ambiguity function of cubic polynomial exponential sequences in the first subgroup is less than or equal to $2 \sqrt{N}$*.*

Similarly, in a high cubic metric group, all cubic polynomial exponential sequences in a second cubic metric group belong to a second subgroup, and a maximum value of a cross-ambiguity function of cubic polynomial exponential sequences in the second subgroup is less than or equal to $2 \sqrt{N}$.

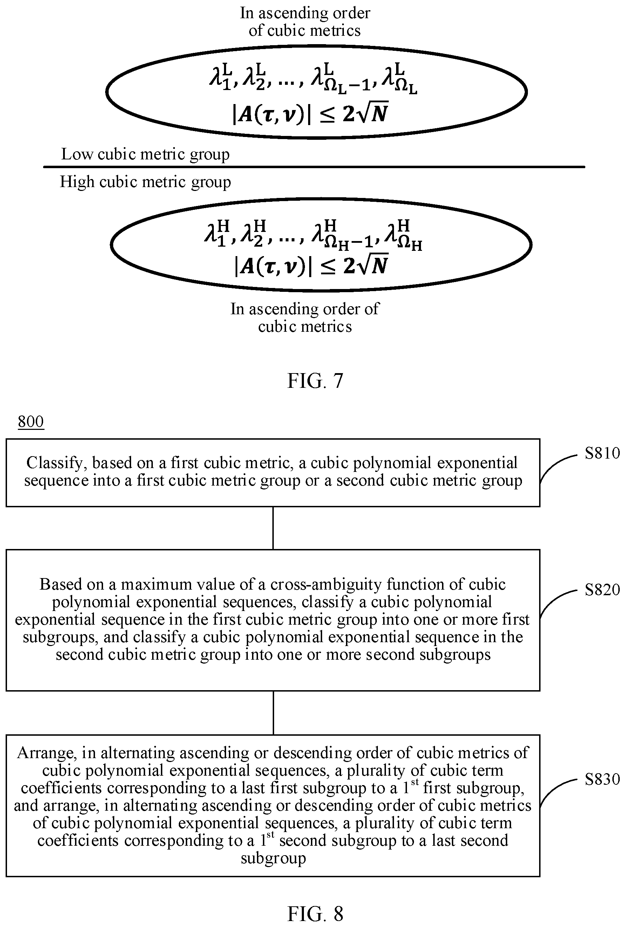

FIG. 7 is a diagram of division of cubic polynomial exponential sequences according to an embodiment of this application.

For example, it is assumed that there are a plurality of cubic polynomial exponential sequences. The plurality of cubic polynomial exponential sequences separately belong to a low cubic metric group and a high cubic metric group by using a first cubic metric (for example, CM = 1.2 dB) as a boundary. The low cubic metric group includes one first subgroup, the first subgroup corresponds to Ω_{L} cubic term coefficients, namely, ${λ}_{1}^{L} , {λ}_{2}^{L} , … , {λ}_{{Ω}_{L} - 1}^{L} , {λ}_{{Ω}_{L}}^{L}$, and mean values of cubic metrics of cubic polynomial exponential sequences corresponding to the Ω_{L} cubic term coefficients are arranged in ascending order, that is, ${CM}_{1}^{L} \leq {CM}_{2}^{L} \leq ⋯ \leq {CM}_{{Ω}_{L} - 1}^{L} \leq {CM}_{{Ω}_{L}}^{L}$. The Ω_{L} cubic term coefficients are arranged in ascending order of cubic metrics of the cubic polynomial exponential sequences, and a maximum value of a cross-ambiguity function of cubic polynomial exponential sequences from any two adjacent first subgroups is less than or equal to $2 \sqrt{N}$, where Ω_{L} is an integer greater than 1.

Similarly, the high cubic metric group includes one second subgroup, the second subgroup corresponds to Ω_{H} cubic term coefficients, namely, ${λ}_{1}^{H} , {λ}_{2}^{H} , … , {λ}_{{Ω}_{H} - 1}^{H} , {λ}_{{Ω}_{H}}^{H}$, and mean values of cubic metrics of cubic polynomial exponential sequences corresponding to the Ω_{H} cubic term coefficients are arranged in ascending order, that is, ${CM}_{1}^{H} \leq {CM}_{2}^{H} \leq ⋯ \leq {CM}_{{Ω}_{H} - 1}^{H} \leq {CM}_{{Ω}_{H}}^{H}$. A maximum value of a cross-ambiguity function of cubic polynomial exponential sequences from any two adjacent second subgroups is less than or equal to $2 \sqrt{N}$, where Ω_{H} is an integer greater than 1.

Based on the foregoing manner 4, the following presents, in a form of table, an example of the first mapping relationship in this application. For example, Table 4 shows a mapping relationship between a logical sequence number, a cubic term coefficient, a group, a subgroup number, and a physical sequence number of a cubic polynomial exponential sequence under the condition that a maximum value of a cross-ambiguity function of cubic polynomial exponential sequences in a first subgroup or a second subgroup is less than or equal to $2 \sqrt{N}$. That is, the cubic term coefficient, the group, the subgroup number, and the physical sequence number may be correspondingly determined based on the logical sequence number, thereby determining the cubic polynomial exponential sequence, namely, a first sequence in step S320.

**Table 4**

| Logical sequence number | Cubic term coefficient | Group | Subgroup number | Sequence number in subgroup | Physical sequence number |
|---|---|---|---|---|---|
| 0 | ${λ}_{1}^{L}$ | Low cubic metric group | 1 | 1 | ${λ}_{1}^{L}$ |
| 1 | ${λ}_{2}^{L}$ | Low cubic metric group | 1 | 2 | ${λ}_{2}^{L}$ |
| ⋮ | ⋮ | ⋮ | ⋮ | ⋮ | ⋮ |
| Ω_{L} - 2 | ${λ}_{{Ω}_{L} - 1}^{L}$ | Low cubic metric group | 1 | Ω_{L} - 1 | ${λ}_{{Ω}_{L} - 1}^{L}$ |
| Ω_{L} - 1 | ${λ}_{{Ω}_{L}}^{L}$ | Low cubic metric group | 1 | Ω_{L} | ${λ}_{{Ω}_{L}}^{L}$ |
| Ω_{L} | ${λ}_{1}^{H}$ | High cubic metric group | 1 | 1 | ${λ}_{1}^{H}$ |
| Ω_{L} + 1 | ${λ}_{2}^{H}$ | High cubic metric group | 1 | 2 | ${λ}_{2}^{H}$ |
| ⋮ | ⋮ | ⋮ | ⋮ | ⋮ | ⋮ |
| Ω_{L} + Ω_{H} - 2 | ${λ}_{{Ω}_{H} - 1}^{H}$ | High cubic metric group | 1 | Ω_{H} - 1 | ${λ}_{{Ω}_{H} - 1}^{H}$ |
| Ω_{L} + Ω_{H} - 1 | ${λ}_{{Ω}_{H}}^{H}$ | High cubic metric group | 1 | Ω_{H} | ${λ}_{{Ω}_{H}}^{H}$ |

In this embodiment of this application, Ω_{L} and Ω_{H} are integers. A value corresponding to each logical sequence number in Table 4 is an integer greater than or equal to 0. For example, for the logical sequence number Ω_{L} - 2, Ω_{L} is an integer greater than or equal to 2, and similarly for other logical sequence numbers. A value corresponding to each sequence number in a subgroup in Table 4 is an integer greater than or equal to 1. For example, for the sequence number in a subgroup Ω_{H} - 1, Ω_{H} is an integer greater than 1, and similarly for other sequence numbers in a subgroup. It should be understood that values of the foregoing logical sequence numbers are 0, 1, 2, ...; optionally, the values of the foregoing logical sequence numbers may alternatively be 1, 2, 3, ... Similarly, values of the foregoing sequence numbers in a subgroup are 1, 2, ...; optionally, the values of the foregoing sequence numbers in a subgroup may alternatively be 0, 1, 2, ... This is not limited in this application, provided that the first apparatus and/or the second apparatus may uniquely determine the corresponding physical sequence number based on the logical sequence number.

It should be understood that Table 4 is merely an example provided for ease of understanding, and does not constitute any limitation on the technical solutions of this application. Optionally, a quantity of correspondences between the logical sequence number and the physical sequence number in Table 4 (for example, a row in the table) is not limited in this application. For example, the low cubic metric group and the high cubic metric group in Table 4 may be presented as separate new tables. In other words, Table 4 may be split into a plurality of other tables as examples. A splitting manner is not limited in this application. Optionally, a quantity of columns in Table 4 is not limited in this application either. For example, the subgroup number, the sequence number in a subgroup, or the like may be omitted from Table 4. This is not limited in this application.

It can be learned from Table 4 that, in the high cubic metric group or the low cubic metric group, there is one first subgroup or one second subgroup, that is, all cubic polynomial exponential sequences in the high cubic metric group belong to one second subgroup, and all cubic polynomial exponential sequences in the low cubic metric group belong to one first subgroup. The first subgroup or the second subgroup corresponds to a plurality of cubic term coefficients, each cubic term coefficient corresponds to one or more cubic polynomial exponential sequences, and for the plurality of cubic polynomial exponential sequences, at least one of a quadratic term coefficient, a linear term coefficient, and a constant term coefficient is different. The logical sequence numbers are 0, 1, ..., and Ω_{L} + Ω_{H} - 1. Each physical sequence number corresponds to a cubic term coefficient, and each physical sequence number is the same as the corresponding cubic term coefficient. Optionally, in the high cubic metric group and the low cubic metric group, there are same cubic term coefficients, for example, ${λ}_{{Ω}_{L} - 1}^{L} = {λ}_{2}^{H}$. Correspondingly, the physical sequence numbers satisfy ${λ}_{{Ω}_{L} - 1}^{L} = {λ}_{2}^{H}$, but the logical sequence numbers corresponding to the physical sequence numbers are different, that is, Ω_{L} - 2 ≠ Ω_{L} + 1. In other words, the logical sequence number is in one-to-one correspondence with the physical sequence number, and the cubic term coefficient and the group to which the cubic term coefficient belongs may be uniquely determined based on the logical sequence number.

Based on this implementation, all cubic polynomial exponential sequences in the first cubic metric group or the second cubic metric group correspond to a same subgroup, and cubic term coefficients in each subgroup monotonically increase based on cubic metrics of corresponding cubic polynomial exponential sequences, so that the implementation is simple, and configuration efficiency is high.

In a possible implementation, before step S310 is performed, the method 300 further includes step S301.

S301: The first apparatus may obtain a first logical sequence number.

For example, the first apparatus may obtain the first logical sequence number from the second apparatus. For example, the first apparatus receives indication information from the second apparatus, where the indication information indicates the first logical sequence number, and the indication information may be a direct indication or an indirect indication. For example, the first apparatus may receive the first logical sequence number from the second apparatus through broadcast information, or the first apparatus may receive the first logical sequence number from the second apparatus through specific signaling (for example, RRC, DCI, or a SIB).

For example, the first logical sequence number may be predefined or preconfigured. "Predefinition" may include advance definition, for example, definition in a protocol. "Preconfiguration" may be implemented by pre-storing corresponding code or a corresponding table in the first apparatus, or may be implemented in another manner that may indicate related information. A specific implementation thereof is not limited in this application.

Optionally, the first logical sequence number may be a natural number or a positive integer, for example, 0, 1, 2, ..., and *X* - 1, or 1, 2, 3, ..., and *X*, where *X* is an integer greater than 1. A physical sequence number may be a cubic term coefficient of a cubic polynomial exponential sequence and a group to which the cubic term coefficient belongs. This is not limited in this application.

For example, Table 2 is used as an example. It is assumed that the first logical sequence number received by the first apparatus from the second apparatus is Ω_{L} - 2. The first apparatus may search for and determine a corresponding first physical sequence number based on the first mapping relationship shown in Table 2, namely, the cubic term coefficient ${λ}_{{Ω}_{L} - 1}^{L}$ in the low cubic metric group, and may further determine the cubic polynomial exponential sequence corresponding to the first physical sequence number ${λ}_{{Ω}_{L} - 1}^{L}$, for example: ${s}_{{λ}_{{Ω}_{L} - 1}^{L} , k , l} \left(n\right) = {e}^{- j 2 π \left({λ}_{{Ω}_{L} - 1}^{L}{n}^{3}+3{λ}_{{Ω}_{L} - 1}^{L}k{Δ}_{T}{n}^{2}+l{Δ}_{F}n\right) / N}$ $k ∈ \left\{0,1,…,\left⌊N/{Δ}_{T}\right⌋-1\right\}$ $l ∈ \left\{0,1,…,\left⌊N/{Δ}_{F}\right⌋-1\right\}$

It is assumed that the first apparatus obtains 30 cubic polynomial exponential sequences from cubic polynomial exponential sequences corresponding to the first physical sequence number ${λ}_{{Ω}_{L}}^{L} - 1$, and then continues to obtain 34 cubic polynomial exponential sequences from cubic polynomial exponential sequences corresponding to the next physical sequence number ${λ}_{{Ω}_{L}}^{L} - 1$. In this way, 64 cubic polynomial exponential sequences are obtained, and then one cubic polynomial exponential sequence may be randomly selected from the 64 cubic polynomial exponential sequences as a first sequence.

S320: The first apparatus sends a first sequence.

The first sequence is determined based on the first physical sequence number. It should be understood that the first sequence is a cubic polynomial exponential sequence.

In this application, that the first sequence is determined based on the first physical sequence number may be understood as: The first apparatus sequentially determines 64 cubic polynomial exponential sequences based on the first physical sequence number, and randomly selects one cubic polynomial exponential sequence from the 64 cubic polynomial exponential sequences for access. The randomly selected cubic polynomial exponential sequence is the first sequence. Further, the first apparatus sends the first sequence to the second apparatus. Correspondingly, the second apparatus performs blind detection on the 64 cubic polynomial exponential sequences, determines the first sequence, and determines a round-trip time and/or a Doppler frequency shift.

Optionally, the first sequence may be used in a sensing process of the first apparatus (for example, the terminal device) and/or the second apparatus (for example, the network device). Optionally, the first apparatus sends a cubic polynomial exponential sequence, and receives an echo of the cubic polynomial exponential sequence. The first apparatus determines a round-trip time and a Doppler frequency shift of a sensing target, to obtain a distance and a moving speed of the sensing target. For another example, the first apparatus sends a cubic polynomial exponential sequence, and the second apparatus receives the cubic polynomial exponential sequence. Then, the second apparatus determines a delay and a Doppler frequency shift of a sensing target, to obtain a distance and a moving speed of the sensing target.

In an implementation, sending the first sequence may be: The first apparatus sends the first sequence to the second apparatus. For example, the first apparatus and the second apparatus may both be included in a terminal device, or both be included in a network device. In this case, it indicates that the first apparatus sending the first sequence to the second apparatus is an internal operation. For another example, the first apparatus may be a terminal device or an apparatus in a terminal device (for example, a chip, a chip system, or a circuit of the terminal device), and the second apparatus may be a network device or an apparatus in a network device (for example, a chip, a chip system, or a circuit of the network device). In this case, it indicates that the first apparatus sending the first sequence to the second apparatus is an external operation.

It should be noted that, before receiving the first sequence sent by the first apparatus, the second apparatus determines the first physical sequence number based on the first logical sequence number and the first mapping relationship. For a specific implementation, refer to related descriptions of step S310. Details are not described herein again.

The following specifically describes an implementation in which the first apparatus sends the first sequence to the second apparatus in step S320.

In a first example, the first apparatus may map the first sequence to a time domain resource, and send the first sequence to the second apparatus. In this case, a discrete-time signal of the first sequence (namely, the cubic polynomial exponential sequence) may be expressed as: ${s}_{λ , k , l} \left(n\right) = {e}^{- j 2 π \left({λn}^{3}+3λk{Δ}_{T}{n}^{2}+l{Δ}_{F}n\right) / N}$

Compared with Formula (7), *a* = *λ, b* = 3*λk*Δ*_{T}, c = l*Δ*_{F}, d* = 0, *N* is a sequence length of *s_{a,b,c,d}*(*n*), and *N* is a prime number. *λ* ∈ {1, 2, ..., *N* - 1}, $k ∈ \left\{0,1,…,\left⌊N/{Δ}_{T}\right⌋-1\right\}$, $l ∈ \left\{0,1,…,\left⌊N/{Δ}_{F}\right⌋-1\right\}$, n = 0, 1, *...* , *N -* 1, Δ_{T} represents a maximum round-trip time, and Δ_{F} represents a maximum Doppler frequency shift.

It should be understood that the parameter *λ* in Formula (8) is a parameter associated with a cell. For example, a same cell corresponds to a same value of *λ*, and different cells correspond to different values of *λ*; or a same cell corresponds to a plurality of values of *λ*, and different cells correspond to different values of *λ*. The parameters *k* and *l* are parameters associated with a terminal device in a cell. For different terminal devices in a same cell, the parameters *k* and/or *l* may be different.

It should be further understood that a value range of a cell radius of a cell in which a terminal device is located is from 0 to *c*(Δ_{T} *-* 1)*Tₛ*/2, and a moving speed range of the terminal device is from - *c*(Δ*_{F}* - 1)Δ*f*/4*f_{c}* to *c*(Δ_{F} - 1)Δ*f*/4*f_{c}*, where *c* represents the speed of light, *f_{c}* represents a carrier frequency, Δ*f* represents a subcarrier spacing, and *Tₛ* represents a symbol time interval.

For example, cubic polynomial exponential sequences mapped to time domain resources may be expressed as: ${s}_{{λ}_{1} , {k}_{1} , {l}_{1}} \left(n\right) = {e}^{- j 2 π \left({λ}_{1}{n}^{3}+3{λ}_{1}{k}_{1}{Δ}_{T}{n}^{2}+{l}_{1}{Δ}_{F}n\right) / N}$ ${s}_{{λ}_{2} , {k}_{2} , {l}_{2}} \left(n\right) = {e}^{- j 2 π \left({λ}_{2}{n}^{3}+3{λ}_{2}{k}_{2}{Δ}_{T}{n}^{2}+{l}_{2}{Δ}_{F}n\right) / N}$

Correspondingly, a cross-ambiguity function of the cubic polynomial exponential sequences shown in Formula (9) and Formula (10) may be expressed as: $\left|{A}_{{s}_{{λ}_{1} , {k}_{1} , {l}_{1}} , {s}_{{λ}_{2} , {k}_{2} , {l}_{2}}}\left(τ, ν\right)\right| = \left\{\begin{matrix}N & {λ}_{1} = {λ}_{2} , {k}_{1} = {k}_{2} , {l}_{1} = {l}_{2} , τ = 0 , ν = 0 \\ 0 & {λ}_{1} = {λ}_{2} , {k}_{1} = {k}_{2} , τ = 0 , \left({l}_{1}\neq {l}_{2}\right) ∨ \left(ν\neq 0\right) \\ \sqrt{N} & {λ}_{1} = {λ}_{2} , \left({k}_{1}\neq {k}_{2}\right) ∨ \left(τ\neq 0\right) \\ \leq 2 \sqrt{N} & {λ}_{1} \neq {λ}_{2}\end{matrix}\right.$

*τ* represents a round-trip time, a value range of *τ* is 0 ≤ *τ* ≤ Δ_{T} - 1, *v* represents a Doppler frequency shift, a value range of *v* is 0 ≤ *v* ≤ Δ_{F} - 1, *λ*₁ E {1, 2, ..., *N* - 1}, λ₂ E {1,2, *..., N* - 1}, ${k}_{1} ∈ \left\{0,1,…,\left⌊N/{Δ}_{T}\right⌋-1\right\} , {k}_{2} ∈ \left\{0,1,…,\left⌊N/{Δ}_{T}\right⌋-1\right\} , {l}_{1} ∈ \left\{0,1,…,\left⌊N/{Δ}_{F}\right⌋-\right.$ $\left.1\right\} , {l}_{2} ∈ \left\{0,1,…,\left⌊N/{Δ}_{F}\right⌋-1\right\}$*,* Δ_{F} represents a maximum Doppler frequency shift, Δ_{T} represents a maximum round-trip time, and V represents "logical OR".

It can be learned from Formula (11) and the foregoing exponential sum theorem that, when λ₁ ≠ λ₂, a maximum value of the cross-ambiguity function of the two cubic polynomial exponential sequences does not exceed $2 \sqrt{N}$; or when *λ*₁ = *λ*₂, an exponential sum of the cubic polynomial exponential sequence degenerates into a Gaussian sum, and a maximum value of the cross-ambiguity function of the two cubic polynomial exponential sequences is $\sqrt{N}$.

It should be understood that, because the cubic polynomial exponential sequence *s_{a,b,c,d}*(*n*) in Formula (7) is a constant-modulus sequence, mapping the cubic polynomial exponential sequence s_{a,b,c,d}(*n*) to a time domain resource may reduce a peak-to-average power ratio. It should be noted that the constant-modulus sequence may be understood as a phase-encoded sequence having a constant amplitude, and the constant-modulus sequence may also be referred to as a constant amplitude sequence or a constant envelope sequence.

In a second example, the first apparatus may map the first sequence to a frequency domain resource, and send the first sequence to the second apparatus. In this case, a discrete-time signal of the first sequence (namely, the cubic polynomial exponential sequence) may be expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N}$

Compared with Formula (7), *a = λ, b =* 3*λk*Δ_{F}*, c = l*Δ_{T}*, d =* 0, *N* is a sequence length of *s_{a,b,c,d}*(*n*), and *N* is a prime number. *λ* ∈ {1, 2, *... , N* - 1}, $k ∈ \left\{0,1,…,\left⌊N/{Δ}_{F}\right⌋-1\right\}$, $l ∈ \left\{0,1,…,\left⌊N/{Δ}_{T}\right⌋-1\right\}$, Δ_{T} represents a maximum round-trip time, and Δ_{F} represents a maximum Doppler frequency shift.

It should be understood that the parameter *λ* in Formula (12) is a parameter associated with a cell. For example, a same cell corresponds to a same value of *λ*, and different cells correspond to different values of *λ*; or a same cell corresponds to a plurality of values of *λ,* and different cells correspond to different values of *λ.* The parameters *k* and *l* are parameters associated with a terminal device in a cell. For different terminal devices in a same cell, the parameters *k* and/or *l* may be different.

It should be further understood that a value range of a cell radius of a cell in which a terminal device is located is from 0 to *c*(Δ_{T} - 1)*Tₛ*/2, and a moving speed range of the terminal device is from - *c*(Δ_{F} - 1)Δ*f*/4*f_{c}* to *c*(Δ_{F} - 1)Δ*f*/4*f_{c},* where c represents the speed of light, *f_{c}* represents a carrier frequency, Δ*f* represents a subcarrier spacing, and *T*ₛ represents a symbol time interval.

For example, cubic polynomial exponential sequences mapped to frequency domain resources may be expressed as: ${s}_{{λ}_{1} , {k}_{1} , {l}_{1}} \left(n\right) = {e}^{- j 2 π \left({λ}_{1}{n}^{3}+3{λ}_{1}{k}_{1}{Δ}_{F}{n}^{2}+{l}_{1}{Δ}_{T}n\right) / N}$ ${s}_{{λ}_{2} , {k}_{2} , {l}_{2}} \left(n\right) = {e}^{- j 2 π \left({λ}_{2}{n}^{3}+3{λ}_{2}{k}_{2}{Δ}_{F}{n}^{2}+{l}_{2}{Δ}_{T}n\right) / N}$

Correspondingly, an ambiguity function of the cubic polynomial exponential sequences shown in Formula (13) and Formula (14) may be expressed as: $\left|{A}_{{s}_{{λ}_{1} , {k}_{1} , {l}_{1}} , {s}_{{λ}_{2} , {k}_{2} , {l}_{2}}}\left(τ, ν\right)\right| = \left\{\begin{matrix}N & {λ}_{1} = {λ}_{2} , {k}_{1} = {k}_{2} , {l}_{1} = {l}_{2} , τ = 0 , ν = 0 \\ 0 & {λ}_{1} = {λ}_{2} , {k}_{1} = {k}_{2} , \left({l}_{1}\neq {l}_{2}\right) ∨ \left(τ\neq 0\right) , ν = 0 \\ \sqrt{N} & {λ}_{1} = {λ}_{2} , \left({k}_{1}\neq {k}_{2}\right) ∨ \left(ν\neq 0\right) \\ \leq 2 \sqrt{N} & {λ}_{1} \neq {λ}_{2}\end{matrix}\right.$

*τ* represents a round-trip time, a value range of *τ* is 0 ≤ *τ* ≤ Δ_{T} - 1, *ν* represents a Doppler frequency shift, a value range of *ν* is 0 ≤ *ν* ≤ Δ_{F} - 1, *λ*₁ E {1, 2, ..., *N* - 1}, *λ*₂ E {1, 2, *... , N -* 1}*,* ${k}_{1} ∈ \left\{0,1,…,\left⌊N/{Δ}_{T}\right⌋-1\right\} , {k}_{2} ∈ \left\{0,1,…,\left⌊N/{Δ}_{T}\right⌋-1\right\} , {l}_{1} ∈ \left\{0,1,…,\left⌊N/{Δ}_{F}\right⌋\right. -$ $\left.1\right\} , {l}_{2} ∈ \left\{0,1,…,\left⌊N/{Δ}_{F}\right⌋-1\right\}$, Δ_{T} represents a maximum round-trip time, Δ_{F} represents a maximum Doppler frequency shift, and V represents "logical OR".

It can be learned from Formula (15) and the foregoing exponential sum theorem that, when *λ*₁ ≠ *λ*₂, a maximum value of the cross-ambiguity function of the cubic polynomial exponential sequences does not exceed $2 \sqrt{N}$; or when *λ*₁ = *λ*₂, an exponential sum of the cubic polynomial exponential sequence degenerates into a Gaussian sum, and a maximum value of the cross-ambiguity function of the cubic polynomial exponential sequences is $\sqrt{N}$.

Particularly, when *λ*₁ = *λ*₂, *k*₁ = *k*₂, *l*₁ ≠ *l*₂, *τ* ≠ 0, and *ν* = 0 , there is a zero-correlation zone between the cubic polynomial exponential sequences *s*_{*λ*₁,*k*₁,*l*₁}(*n*) and *s*_{*λ*₂,*k*₂,*l*₂}(*n*) mapped to the frequency domain resources. This is because the cubic polynomial exponential sequence *s*_{*a*,*b*,*c*,*d*}(*n*) is a constant-modulus sequence, and according to the Wiener-Khinchin theorem, frequency domain resource mapping of the constant-modulus sequence has an ideal time domain autocorrelation characteristic. Therefore, mapping a cubic polynomial exponential sequence to a frequency domain resource may form a zero-correlation zone.

Compared with an existing communication sequence (for example, a ZC sequence), a sequence capacity of the cubic polynomial exponential sequence is large, so that resistance to a Doppler frequency shift of more subcarrier spacings can be implemented. In addition, a maximum zero-ambiguity zone area (a product of a maximum round-trip time Δ_{T} and a maximum Doppler frequency shift Δ_{F}) of the cubic polynomial exponential sequence may exceed a sequence length, that is, is not limited by the sequence length.

According to the solution provided in this application, the first apparatus may determine, based on the first mapping relationship, the correspondence between the logical sequence number and the physical sequence number of the cubic polynomial exponential sequence, that is, may uniquely determine the corresponding first physical sequence number based on the first logical sequence number, and may determine a plurality of cubic polynomial exponential sequences based on the first physical sequence number. The first sequence (namely, the cubic polynomial exponential sequence) is an exponential sequence randomly determined from the plurality of cubic polynomial exponential sequences, and uplink random access is completed by sending the first sequence, to implement synchronous communication. Compared with an existing communication sequence, the sequence capacity of the cubic polynomial exponential sequence is increased, so that resistance to a Doppler frequency shift of more subcarrier spacings can be supported, sequence resource configuration efficiency can be improved, and transmission requirements of more terminal devices can be met.

It should be noted that step S310 and step S320 in the method 300 are described by using an example in which step S310 and step S320 are performed by a same execution body (for example, the first apparatus). Optionally, step S310 and step S320 may be performed by different execution bodies. For example, step S310 may be performed by the second apparatus (for example, the network device), and step S320 may be performed by the first apparatus (for example, the terminal device). In this case, the second apparatus determines the first physical sequence number based on the first logical sequence number and the first mapping relationship, and notifies the first apparatus of the first physical sequence number. Correspondingly, the first apparatus determines the first sequence based on the first physical sequence number, and performs step S320. For a specific implementation, adaptively refer to related descriptions of the method 300. In this implementation, power consumption and signaling overheads of the terminal device can be reduced. Similarly, the second apparatus may not perform step S310. That is, the first apparatus (for example, the terminal device) may perform step S310, and send the first physical sequence number and the first sequence to the second apparatus (for example, the network device) for execution. In this case, the second apparatus determines 64 cubic polynomial exponential sequences based on the first physical sequence number, and performs blind detection on the 64 cubic polynomial exponential sequences to obtain the first sequence. For a specific implementation, adaptively refer to related descriptions of the method 300. In this implementation, power consumption and signaling overheads of the network device can be reduced. This is not limited in this application.

FIG. 8 is a schematic flowchart of a communication method 800 according to an embodiment of this application. As shown in FIG. 8, the method procedure may be performed by a third apparatus, or may be performed by a module and/or a component (for example, a chip or an integrated circuit) that is installed in a third apparatus and that has a corresponding function. This is not limited in this application. The following uses an example in which the third apparatus is an execution body for description. The communication method includes the following steps.

S810: The third apparatus classifies, based on a first cubic metric, a cubic polynomial exponential sequence into a first cubic metric group or a second cubic metric group.

It should be understood that the cubic polynomial exponential sequence may have a plurality of purposes, for example, may be used in a random access procedure of a terminal device.

Optionally, the first cubic metric may be configured or preconfigured. For example, a value of the first cubic metric may be determined according to Formula (1). In this embodiment of this application, the first cubic metric group may be referred to as a low cubic metric group, and the second cubic metric group may be referred to as a high cubic metric group. It should be understood that the low cubic metric group and the high cubic metric group are relative. This is not limited in this application. For example, it is assumed that the first cubic metric CM = 1.2 dB. A plurality of cubic polynomial exponential sequences are divided into a low cubic metric group and a high cubic metric group by using the cubic metric CM = 1.2 dB as a boundary. For example, when a CM of a cubic polynomial exponential sequence is greater than 1.2 dB , the cubic polynomial exponential sequence belongs to the high cubic metric group; or when a CM of a cubic polynomial exponential sequence is less than or equal to 1.2 dB, the cubic polynomial exponential sequence belongs to the low cubic metric group.

In this application, the third apparatus may be a network device or a terminal device, or may be a chip, a chip system, or a circuit in a network device or a terminal device. This is not limited in this application.

It should be noted that, for a definition of the cubic polynomial exponential sequence and an explanation of the definition, refer to related descriptions of step S310 in the method 300. Details are not described herein again.

S820: Based on a maximum value of a cross-ambiguity function of cubic polynomial exponential sequences, the third apparatus classifies the cubic polynomial exponential sequence in the first cubic metric group into one or more first subgroups, and classifies the cubic polynomial exponential sequence in the second cubic metric group into one or more second subgroups.

The plurality of first subgroups or the plurality of second subgroups are arranged in ascending order of cubic metrics of corresponding cubic polynomial exponential sequences, each first subgroup or each second subgroup corresponds to one or more cubic term coefficients, and a maximum value of a cross-ambiguity function of any two cubic polynomial exponential sequences in each first subgroup or each second subgroup is less than or equal to a first threshold.

Optionally, the first threshold may be configured or preconfigured. For example, the first threshold *δ* may satisfy: $\sqrt{N} \leq δ \leq 2 \sqrt{N}$

*N* is a sequence length of the cubic polynomial exponential sequence, and *N* is a prime number.

Optionally, the first subgroup may be referred to as a first set, which represents one or more first sets to which all cubic polynomial exponential sequences in the first cubic metric group belong after division. Similarly, the second subgroup may be referred to as a second set, which represents one or more second sets to which all cubic polynomial exponential sequences in the second cubic metric group belong after division. For ease of description, the first subgroup and the second subgroup are used as examples for description in this application.

S830: The third apparatus arranges, in alternating ascending or descending order of cubic metrics of cubic polynomial exponential sequences, a plurality of cubic term coefficients corresponding to a last first subgroup through a 1^{st} first subgroup, and arranges, in alternating ascending or descending order of cubic metrics of cubic polynomial exponential sequences, a plurality of cubic term coefficients corresponding to a 1^{st} second subgroup through a last second subgroup.

For example, each cubic term coefficient corresponds to one or more cubic polynomial exponential sequences. In other words, there are one or more cubic polynomial exponential sequences with a same cubic term coefficient. Correspondingly, a mean value of cubic metrics of the cubic polynomial exponential sequences corresponding to each cubic term coefficient is calculated, and a plurality of cubic term coefficients of a subgroup are arranged in ascending or descending order of mean values of cubic metrics of cubic polynomial exponential sequences corresponding to the cubic term coefficients. Further, one or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

The following provides three examples to specifically describe a grouping and ordering method in step S810 to step S830.

In a first example, cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$. Cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

In a second example, each first subgroup includes one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$. Each second subgroup includes one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$. *N* is a sequence length of the cubic polynomial exponential sequence, and *N* is a prime number.

In a third example, all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$. All cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

Based on the foregoing grouping method for cubic polynomial exponential sequences, a corresponding first mapping relationship may be obtained. For details, refer to Table 2 to Table 4 and related descriptions thereof. Random access, signal synchronization, and the like of the terminal device may be implemented based on the first mapping relationship.

It should be understood that the foregoing three examples are merely examples provided for ease of understanding, and should not constitute any limitation on the technical solutions of this application. For a specific implementation of the foregoing example, refer to related descriptions of step S310 in the method 300. Details are not described herein again.

According to the solution provided in this application, a first mapping relationship and a grouping and ordering method for cubic polynomial exponential sequences are designed, so that the third apparatus may determine a correspondence between a logical sequence number and a physical sequence number of a cubic polynomial exponential sequence. Compared with an existing communication sequence, the sequence capacity of the cubic polynomial exponential sequence is increased, so that resistance to a Doppler frequency shift of more subcarrier spacings can be supported, sequence resource configuration efficiency can be improved, and transmission requirements of more terminal devices can be met.

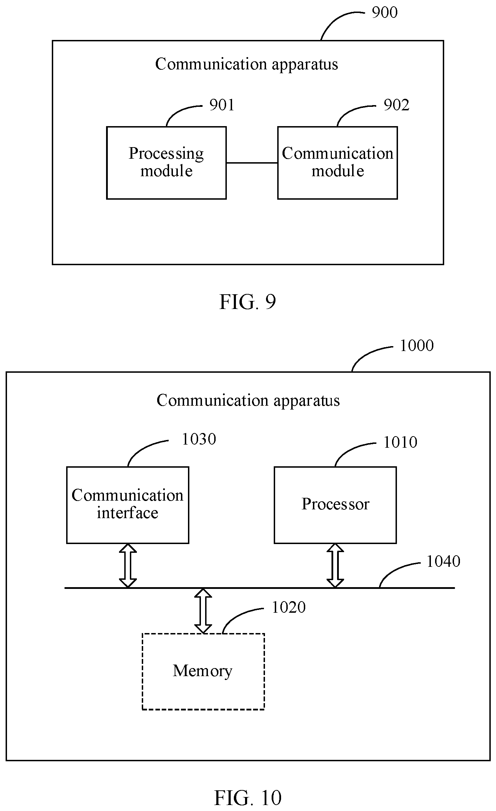

The foregoing describes in detail embodiments on a communication method side in this application with reference to FIG. 3 to FIG. 8. The following describes in detail embodiments on a communication apparatus side in this application with reference to FIG. 9 and FIG. 10. It should be understood that descriptions of the apparatus embodiments correspond to the descriptions of the method embodiments, and therefore for a part that is not described in detail, refer to the foregoing method embodiments.

FIG. 9 is a schematic block diagram of a communication apparatus 900 according to an embodiment of this application. As shown in FIG. 9, the communication apparatus 900 includes a processing module 901 and a communication module 902. The communication apparatus 900 may be a first apparatus, or may be a communication apparatus, for example, a chip, a chip system, or a circuit, that may be used in or in conjunction with a first apparatus and that can implement a method performed by the first apparatus. Alternatively, the communication apparatus 900 may be a second apparatus, or may be a communication apparatus, for example, a chip, a chip system, or a circuit, that may be used in or in conjunction with a second apparatus and that can implement a method performed by the second apparatus.

The communication module may also be referred to as a transceiver module, a transceiver, a transceiver machine, a transceiver unit, a transceiver apparatus, or the like. The processing module may also be referred to as a processor, a processing board, a processing unit, a processing apparatus, or the like. Optionally, the communication module is configured to perform a sending operation and a receiving operation of the first apparatus and the second apparatus in the foregoing method. A component configured to implement a receiving function in the communication module may be considered as a receiving unit, and a component configured to implement a sending function in the communication module may be considered as a sending unit. In other words, the communication module includes the receiving unit and the sending unit.

In an example, when the communication apparatus 900 is used in the first apparatus, the processing module 901 may be configured to implement a processing function of the first apparatus in the foregoing embodiment, and the communication module 902 may be configured to implement a receiving and sending function of the first apparatus in the foregoing embodiment.

In another example, when the communication apparatus 900 is used in the second apparatus, the processing module 901 may be configured to implement a processing function of the second apparatus in the foregoing embodiment, and the communication module 902 may be configured to implement a receiving and sending function of the second apparatus in the foregoing embodiment.

In still another example, when the communication apparatus 900 is used in the third apparatus, the processing module 901 may be configured to implement a processing function of the third apparatus in the foregoing embodiment, and the communication module 902 may be configured to implement a receiving and sending function of the third apparatus in the foregoing embodiment. In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, division into the modules is an example, is merely division into logical functions, and may be other division during actual implementation. In addition, functional modules in examples of this application may be integrated into one processor, or each of the modules may exist alone physically, or two or more modules may be integrated into one module. The integrated module may be implemented in a form of hardware, or may be implemented in a form of a software functional module.

FIG. 10 is a schematic block diagram of a communication apparatus 1000 according to an embodiment of this application. Optionally, the communication apparatus 1000 may be a chip or a chip system. Optionally, the chip system in this application may include a chip, or may include a chip and another discrete device.

As shown in FIG. 10, the communication apparatus 1000 may be configured to implement a function of any apparatus (for example, the first apparatus or the second apparatus) in the communication system described in the foregoing examples. The communication apparatus 1000 may include at least one processor 1010. Optionally, the processor 1010 is coupled to a memory. The memory may be located in the apparatus. Alternatively, the memory may be integrated with the processor. Alternatively, the memory may be located outside the apparatus. For example, the communication apparatus 1000 may further include at least one memory 1020. The memory 1020 stores a computer program, a computer program or instructions, and/or data necessary for implementing any one of the foregoing examples. The processor 1010 may execute the computer program stored in the memory 1020, to complete the method in any one of the foregoing examples.

The communication apparatus 1000 may further include a communication interface 1030, and the communication apparatus 1000 may exchange information with another device through the communication interface 1030. For example, the communication interface 1030 may be a transceiver, a circuit, a bus, a module, a pin, or a communication interface of another type. When the communication apparatus 1000 is a chip-type apparatus or circuit, the communication interface 1030 in the apparatus 1000 may alternatively be an input/output circuit, and may input information (or referred to as receiving information) and output information (or referred to as sending information). The processor 1010 is an integrated processor, a microprocessor, an integrated circuit, a logic circuit, or the like. The processor may determine output information based on input information.

In an example, when the communication apparatus 1000 is used in the first apparatus, the processor 1010 may be configured to implement a processing function of the first apparatus in the foregoing embodiment, and the communication interface 1030 may be configured to implement a receiving and sending function of the first apparatus in the foregoing embodiment.

In another example, when the communication apparatus 1000 is used in the second apparatus, the processor 1010 may be configured to implement a processing function of the second apparatus in the foregoing embodiment, and the communication interface 1030 may be configured to implement a receiving and sending function of the second apparatus in the foregoing embodiment.

In still another example, when the communication apparatus 1000 is used in the third apparatus, the processor 1010 may be configured to implement a processing function of the third apparatus in the foregoing embodiment, and the communication interface 1030 may be configured to implement a receiving and sending function of the third apparatus in the foregoing embodiment.

The coupling in this application is an indirect coupling or a communication connection between apparatuses, units, or modules, may be in an electrical form, a mechanical form, or another form, and is used for information exchange between the apparatuses, the units, or the modules. The processor 1010 may operate in collaboration with the memory 1020 and the communication interface 1030. A specific medium connecting the processor 1010, the memory 1020, and the communication interface 1030 is not limited in this application.

Optionally, as shown in FIG. 10, the processor 1010, the memory 1020, and the communication interface 1030 are connected to each other through a bus 1040. Optionally, the bus may include a type of bus like an address bus, a data bus, or a control bus. In addition, for ease of representation, FIG. 10 shows one bus 1040, but this does not mean that there is only one bus or only one type of bus.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described in this specification aims to include but is not limited to these memories and any memory of another proper type.

An embodiment of this application further provides a computer-readable storage medium. The computer-readable storage medium stores computer instructions used to implement the method performed by the terminal device (for example, the first apparatus, the second apparatus, or the third apparatus) in the foregoing method embodiments.

An embodiment of this application further provides a computer program product, including instructions. When the instructions are executed by a computer, the method performed by the terminal device (for example, the first apparatus, the second apparatus, or the third apparatus) in the foregoing method embodiments is implemented.

An embodiment of this application further provides a communication system. The communication system includes the first apparatus, the second apparatus, or the third apparatus in the foregoing embodiments.

For explanations and beneficial effects of related content in any one of the apparatuses provided above, refer to the corresponding method embodiment provided above. Details are not described herein again.

For ease of understanding of embodiments of this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In text descriptions of this application, the character "/" usually represents an "or" relationship between associated objects. "At least one of the following items (pieces)" or a similar expression thereof indicates any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers are used for differentiation for ease of description, and are not used to limit the scope of embodiments of this application. For example, numbers are used to distinguish between different messages but not to describe a specific order or sequence. It should be understood that objects described in such a way are interchangeable in an appropriate circumstance, so that a solution other than embodiments of this application can be described.
(4) In this application, the terms "include", "have", and any variants thereof are intended to cover a non-exclusive inclusion. For example, a process, a method, a system, a product, or a device that includes a series of steps or units is not necessarily limited to those steps or units that are clearly listed, but may include other steps or units that are not clearly listed or are inherent to the process, method, product, or device.
(5) In this application, "indicating" may include directly indicating and indirectly indicating. When a piece of indication information indicates A, the indication information may directly indicate A or indirectly indicate A, but it does not indicate that the indication information definitely carries A.
(6) In this application, the "protocol" may be a standard protocol in the communication field, for example, may include a 5G protocol, an NR protocol, and a related protocol applied to 6G or a future communication system. This is not limited in this application. "Predefinition" may include definition in advance, for example, definition in a protocol. "Preconfiguration" may be implemented by pre-storing corresponding code or a corresponding table in a device, or may be implemented in another manner that may indicate related information. A specific implementation thereof is not limited in this application.
(7) In this application, "communication" may also be described as "data transmission", "information transmission", "data processing", or the like. "Transmission" includes "sending" and "receiving".
(8) In this application, when comparison between A and B is performed, a specific implementation of a description "when A is greater than or equal to B, A is classified into a cubic metric group #1; or when A is less than or equal to B, A is classified into a cubic metric group #2" may be "when A is greater than or equal to B, A is classified into a cubic metric group #1; or when A is less than B, A is classified into a cubic metric group #2", or may be "when A is greater than B, A is classified into a cubic metric group #1; or when A is less than or equal to B, A is classified into a cubic metric group #2". This is not limited in this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, an apparatus, or the like) to perform all or some of the steps of the methods described in embodiments of this application. The foregoing storage medium includes: any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining a first physical sequence number based on a first logical sequence number and a first mapping relationship, wherein the first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to M consecutive physical sequence numbers is less than or equal to a first threshold, the logical sequence number indicates a position index of the physical sequence number, and M is greater than or equal to 1; and
sending a first sequence, wherein the first sequence is determined based on the first physical sequence number.

2. The method according to claim 1, wherein when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N} ,$ wherein
*a = λ, b =* 3*λk*Δ_{T}*, c = l*Δ_{F}*, d =* 0*,* λ ∈ {1,2, ... , *N* - 1}, $k ∈ \left\{0,1,…,\left⌊N/{Δ}_{T}\right⌋-1\right\}$, $l ∈ \left\{0,1,…,\left⌊N/{Δ}_{F}\right⌋-1\right\}$, Δ_{T} represents a maximum round-trip time, Δ_{F} represents a maximum Doppler frequency shift, *λ* is a parameter associated with a cell, and *k* and *l* are parameters associated with a terminal device in the cell.

3. The method according to claim 1 or 2, wherein when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N} ,$ wherein
*a = λ, b =* 3*λk*Δ_{F}*, c = lΔ*_{T}*, d = 0,* λ E {1, 2, *... ,N* - 1}, $k ∈ \left\{0,1,…,\left⌊N/{Δ}_{F}\right⌋-1\right\}$, $l ∈ \left\{0,1,…,\left⌊N/{Δ}_{T}\right⌋-1\right\}$, Δ_{T} represents a maximum round-trip time, Δ_{F} represents a maximum Doppler frequency shift, *λ* is a parameter associated with a cell, and *k* and *l* are parameters associated with a terminal device in the cell.

4. The method according to any one of claims 1 to 3, wherein the first threshold *δ* satisfies: $\sqrt{N} \leq δ \leq 2 \sqrt{N} ,$ wherein
*N* is a sequence length of the cubic polynomial exponential sequence, and *N* is a prime number.

5. The method according to any one of claims 1 to 4, wherein
the cubic polynomial exponential sequence belongs to a first cubic metric group or a second cubic metric group, a cubic metric of each cubic polynomial exponential sequence in the first cubic metric group is less than or equal to a first cubic metric, and a cubic metric of each cubic polynomial exponential sequence in the second cubic metric group is greater than the first cubic metric;
the first cubic metric group comprises one or more first subgroups, the plurality of first subgroups are determined based on a maximum value of a cross-ambiguity function of cubic polynomial exponential sequences in the first cubic metric group, the plurality of first subgroups are arranged in ascending order of cubic metrics of corresponding cubic polynomial exponential sequences, each first subgroup corresponds to one or more cubic term coefficients, and a plurality of cubic term coefficients corresponding to a last first subgroup through a 1^{st} first subgroup are alternately arranged in ascending or descending order of the cubic metrics of the cubic polynomial exponential sequences; and
the second cubic metric group comprises one or more second subgroups, the plurality of second subgroups are determined based on a maximum value of a cross-ambiguity function of cubic polynomial exponential sequences in the second cubic metric group, the plurality of second subgroups are arranged in ascending order of cubic metrics of corresponding cubic polynomial exponential sequences, each second subgroup corresponds to one or more cubic term coefficients, and a plurality of cubic term coefficients corresponding to a 1^{st} second subgroup through a last second subgroup are alternately arranged in ascending or descending order of the cubic metrics of the cubic polynomial exponential sequences.

6. The method according to claim 5, wherein
one or more cubic term coefficients in the last first subgroup are arranged in ascending order of cubic metrics of corresponding cubic polynomial exponential sequences; and
one or more cubic term coefficients in the 1^{st} second subgroup are arranged in ascending order of cubic metrics of corresponding cubic polynomial exponential sequences.

7. The method according to claim 5 or 6, wherein
cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$; and
cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$, wherein
*N* is a sequence length of the cubic polynomial exponential sequence, and *N* is a prime number.

8. The method according to claim 7, wherein
the first cubic metric group comprises Ω_{L} first subgroups, the Ω_{L} first subgroups are in one-to-one correspondence with Ω_{L} cubic term coefficients, the Ω_{L} cubic term coefficients are arranged in ascending order of cubic metrics of corresponding cubic polynomial exponential sequences, a maximum value of a cross-ambiguity function of cubic polynomial exponential sequences in each first subgroup is less than or equal to $\sqrt{N}$, a maximum value of a cross-ambiguity function of cubic polynomial exponential sequences from any two adjacent first subgroups is less than or equal to $2 \sqrt{N}$, and Ω_{L} is an integer greater than or equal to 1; and
the second cubic metric group comprises Ω_{H} second subgroups, the Ω_{H}second subgroups are in one-to-one correspondence with Ω_{H} cubic term coefficients, the Ω_{H} cubic term coefficients are arranged in ascending order of cubic metrics of corresponding cubic polynomial exponential sequences, a maximum value of a cross-ambiguity function of cubic polynomial exponential sequences in each second subgroup is less than or equal to $\sqrt{N}$, a maximum value of a cross-ambiguity function of cubic polynomial exponential sequences from any two adjacent second subgroups is less than or equal to $2 \sqrt{N}$, and Ω_{H} is an integer greater than or equal to 1.

9. The method according to claim 5 or 6, wherein
each first subgroup comprises one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$; and
each second subgroup comprises one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$, wherein
*N* is a sequence length of the cubic polynomial exponential sequence, and *N* is a prime number.

10. The method according to claim 9, wherein
the first cubic metric group comprises *P* first subgroups, each of the *P* first subgroups corresponds to Θ cubic term coefficients, Θ cubic term coefficients corresponding to a *P*^{th} first subgroup are arranged in ascending order of cubic metrics of cubic polynomial exponential sequences, Θ cubic term coefficients corresponding to each of the *P*^{th} first subgroup to a 1^{st} first subgroup are alternately arranged in ascending or descending order of cubic metrics of cubic polynomial exponential sequences, a maximum value of a cross-ambiguity function of cubic polynomial exponential sequences in each first subgroup is less than or equal to *δ*, a maximum value of a cross-ambiguity function of cubic polynomial exponential sequences from any two adjacent first subgroups is less than or equal to $2 \sqrt{N}$, and *P* is an integer greater than or equal to 1; and
the second cubic metric group comprises *Q* second subgroups, each of the *Q* second subgroups corresponds to Φ cubic term coefficients, Φ cubic term coefficients corresponding to a 1^{st} second subgroup are arranged in ascending order of cubic metrics of cubic polynomial exponential sequences, Φ cubic term coefficients corresponding to each of the 1^{st} first subgroup to a *Q*^{th} second subgroup are alternately arranged in ascending or descending order of cubic metrics of cubic polynomial exponential sequences, a maximum value of a cross-ambiguity function of cubic polynomial exponential sequences in each second subgroup is less than or equal to *δ*, a maximum value of a cross-ambiguity function of cubic polynomial exponential sequences from any two adjacent second subgroups is less than or equal to $2 \sqrt{N}$, *Q* is an integer greater than or equal to 1, and *δ* is the first threshold.

11. The method according to claim 5 or 6, wherein
all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$; and
all cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

12. The method according to claim 11, wherein
the first subgroup corresponds to Ω_{L} cubic term coefficients, the Ω_{L} cubic term coefficients are arranged in ascending order of cubic metrics of cubic polynomial exponential sequences, a maximum value of a cross-ambiguity function of cubic polynomial exponential sequences from any two adjacent first subgroups is less than or equal to $2 \sqrt{N}$, and Ω_{L} is an integer greater than 1; and
the second subgroup corresponds to Ω_{H} cubic term coefficients, the Ω_{H} cubic term coefficients are arranged in ascending order of cubic metrics of cubic polynomial exponential sequences, a maximum value of a cross-ambiguity function of cubic polynomial exponential sequences from any two adjacent second subgroups is less than or equal to $2 \sqrt{N}$, and Ω_{H} is an integer greater than 1.

13. The method according to any one of claims 1 to 12, wherein a sequence capacity of the cubic polynomial exponential sequence is positively correlated with a cube of the sequence length *N* of the cubic polynomial exponential sequence, the sequence capacity of the cubic polynomial exponential sequence is $\left(N-1\right) ⋅ \left⌊N/{Δ}_{T}\right⌋ ⋅ \left⌊N/{Δ}_{F}\right⌋$*, N* is a prime number, Δ_{T} is a maximum round-trip time, Δ_{F} is a maximum Doppler frequency shift, and └ ┘ represents rounding down.

14. The method according to any one of claims 1 to 13, wherein for ∀*τ* ∈ [0, Δ_{T} - 1], ∀*ν* ∈ [0, Δ_{F} - 1], a cubic term coefficient of an ambiguity function of the cubic polynomial exponential sequence, a quadratic term coefficient of the ambiguity function of the cubic polynomial exponential sequence, and a linear term coefficient of the ambiguity function of the cubic polynomial exponential sequence are not all zero, *τ* is a round-trip time, *ν* is a Doppler frequency shift, Δ_{T} is a maximum round-trip time, and Δ_{F} is a maximum Doppler frequency shift.

15. The method according to any one of claims 1 to 14, wherein that a cubic term coefficient *a* of the cubic polynomial exponential sequence is associated with a quadratic term coefficient *b* of the cubic polynomial exponential sequence specifically comprises:
for the cubic term coefficient *a* of the cubic polynomial exponential sequence, if *a* E {1, 2, ... , *N* - 1}, the quadratic term coefficient *b* of the cubic polynomial exponential sequence is equal to 3*ak*Δ_{T}*,* and a linear term coefficient *c* of the cubic polynomial exponential sequence is equal to *l*Δ_{F}*,* wherein
$k ∈ \left\{0,1,…,\left⌊N/{Δ}_{T}\right⌋-1\right\} , l ∈ \left\{0,1,…,\left⌊N/{Δ}_{F}\right⌋-1\right\}$, Δ_{T} is a maximum round-trip time, and Δ_{F} is a maximum Doppler frequency shift.

16. The method according to any one of claims 1 to 15, wherein a radius of a cell in which a terminal device is located is 0 to *c*(Δ_{T} - 1)T*ₛ*/2*,* c represents the speed of light, *T*ₛ represents a symbol time interval, and Δ_{T} is a maximum round-trip time.

17. The method according to any one of claims 1 to 16, wherein a moving speed range of the terminal device is from - *c*(Δ_{F} - 1)Δ*f*/4*f*_{c} to *c*(Δ_{F} - 1)Δ*f*/4*f_{c}, c* represents the speed of light, *f*_{c} represents a carrier frequency, Δ*f* represents a subcarrier spacing, and Δ_{F} is a maximum Doppler frequency shift.

18. A communication method, comprising:
determining a first physical sequence number based on a first logical sequence number and a first mapping relationship, wherein the first mapping relationship indicates a correspondence between a physical sequence number and a logical sequence number of a cubic polynomial exponential sequence, a cubic term coefficient of a cubic polynomial exponential sequence corresponding to each physical sequence number is the same, a maximum value of a cross-ambiguity function of cubic polynomial exponential sequences corresponding to *M* consecutive physical sequence numbers is less than or equal to a first threshold, the logical sequence number indicates a position index of the physical sequence number, and *M* is greater than or equal to 1; and
receiving a first sequence, wherein the first sequence is determined based on the first physical sequence number.

19. The method according to claim 18, wherein when the cubic polynomial exponential sequence is mapped to a time domain resource, a discrete-time signal of the cubic polynomial exponential sequence is expressed as: ${s}_{λ , k , l} \left(n\right) = {e}^{- j 2 π \left({λn}^{3}+3λk{Δ}_{T}{n}^{2}+l{Δ}_{F}n\right) / N} ,$ wherein
*a = λ, b =* 3*λk*Δ_{T}*, c = l*Δ_{F}*, d* = 0*, λ* ∈ {1, 2, ... , *N* - 1}, $k ∈ \left\{0,1,…,\left⌊N/{Δ}_{T}\right⌋-1\right\} ,$, $l ∈ \left\{0,1,…,\left⌊N/{Δ}_{F}\right⌋-1\right\}$, Δ_{T} represents a maximum round-trip time, Δ_{F} represents a maximum Doppler frequency shift, *λ* is a parameter associated with a cell, and *k* and *l* are parameters associated with a terminal device in the cell.

20. The method according to claim 18 or 19, wherein when the cubic polynomial exponential sequence is mapped to a frequency domain resource, a discrete-time signal of the cubic polynomial exponential sequence is expressed as: ${s}_{λ , k , l} \left(n\right) = \frac{1}{\sqrt{N}} {\sum }_{m = 0}^{M - 1} {e}^{- j 2 π \left({λn}^{3}+3λk{Δ}_{F}{n}^{2}+l{Δ}_{T}n\right) / N} ⋅ {e}^{j 2 πmn / N} ,$ wherein
*a = λ, b =* 3λ*k*Δ_{F}*, c = l*Δ_{T}*, d =* 0, *λ* ∈ {1,2, ... , *N -* 1}*,* $k ∈ \left\{0,1,…,\left⌊N/{Δ}_{F}\right⌋-1\right\}$, $l ∈ \left\{0,1,…,\left⌊N/{Δ}_{T}\right⌋-1\right\}$, Δ_{T} represents a maximum round-trip time, Δ_{F} represents a maximum Doppler frequency shift, *λ* is a parameter associated with a cell, and *k* and *l* are parameters associated with a terminal device in the cell.

21. The method according to any one of claims 18 to 20, wherein the first threshold *δ* satisfies: $\sqrt{N} \leq δ \leq 2 \sqrt{N} ,$ wherein
*N* is a sequence length of the cubic polynomial exponential sequence, and *N* is a prime number.

22. The method according to any one of claims 18 to 21, wherein
the cubic polynomial exponential sequence belongs to a first cubic metric group or a second cubic metric group, a cubic metric of each cubic polynomial exponential sequence in the first cubic metric group is less than or equal to a first cubic metric, and a cubic metric of each cubic polynomial exponential sequence in the second cubic metric group is greater than the first cubic metric;
the first cubic metric group comprises one or more first subgroups, the plurality of first subgroups are determined based on a maximum value of a cross-ambiguity function of cubic polynomial exponential sequences in the first cubic metric group, the plurality of first subgroups are arranged in ascending order of cubic metrics of corresponding cubic polynomial exponential sequences, each first subgroup corresponds to one or more cubic term coefficients, and a plurality of cubic term coefficients corresponding to a last first subgroup through a 1^{st} first subgroup are alternately arranged in ascending or descending order of the cubic metrics of the cubic polynomial exponential sequences; and
the second cubic metric group comprises one or more second subgroups, the plurality of second subgroups are determined based on a maximum value of a cross-ambiguity function of cubic polynomial exponential sequences in the second cubic metric group, the plurality of second subgroups are arranged in ascending order of cubic metrics of corresponding cubic polynomial exponential sequences, each second subgroup corresponds to one or more cubic term coefficients, and a plurality of cubic term coefficients corresponding to a 1^{st} second subgroup through a last second subgroup are alternately arranged in ascending or descending order of the cubic metrics of the cubic polynomial exponential sequences.

23. The method according to claim 22, wherein
one or more cubic term coefficients in the last first subgroup are arranged in ascending order of cubic metrics of corresponding cubic polynomial exponential sequences; and
one or more cubic term coefficients in the 1^{st} second subgroup are arranged in ascending order of cubic metrics of corresponding cubic polynomial exponential sequences.

24. The method according to claim 22 or 23, wherein
cubic term coefficients of cubic polynomial exponential sequences in each first subgroup are the same, a maximum value of a cross-ambiguity function of cubic polynomial exponential sequences in any first subgroup is less than or equal to $\sqrt{N}$, and a maximum value of a cross-ambiguity function of cubic polynomial exponential sequences from two adjacent first subgroups is less than or equal to $2 \sqrt{N}$; and
cubic term coefficients of cubic polynomial exponential sequences in each second subgroup are the same, a maximum value of a cross-ambiguity function of cubic polynomial exponential sequences in any second subgroup is less than or equal to $\sqrt{N}$, and a maximum value of a cross-ambiguity function of cubic polynomial exponential sequences from two adjacent second subgroups is less than or equal to $2 \sqrt{N}$, wherein
*N* is a sequence length of the cubic polynomial exponential sequence, and *N* is a prime number.

25. The method according to claim 22 or 23, wherein
each first subgroup comprises one or more cubic polynomial exponential sequences with different cubic term coefficients, a maximum value of a cross-ambiguity function of cubic polynomial exponential sequences in any first subgroup is less than or equal to the first threshold, and a maximum value of a cross-ambiguity function of cubic polynomial exponential sequences from two adjacent first subgroups is less than or equal to $2 \sqrt{N}$; and
each second subgroup comprises one or more cubic polynomial exponential sequences with different cubic term coefficients, a maximum value of a cross-ambiguity function of cubic polynomial exponential sequences in any second subgroup is less than or equal to the first threshold, and a maximum value of a cross-ambiguity function of cubic polynomial exponential sequences from two adjacent second subgroups is less than or equal to $2 \sqrt{N}$, wherein
*N* is a sequence length of the cubic polynomial exponential sequence, and *N* is a prime number.

26. The method according to claim 22 or 23, wherein
all cubic polynomial exponential sequences in the first cubic metric group belong to one first subgroup, and a maximum value of a cross-ambiguity function of the cubic polynomial exponential sequences in the first subgroup is less than or equal to $2 \sqrt{N}$; and
all cubic polynomial exponential sequences in the second cubic metric group belong to one second subgroup, and a maximum value of a cross-ambiguity function of the cubic polynomial exponential sequences in the second subgroup is less than or equal to $2 \sqrt{N}$.

27. A communication method, comprising:
classifying, based on a first cubic metric, a cubic polynomial exponential sequence into a first cubic metric group or a second cubic metric group, wherein a cubic metric of a cubic polynomial exponential sequence in the first cubic metric group is less than or equal to the first cubic metric, and a cubic metric of a cubic polynomial exponential sequence in the second cubic metric group is greater than the first cubic metric;
based on a maximum value of a cross-ambiguity function of cubic polynomial exponential sequences, classifying the cubic polynomial exponential sequence in the first cubic metric group into one or more first subgroups, and classifying the cubic polynomial exponential sequence in the second cubic metric group into one or more second subgroups; and
alternately arranging, in ascending or descending order of cubic metrics of cubic polynomial exponential sequences, a plurality of cubic term coefficients corresponding to a last first subgroup through a 1^{st} first subgroup, and alternately arranging, in ascending or descending order of cubic metrics of cubic polynomial exponential sequences, a plurality of cubic term coefficients corresponding to a 1^{st} second subgroup through a last second subgroup, wherein
the plurality of first subgroups or the plurality of second subgroups are arranged in ascending order of cubic metrics of corresponding cubic polynomial exponential sequences, each first subgroup or each second subgroup corresponds to one or more cubic term coefficients, and a maximum value of a cross-ambiguity function of any two cubic polynomial exponential sequences in each first subgroup or each second subgroup is less than or equal to a first threshold; and
one or more cubic term coefficients in the last first subgroup are arranged in ascending order of cubic metrics of corresponding cubic polynomial exponential sequences, and one or more cubic term coefficients in the 1^{st} second subgroup are arranged in ascending order of cubic metrics of corresponding cubic polynomial exponential sequences.

28. A communication apparatus, comprising a module or a unit configured to perform the method according to any one of claims 1 to 17, or a module or a unit configured to perform the method according to any one of claims 18 to 26, or a module or a unit configured to perform the method according to claim 27.

29. A communication apparatus, wherein the communication apparatus comprises a processor, the processor is coupled to a memory, the memory stores instructions, and when the instructions are run by the processor, the communication apparatus is caused to perform the method according to any one of claims 1 to 27.

30. A computer-readable storage medium, wherein the computer-readable storage medium is configured to store a computer program, and when the computer program is run on a computer, the computer is caused to perform the method according to any one of claims 1 to 27.

31. A computer program product, wherein when the computer program product runs on a computer, the computer is caused to perform the method according to any one of claims 1 to 27.
